# EUROPEAN PATENT SPECIFICATION

(11) **EP 2 787 035 B1**
(45) Date of publication and mention of the grant of the patent: **02.01.2019**
(21) Application number: 12853705.7
(22) Date of filing: 29.11.2012
(51) Int. Cl.: C08L 27/06, B29C 47/00, C08K 3/00, C08K 3/04, C08K 5/10, C08K 5/521, B29K 27/06, B29L 9/00

(54) **THERMALLY EXPANDABLE MULTILAYER PACKING FOR BUILDING MATERIAL**
THERMISCH EXPANDIERBARE MEHRSCHICHTIGE VERPACKUNG FÜR BAUMATERIAL
EMBALLAGE THERMO-EXPANSIBLE À COUCHES MULTIPLES POUR DES MATÉRIAUX DE CONSTRUCTION

(30) Priority: 29.11.2011 JP 2011259719; 02.10.2012 JP 2012220845
(43) Date of publication of application: 08.10.2014
(73) Proprietor: Sekisui Chemical Co., Ltd., Osaka 530-8565 (JP); Tokuyama Sekisui Co., Ltd., Osaka-shi Osaka 530-8565 (JP); Sekisui Chemical Hokkaido Co., Ltd., Iwamizawa-shi Hokkaido 068-8668 (JP)
(72) Inventor: YANO, Hideaki, Saitama 349-0198 (JP); OTSUKA, Kenji, Saitama 349-0198 (JP); TONO, Masaki, Saitama 349-0198 (JP); NAKAZATO, Katsuhiro, Yamaguchi 746-0006 (JP); YAMASUGI, Ryota, Yamaguchi 746-0006 (JP); MATSUMURA, Kenichi, Yamaguchi 746-0006 (JP)
(74) Representative: Ter Meer Steinmeister & Partner
(86) International application number: PCT/JP2012/007688
(87) International publication number: WO 2013/080562

(56) References cited:
- EP-A1- 2 378 048
- WO-A1-99/60074
- CN-A- 1 880 062
- JP-A- H11 216 765
- JP-A- 2000 006 289
- JP-A- 2001 105 467
- JP-A- 2008 180 068
- JP-A- 2012 202 190

## Description

### TECHNICAL FIELD

The present invention relates to a thermally expandable multilayer packing for a building material.

### BACKGROUND ART

A molding comprising a thermally expandable resin composition, when it is subjected to a thermal environment such as a fire, expands to form a fireproof expansion residue. The use of the expansion residue can prevent spread of fire or smoke, which facilitates a wide use of a molding comprising a thermally expandable resin composition as a building material.

In fact, a piping material obtained by extruding a polyvinyl chloride resin composition comprising a thermally expandable graphite is proposed as a molding comprising a thermally expandable resin composition.

As one application of a polyvinyl chloride, a chlorinated polyvinyl chloride resin composition is proposed. The total amount of a phosphorus compound and a neutralized thermally expandable graphite relative to 100 parts by weight of a chlorinated polyvinyl chloride whose chlorine content is 60 to 71% by weight ranges from 20 to 200 parts by weight, an inorganic filler is 30 to 500 parts by weight, and the ratio of the weight of a phosphorus compound to the weight of a neutralized thermally expandable graphite ranges from 9:1 to 1:9 (Patent Documents 1 and 2).

These prior art documents disclose that said chlorinated polyvinyl chloride resin composition can be used in extrusion.

Also, as another application of a polyvinyl chloride, a piping material obtained by extruding a polyvinyl chloride resin composition comprising a thermally expandable graphite is proposed.

As one specific conventional technology, a multilayered fireproof piping material comprising a fireproof expansion layer formed of a resin composition comprising 1 to 15 parts by weight of a thermally expandable graphite relative to 100 parts by weight of a polyvinyl chloride and a coating layer formed of a polyvinyl chloride resin composition comprising no thermally expandable component is proposed (Patent Documents 3 and 4).

These conventional technologies disclose that a three-layer structure, comprising a fireproof expansion layer, a coating layer inside the fireproof expansion layer and a coating layer outside the fireproof expansion layer, can be obtained by three-layer co-extrusion.

Conventionally, it is difficult to extrude a thermally expandable resin composition that starts expansion when heated.

The molding in a multilayered structure disclosed in the above conventional technologies is cylindrical. When the cross-sectional shape of a molding is symmetrical based on the central axis in an extrusion direction, extrusion can be performed due to uniform thermal distribution through the molding.

However, the above conventional technologies fail to verify whether it is possible to obtain a molding whose non-cylindrical shape can be defined as a product obtained by extruding a thermally expandable resin composition.

### PRIOR ART DOCUMENT

### PATENT DOCUMENT

Patent Document 1: Japanese Unexamined Patent Application Publication No. 9-227747
Patent Document 2: Japanese Unexamined Patent Application Publication No. 10-95887
Patent Document 3: Japanese Unexamined Patent Application Publication No. 2008-180367
Patent Document 4: Japanese Unexamined Patent Application Publication No. 2008-180068

### SUMMARY OF THE INVENTION

### PROBLEMS TO BE SOLVED BY THE INVENTION

Inventors of the present invention carried out research on extrusion of a polyvinyl chloride resin composition comprising a thermally expandable graphite to find a problem: a molding deteriorates in surface appearance as a cross-sectional shape of the molding obtained by extrusion differs from a symmetrical shape having a central axis.

The problem of the deterioration of said molding in surface appearance becomes more significant when two or more different resin compositions, at least either of which comprises a thermally expandable graphite, are simultaneously extruded to form a multilayered molding.

Meanwhile, properties that are different from fire resistance such as high water tightness, high air tightness and high strength are required to be provided with a molding comprising a thermally expandable resin composition amid recent development of fireproof technologies.

The objective of the present invention is to provide a thermally expandable multilayer packing for a building material excellent in surface appearance and fire resistance capable of freely controlling functions such as water tightness, air tightness and mechanical strength.

### MEANS FOR SOLVING THE PROBLEMS

Inventors of the present invention have carried out extended research to solve the above problems to find out that a thermally expandable multilayer packing for a building material comprising a protruding portion and a body portion in a cross-sectional shape based on a plane perpendicular to the longitudinal direction, which is obtained by forming a thermally expandable resin composition layer consisting of a chlorinated polyvinyl chloride-comprising thermally expandable resin composition and/or an EPDM-comprising thermally expandable resin composition and a thermoplastic resin composition layer by simultaneous co-extrusion, meets the objective of the present invention, and inventors of the present invention accomplished the present invention.

Specifically, the present invention provides [1] a thermally expandable multilayer packing for a building material, the thermally expandable multilayer packing for a building material consists of a protruding portion and a body portion in a cross-sectional shape based on a plane perpendicular to the longitudinal direction, wherein
said thermally expandable multilayer packing for a building material consists of two or more resin composition layers comprising at least a thermally expandable resin composition layer and a thermoplastic resin composition layer,
a thermally expandable resin composition forming said thermally expandable resin composition layer comprises 100 parts by weight of a resin component, 3 to 300 parts by weight of a thermally expandable graphite, 3 to 200 parts by weight of an inorganic filler and 20 to 200 parts by weight of a plasticizer,
a resin component contained in said thermally expandable resin composition comprises a chlorinated polyvinyl chloride resin whose chlorine content is 60 to 72% by weight and/or an EPDM, and
said thermally expandable resin composition layer and said thermoplastic resin composition layer are formed of said thermally expandable resin composition and said thermoplastic resin composition by simultaneous co-extrusion, respectively.

Also, one of the present inventions provides [2] the thermally expandable multilayer packing for a building material according to the above item [1], wherein
the boundary between a thermally expandable resin composition layer and a thermoplastic resin composition layer in a cross section of said thermally expandable multilayer packing for a building material based on a plane perpendicular to a direction of said simultaneous co-extrusion comprises a curve and/or a broken line.

Also, one of the present inventions provides [3] the thermally expandable multilayer packing for a building material according to the above item [1] or [2], wherein
part or all of a body portion contained in said thermally expandable multilayer packing for a building material comprises a thermally expandable resin composition layer.

Also, one of the present inventions provides [4] the thermally expandable multilayer packing for a building material according to any of the above items [1] to [3], wherein
said thermoplastic resin composition layer comprises at least one selected from the group consisting of a polyvinyl chloride resin composition, a chlorinated polyvinyl chloride resin composition and an EPDM resin composition.

Also, one of the present invention provides [5] the thermally expandable multilayer packing for a building material according to any of the above items [1] to [4], wherein
said thermally expandable resin composition comprises at least one selected from the group consisting of a heat stabilizer, a lubricant, a processing auxiliary, a pyrolytic foaming agent, an antioxidant, an antistatic agent, a pigment, a crosslinking agent and a crosslinking promoter.

Also, one of the present invention provides [6] the thermally expandable multilayer packing for a building material according to any of the above items [1] to [5], wherein
said thermally expandable multilayer packing for a building material is any of a glazing channel, a tight member, a gasket or a glazing bead.

### EFFECT OF THE INVENTION

The present invention can provide a thermally expandable multilayer packing for a building material excellent in surface appearance comprising two or more resin composition layers whose composition is different by simultaneous co-extrusion.

The thermally expandable multilayer packing for a building material of the present invention comprises a thermally expandable resin composition layer. Accordingly, in cases where the thermally expandable multilayer packing for a building material of the present invention is subjected to a thermal environment such as a fire, the thermally expandable resin composition layer expands to form an expansion residue.

Said expansion residue is fireproof and can block a gap of a building material on which said thermally expandable multilayer packing for a building material is installed. Because the expansion residue can prevent spread of flame or smoke caused by a fire, etc., through a gap of a building material, the thermally expandable multilayer packing for a building material of the present invention is excellent in fire resistance.

Also, the thermally expandable multilayer packing for a building material of the present invention comprises a thermoplastic resin composition layer. By selecting a thermoplastic resin composition layer according to a use of said thermally expandable multilayer packing for a building material, various functions can be provided with said thermally expandable multilayer packing for a building material.

Also, for instance, by introducing a hydrophobic and flexible synthetic resin for forming said thermoplastic resin composition layer, high water tightness can be provided with said thermally expandable multilayer packing for a building material.

Also, for instance, by introducing a synthetic resin excellent in a gap blocking property for forming said thermoplastic resin composition layer, high air tightness can be provided with said thermally expandable multilayer packing for a building material.

Also, for instance, by introducing a high-rigidity synthetic resin for forming said thermoplastic resin composition layer, a high strength property can be provided with said thermally expandable multilayer packing for a building material.

In this manner, the present invention can provide a thermally expandable multilayer packing for a building material capable of freely controlling functions such as water tightness, air tightness and mechanical strength as well as fire resistance.

In addition, in the thermally expandable multilayer packing for a building material of the present invention, the boundary between a thermally expandable resin composition layer and a thermoplastic resin composition layer in a cross section of said thermally expandable multilayer packing for a building material based on a plane perpendicular to a direction of said simultaneous co-extrusion comprises a curve and/or a broken line. Therefore, since the contact area with said thermally expandable resin composition layer and said thermoplastic resin composition layer is larger than the cases where the boundary between a thermally expandable resin composition layer and a thermoplastic resin composition layer in said cross section is linear, it is possible to reduce separation of said thermally expandable resin composition layer and said thermoplastic resin composition layer after forming.

### BRIEF DESCRIPTION OF THE DRAWINGS

Fig. 1 is a schematic cross-sectional view for illustrating a glazing channel according to Example 1;
Fig. 2 is a schematic fragmentary perspective view for illustrating a glazing channel according to Example 1;
Fig. 3 is a schematic fragmentary cross-sectional view for illustrating that a glazing channel according to Example 1 is held in a glass panel;
Fig. 4 is a schematic cross-sectional view for illustrating a glazing channel according to Example 2;
Fig. 5 is a schematic cross-sectional view for illustrating a glazing channel according to Example 3;
Fig. 6 is a schematic cross-sectional view for illustrating a glazing channel according to Example 4;
Fig. 7 is a schematic cross-sectional view for illustrating a glazing channel according to Example 5;
Fig. 8 is a schematic cross-sectional view for illustrating a glazing channel according to Example 6;
Fig. 9 is a schematic cross-sectional view for illustrating a glazing channel according to Example 7;
Fig. 10 is a schematic cross-sectional view for illustrating a glazing channel according to Example 8;
Fig. 11 is a schematic cross-sectional view for illustrating a glazing channel according to Example 9;
Fig. 12 is a schematic cross-sectional view for illustrating a glazing channel according to Example 10;
Fig. 13 is a schematic cross-sectional view for illustrating a glazing channel according to Example 11;
Fig. 14 is a schematic cross-sectional view for illustrating a tight member according to Example 12;
Fig. 15 is a schematic fragmentary perspective view for illustrating a tight member according to Example 12;
Fig. 16 is a schematic fragmentary cross-sectional view for illustrating the physical relationship between a tight member according to Example 12 and a door;
Fig. 17 is a schematic fragmentary cross-sectional view for illustrating the physical relationship between a tight member according to Example 12 and a door;
Fig. 18 is a schematic cross-sectional view for illustrating a tight member according to Example 13;
Fig. 19 is a schematic cross-sectional view for illustrating a tight member according to Example 14;
Fig. 20 is a schematic cross-sectional view for illustrating a tight member according to Example 15;
Fig. 21 is a schematic cross-sectional view for illustrating a tight member according to Example 16;
Fig. 22 is a schematic cross-sectional view for illustrating a tight member according to Example 17;
Fig. 23 is a schematic cross-sectional view for illustrating a tight member according to Example 18;
Fig. 24 is a schematic cross-sectional view for illustrating a tight member according to Example 19;
Fig. 25 is a schematic cross-sectional view for illustrating a tight member according to Example 20;
Fig. 26 is a schematic cross-sectional view for illustrating a tight member according to Example 21;
Fig. 27 is a schematic cross-sectional view for illustrating a tight member according to Example 22;
Fig. 28 is a schematic cross-sectional view for illustrating a tight member according to Example 23;
Fig. 29 is a schematic cross-sectional view for illustrating a tight member according to Example 24;
Fig. 30 is a schematic cross-sectional view for illustrating a tight member according to Example 25;
Fig. 31 is a schematic cross-sectional view for illustrating a tight member according to Example 26;
Fig. 32 is a schematic fragmentary cross-sectional view for illustrating the physical relationship between a tight member according to Example 26 and a door;
Fig. 33 is a schematic cross-sectional view for illustrating a tight member according to Example 27;
Fig. 34 is a schematic cross-sectional view for illustrating a tight member according to Example 28;
Fig. 35 is a schematic cross-sectional view for illustrating a tight member according to Example 29;
Fig. 36 is a schematic cross-sectional view for illustrating a tight member according to Example 30;
Fig. 37 is a schematic cross-sectional view for illustrating a tight member according to Example 31;
Fig. 38 is a schematic cross-sectional view for illustrating a tight member according to Example 32;
Fig. 39 is a schematic cross-sectional view for illustrating a gasket according to Example 33;
Fig. 40 is a schematic fragmentary perspective view for illustrating a gasket according to Example 33;
Fig. 41 is a schematic fragmentary cross-sectional view for illustrating the physical relationship between a gasket according to Example 33 and a wall;
Fig. 42 is a schematic cross-sectional view for illustrating a gasket according to Example 34;
Fig. 43 is a schematic cross-sectional view for illustrating a gasket according to Example 35;
Fig. 44 is a schematic cross-sectional view for illustrating a glazing bead according to Example 36;
Fig. 45 is a schematic fragmentary perspective view for illustrating a glazing bead according to Example 36;
Fig. 46 is a schematic cross-sectional view for illustrating a glazing bead according to Example 37;
Fig. 47 is a schematic cross-sectional view for illustrating the physical relationship among a glazing bead according to Example 36, a glazing bead according to Example 37 and glass;
Fig. 48 is a schematic cross-sectional view for illustrating a glazing bead according to Example 38;
Fig. 49 is a schematic cross-sectional view for illustrating a glazing bead according to Example 39;
Fig. 50 is a schematic cross-sectional view for illustrating a glazing bead according to Example 40;
Fig. 51 is a schematic cross-sectional view for illustrating a glazing bead according to Example 41;
Fig. 52 is a schematic cross-sectional view for illustrating a glazing channel according to Example 42;
Fig. 53 is a schematic cross-sectional view for illustrating a glazing channel according to Example 43;
Fig. 54 is a schematic cross-sectional view for illustrating a tight member according to Example 44; and
Fig. 55 is a schematic cross-sectional view for illustrating a gasket according to Example 45.

### EMBODIMENTS TO CARRY OUT THE INVENTION

Firstly, a thermally expandable resin composition used in the present invention will be described.

The expandable resin composition used in the present invention comprises 100 parts by weight of a resin component, 3 to 300 parts by weight of a thermally expandable graphite, 3 to 200 parts by weight of an inorganic filler and 20 to 200 parts by weight of a plasticizer.

The resin component contained in the expandable resin composition used in the present invention is a chlorinated polyvinyl chloride and/or an EPDM.

Said chlorinated polyvinyl chloride resin is a chloride of a polyvinyl chloride resin. The chlorine content of said chlorinated polyvinyl chloride resin is 60 to 72% by weight because heat resistance deteriorates in cases where the content is smaller and melt extrusion is harder in cases where the content is larger.

Said polyvinyl chloride resin is not particularly restricted, and a conventionally known optional polyvinyl chloride resin can be used.

Illustrative example of said polyvinyl chloride resin includes: a vinyl chloride homopolymer;
a copolymer of a vinyl chloride monomer and a monomer having an unsaturated bond capable of copolymerizing with said vinyl chloride monomer; and
a graft copolymer obtained by graft-copolymerizing a vinyl chloride to a polymer other than a vinyl chloride monomer or a copolymer other than a vinyl chloride monomer.

One or two or more types of said polyvinyl chloride resins can be used.

A monomer having an unsaturated bond capable of copolymerizing with said vinyl chloride monomer is not particularly restricted if it can copolymerize with a vinyl chloride monomer, illustrative example thereof includes: an α-olefin such as ethylene, propylene and butylene;
a vinyl ester such as vinyl acetate and vinyl propionate;
a vinyl ether such as butyl vinyl ether and cetyl vinyl ether;
an acrylic ester such as methyl acrylate, ethyl acrylate and butyl acrylate;
a methacrylate ester such as methyl methacrylate, ethyl methacrylate and butyl methacrylate;
an aromatic vinyl such as styrene and α-methylstyrene; and
an N-substituted maleimide such as N-phenylmaleimide and N-cyclohexylmaleimide, etc.

One or two or more types of monomers having an unsaturated bond capable of copolymerizing with said vinyl chloride monomer can be used.

A polymer other than said vinyl chloride monomer or a copolymer other than a vinyl chloride monomer is not particularly restricted if it graft-polymerizes or graft-copolymerize a vinyl chloride, illustrative example thereof includes an ethylene-vinyl acetate copolymer, an ethylene-vinyl acetate-carbon monoxide copolymer, an ethylene-ethyl acrylate copolymer, an ethylene-butyl acrylate-carbon monoxide copolymer, an ethylene-methyl methacrylate copolymer, an ethylene-propylene copolymer, an acrylonitrile-butadiene copolymer, polyurethane, chlorinated polyethylene and chlorinated polypropylene, etc.

One or two or more kinds of these can be used.

The average degree of polymerization of said polyvinyl chloride resin is not particularly restricted, but if it is smaller, mechanical properties of a molding deteriorate and if it is larger, melt extrusion is hard due to a higher melt viscosity. Therefore, the average degree of polymerization of said polyvinyl chloride resin is preferably 600 to 1500.

In addition, said EPDM is a ternary copolymer of an ethylene, propylene and a crosslinking diene monomer.

A crosslinking diene monomer used in said EPDM is not particularly restricted, illustrative example thereof includes: a cyclic diene such as 5-ethylidene-2-norbornene, 5-propylidene-5-norbornene, dicyclopentadiene, 5-vinyl-2-norbornene, 5-methylene-2-norbornene, 5-isopropylidene-2-norbornene and norbornadiene; and a chain unconjugated diene such as 1,4-hexadiene, 4-methyl-1,4-hexadiene, 5-methyl-1,4-hexadiene, 5-methyl-1,5-heptadiene, 6-methyl-1,5-heptadiene and 6-methyl-1 and 7-octadiene, etc.

Said EPDM preferably has a Mooney viscosity (ML₁₊₄₁ 25oC) of 4 to 30.

A Mooney viscosity of 4 or more provides excellent flexibility. Also, a Mooney viscosity of 30 or less provides an EPDM that can prevent the same from becoming too hard.

Incidentally, the above Mooney viscosity means an EPDM viscosity measured by Mooney viscometer.

Said EPDM preferably has a crosslinking diene monomer content of 2.0% by weight to 5.0% by weight.

A crosslinking diene monomer content of 2.0% by weight or more provides excellent flexibility due to a promoting crosslinking reaction among molecules, and a crosslinking diene monomer content of 5.0% by weight or less provides excellent weather resistance.

Said thermally expandable graphite is a conventionally known substance, or a graphite intercalation compound obtained by treating a powder such as natural squamous graphite, pyrolytic graphite and kish graphite with inorganic acid such as concentrated sulfuric acid, nitric acid and selenic acid and strong oxidizer such as concentrated nitric acid, perchloric acid, perchloric acid salt, permanganate, bichromate and hydrogen peroxide. A thermally expandable graphite generated is a crystalline compound having a constant carbon layer structure.

A thermally expandable graphite used in the present invention can be obtained by neutralizing a thermally expandable graphite obtained by acid treatment with ammonia, aliphatic lower amine, an alkaline metal compound, an alkaline earth metal compound, etc.

Illustrative example of said aliphatic lower amine includes monomethylamine, dimethylamine, trimethylamine, ethyl amine, propyl amine and butyl amine.

Illustrative example of said alkaline metal compound and said alkaline earth metal compound includes: a hydroxide such as potassium, sodium, calcium, barium and magnesium; and oxide, carbonate, sulfate and organic salt.

Illustrative example of the thermally expandable graphite includes "CA-60S" from Nippon Kasei Chemical Company Limited.

If the grain size of said thermally expandable graphite is too small, graphite dilatation becomes small, leading to declining fizziness. Also, If the grain size is too large, the dilatation is advantageously high. However, when a grain is kneaded with a resin, dispersibility and forming properties deteriorate, thereby worsening mechanical properties of an extrusion molding obtained.

Therefore, the grain size of said thermally expandable graphite is preferably 20 to 200.

When the amount of said thermally expandable graphite to be added is smaller, fire resistance and fizziness can be reduced. Also, when the amount is larger, it is hard to extrude said thermally expandable graphite, thereby deteriorating the surface quality and mechanical properties of a molding obtained. Therefore the amount of said thermally expandable graphite to be added relative to 100 parts by weight of said chlorinated polyvinyl chloride resin is 3 to 300 parts by weight. The amount of said thermally expandable graphite to be added is preferably 10 to 200 parts by weight.

Said inorganic filler is not particularly restricted if it is an inorganic filler generally used in a producing polyvinyl chloride resin molding. Specifically illustrative example thereof includes silica, diatom earth, alumina, zinc oxide, titanium oxide, calcium oxide, magnesium oxide, iron oxide, tin oxide, antimony oxide, ferrite, calcium hydroxide, magnesium hydroxide, aluminum hydroxide, basic magnesium carbonate, calcium carbonate, magnesium carbonate, zinc carbonate, barium carbonate, dawsonite, hydrotalcite, calcium sulfate, barium sulfate, gypsum fiber, calcium silicate, talc, clay, mica, montmorillonite, bentonite, activated clay, meerschaum, imogolite, sericite, glass fiber, glass bead, silica balloon, aluminum nitride, boron nitride, silicon nitride, carbon black, graphite, carbon fiber, carbon balloon, charcoal powder, various kinds of metal powder, potassium titanate, magnesium sulfate, zirconia lead titanate, aluminum borate, molybdenum sulfide, silicon carbide, stainless fiber, zinc borate, various kinds of magnetic powder, slag fiber, fly ash and dewatered sludge, etc.

Particularly preferable is calcium carbonate and a water-comprising inorganic substance such as calcium hydroxide, magnesium hydroxide and aluminum hydroxide that dehydrates and advantageously absorbs heat when heated.

Also, antimony oxide is preferable due to its effective flame retardance.

One or two or more types of said inorganic fillers can be used.

When the amount of said inorganic filler to be added is smaller, fire resistance can deteriorate and when it is larger, it is hard to extrude said inorganic filler. Consequently, the surface quality of a molding obtained deteriorates, leading to
worsened mechanical properties. Accordingly, the amount of said inorganic filler to be added relative to 100 parts by weight of said chlorinated polyvinyl chloride resin is 3 to 200 parts by weight.

The amount of said inorganic filler to be added is preferably 10 to 150 parts by weight.

Said plasticizer is not particularly restricted if it is a plasticizer generally used in producing a polyvinyl chloride resin molding. Specifically illustrative example thereof includes: a phthalate ester plasticizer such as di-2-ethylhexylphthalate (DOP), dibutyl phthalate (DBP), diheptyl phthalate (DHP) and diisodecyl phthalate (DIDP);
a fatty ester plasticizer such as di-2-ethylhexyl adipate (DOA), diisobutyl adipate (DIBA) and dibutyl adipate (DBA);
an epoxidized ester plasticizer such as epoxidized soybean oil;
a polyester plasticizer such as adipate and polyester adipate;
a trimellitate plasticizer such as tri-2-ethyhexyl trimellitate (TOTM) and triisononyl trimellitate (TINTM);
a phosphate ester plasticizer such as trimethyl phosphate (TMP) and triethyl phosphate (TEP); and
a process oil such as mineral oil.

One or two or more types of said plasticizers can be used.

When the amount of said plasticizer to be added is smaller, said plasticizer can deteriorate its extruding properties, and when it is larger, a molding obtained can become too soft. Accordingly, the amount of said plasticizer to be added relative to 100 parts by weight of said chlorinated polyvinyl chloride resin is 20 to 200 parts by weight.

As stated above, the chlorinated polyvinyl chloride-comprising thermally expandable resin composition used in the present invention comprises a chlorinated polyvinyl chloride resin, a thermally expandable graphite, an inorganic filler and a plasticizer.

If said chlorinated polyvinyl chloride-comprising thermally expandable resin composition comprises a phosphorus compound other than a phosphate ester plasticizer, its extruding properties deteriorate. Therefore, a phosphorus compound other than a phosphate ester plasticizer is not contained. Incidentally, the above-mentioned phosphate ester plasticizer can be contained.

Illustrative example of the phosphorus compound that inhibits extruding properties includes:
red phosphorous;
a various kinds of phosphate ester such as triphenyl phosphate, tricresyl phosphate, trixylenyl phosphate, cresyl diphenyl phosphate and xylenyl diphenyl phosphate;
a metal salt phosphate such as sodium phosphate, potassium phosphate and magnesium phosphate;
ammonium polyphosphate; and
a compound shown by the following chemical formula.

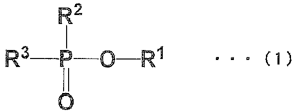

In the above chemical formula, R¹ and R³ represent hydrogen, a linear or branched alkyl group having 1 to 16 carbon atoms, or an aryl group having 6 to 16 carbon atoms.

R² represents a hydroxyl group, a linear or a branched alkyl group having 1 to 16 carbon atoms, a linear or a branched alkoxyl group having 1 to 16 carbon atoms, an aryl group having 6 to 16 carbon atoms, or an aryloxy group having 6 to 16 carbon atoms.

Illustrative example of the compound shown by said chemical formula includes methylphosphonic acid, methylphosphonic acid dimethyl, methylphosphonic acid diethyl, ethylphosphonic acid, propylphosphonic acid, buthylphosphonic acid, 2-methylpropylphosphonic acid, t-buthylphosphonic acid, 2,3-dimethyl-buthylphosphonic acid, octylphosphonic acid, phenylphosphonic acid, dioctylphenyl phosphonate, dimethyl phosphinic acid, methylethyl phosphinic acid, methylpropyl phosphinic acid, diethyl phosphinic acid, dioctyl phosphinic acid, phenyl phosphinic acid, diethylphenyl phosphinic acid, diphenyl phosphinic acid and bis(4-methoxyphenyl) phosphinic acid.

The ammonium polyphosphate is not particularly restricted, and illustrative example thereof includes ammonium polyphosphate and melamine-modified ammonium polyphosphate, etc.

In the present invention, these phosphorus compounds that inhibit extruding properties are not used.

Also, a generally used non-phosphorus compound such as a heat stabilizer, a lubricant, a processing auxiliary, a pyrolytic foaming agent, an antioxidant, an antistatic agent, a pigment, a crosslinking agent, a crosslinking promoter may be added to said thermally expandable resin composition used in the present invention as required if its physical properties are not damaged.

Illustrative example of said heat stabilizer includes: a lead heat stabilizer such as tribasic lead sulfate, tribasic lead sulfite, dibasic lead sulfate, lead stearate and dibasic lead stearate;
an organic tin heat stabilizer such as organic tin mercapto, organic tin malate, organic tin laurate and dibutyl tin malate; and
a metal soap heat stabilizer such as zinc stearate and calcium stearate.

One or two or more types of said heat stabilizers can be used.

Illustrative example of said lubricant includes: a wax such as polyethylene, paraffin and montanic acid;
various kinds of ester wax;
an organic acid such as stearic acid and ricinoleic acid;
an organic alcohol such as stearyl alcohol; and
an amide compound such as dimethyl bisamide.

One or more types of said lubricants can be used.

Illustrative example of said processing auxiliary includes chlorinated polyethylene, a methyl methacrylateethyl acrylate copolymer and high-molecular-weight polymethyl methacrylate.

Illustrative example of said pyrolytic foaming agent includes azodicarbonamide (ADCA), dinitroso penta methylene tetramine (DPT), p,p-oxybisbenzenesulfonylhydrazide (OBSH) and azobisisobutyronitrile (AIBN).

Illustrative example of said antioxidant includes a phenol compound.

Illustrative example of said antistatic agent includes an amino compound, etc.

Illustrative example of said pigment includes: an organic pigment such as an azo pigment, a phthalocyanine pigment, an indanthrene pigment and a dye lake pigment; and an inorganic pigment such as an oxide pigment, a molybdenum chromate pigment, a sulfide and a selenide pigment and a ferrocyanide pigment.

Illustrative example of said crosslinking agent includes sulfur, etc. Also, illustrative example of said crosslinking promoter includes tellurium diethyldithiocarbamate, N,N,N',N'-tetraethylthiuram disulfide and diethyldithiocarbamic acid benzyl ester, etc.

### Illustrative example of thermally expandable resin composition

Illustrative example of the thermally expandable resin composition used in the present invention includes:
(a) a resin composition consisting of a resin component, a thermally expandable graphite portion, an inorganic filler portion and a plasticizer; and
(b) a resin composition obtained by adding at least one selected from the group consisting of a heat stabilizer, a lubricant, a processing auxiliary, a pyrolytic foaming agent, an antioxidant, an antistatic agent, a pigment, a crosslinking agent and a crosslinking promoter to a resin composition of the above item (a).

A thermoplastic resin composition used in the present invention will be described.

The thermoplastic resin composition used in the present invention is not particularly restricted if it can be extruded, and illustrative example of the resin component contained in said thermoplastic resin composition includes a polyvinyl chloride resin (PVC), a chlorinated polyvinyl chloride resin (CPVC), polyethylene (PE), polypropylene (PP), an ethylene-propylene-diene copolymer (EPDM), chloroprene (CR), an acrylonitrile-butadiene-styrene copolymer (ABS), an acrylonitrile-styrene-acrylonitrile copolymer (ASA) and an acrylonitrile/ethylene-propylene-diene/styrene copolymer (AES), etc.

Illustrative example of said resin preferably includes a polyvinyl chloride resin (PVC), a chlorinated polyvinyl chloride resin (CPVC), polyethylene (PE), polypropylene (PP), an ethylene-propylene-crosslinking diene monomer copolymer (EPDM) and chloroprene (CR), etc.

Said polyvinyl chloride resin is not particularly restricted, and a conventionally known optional polyvinyl chloride resin can be used.

Illustrative example of said polyvinyl chloride resin includes: a vinyl chloride homopolymer;
a copolymer of a vinyl chloride monomer and a monomer having an unsaturated bond capable of copolymerizing with said vinyl chloride monomer; and
a graft copolymer, etc., obtained by graft-copolymerizing a vinyl chloride to a polymer other than a vinyl chloride monomer or a copolymer other than a vinyl chloride monomer.

One or two or more types of said polyvinyl chloride resins can be used.

The monomer having an unsaturated bond capable of copolymerizing with said vinyl chloride monomer is not particularly restricted if it can be copolymerized with a vinyl chloride monomer, and illustrative example thereof includes: an α-olefin such as ethylene, propylene and butylene;
a vinyl ester such as vinyl acetate and vinyl propionate;
a vinyl ether such as butyl vinyl ether and cetyl vinyl ether;
an acrylic ester such as methyl acrylate, ethyl acrylate and butyl acrylate;
a methacrylate ester such as methyl methacrylate, ethyl methacrylate and butyl methacrylate;
an aromatic vinyl such as styrene and α-methylstyrene; and
an N-substituted maleimide such as N-phenylmaleimide and N-cyclohexylmaleimide, etc.

One or two or more types of monomers having an unsaturated bond capable of copolymerizing with said vinyl chloride monomer can be used.

A polymer other than said vinyl chloride monomer or a copolymer other than said vinyl chloride monomer are not particularly restricted if they are a monomer that graft-polymerizes or graft-copolymerizes a vinyl chloride, and illustrative example thereof includes an ethylene-vinyl acetate copolymer, an ethylene-vinyl acetate-carbon monoxide copolymer, an ethylene-ethyl acrylate copolymer, an ethylene-butyl acrylate-carbon monoxide copolymer, an ethylene-methyl methacrylate copolymer, an ethylene-propylene copolymer, an acrylonitrile-butadiene copolymer, polyurethane, chlorinated polyethylene and chlorinated polypropylene, etc.

One or two or more types of these can be used.

The average degree of polymerization of said polyvinyl chloride resin is not particularly restricted. If it is smaller, mechanical properties of a molding deteriorate and if it is larger, melt viscosity becomes higher, resulting in harder melt extrusion. Accordingly, the average degree of polymerization of said polyvinyl chloride resin is preferably 600 to 1500.

Also, illustrative example of said chlorinated polyvinyl chloride resin (CPVC) includes the one, etc. obtained by chlorinating the above described polyvinyl chloride resin (PVC).

When the chlorine content of said chlorinated polyvinyl chloride resin is smaller, melt extrusion will becomes easier and when it is larger, heat resistance will be improved. Thus, it is preferably 60 to 72% by weight.

Said EPDM can include an EPDM used as a resin component of the above thermally expandable resin composition.

By adding the above inorganic filler and said plasticizer to a resin component contained in said thermoplastic resin composition, the thermoplastic resin composition used in the present invention can be obtained.

A heat stabilizer, a lubricant, a processing auxiliary, a pyrolytic foaming agent, an antioxidant, an antistatic agent and a pigment, etc., that are generally used in extrusion may be added to the thermoplastic resin composition used in the present invention as required if they have no damage to its physical properties.

Illustrative example of these is the same as shown above.

### Illustrative example of thermoplastic resin composition

Illustrative example of the thermoplastic resin composition used in the present invention includes:
(c) A resin composition comprising a resin component and an inorganic filler;
(d) A resin composition comprising a resin component, a plasticizer and an inorganic filler;
(e) A resin composition obtained by adding at least one selected from the group consisting of a heat stabilizer, a lubricant, a processing auxiliary, a pyrolytic foaming agent, an antioxidant, an antistatic agent, a pigment, a crosslinking agent and a crosslinking promoter to a resin composition of the above item (c); and
(f) A resin composition obtained by adding at least one selected from the group consisting of a heat stabilizer, a lubricant, a processing auxiliary, a pyrolytic foaming agent, an antioxidant, an antistatic agent, a pigment, a crosslinking agent and a crosslinking promoter to a resin composition of the above item (d).

Various functions can be provided with the thermally expandable multilayer packing for a building material of the present invention by selecting a resin component used in said thermoplastic resin composition.

In the thermoplastic resin composition used in the present invention, one or two or more types of vinyl chloride resins, chlorinated polyvinyl chloride resins and EPDMs, etc., are preferably selected as a resin component.

When one or two or more types of vinyl chloride resins, chlorinated polyvinyl chloride resins and EPDMs, etc., are selected as a resin component, a thermally expandable multilayer packing for a building material obtained is excellent in flexibility, air tightness, water tightness and strength.

A polyvinyl chloride resin composition used as said thermoplastic resin composition is conventionally known and ones specified in Japanese Industrial Standards (JIS) can be used.

Illustrative example of said polyvinyl chloride resin composition includes a soft polyvinyl chloride resin composition and a hard polyvinyl chloride resin composition.

Normally, a soft polyvinyl chloride resin composition includes a plasticizer, and a hard polyvinyl chloride resin composition includes no plasticizer. The above described plasticizer can be used as said plasticizer.

Also, a soft polyvinyl chloride compound (JIS K6723) specified in JIS can be used as said soft polyvinyl chloride resin composition.

A material for forming and extruding an unplasticised polyvinyl chloride (JIS K6740-1 to 2) specified in JIS can be used as said hard polyvinyl chloride resin composition.

A resin composition used in the present invention can preferably be used for extrusion. A long thermally expandable multilayer packing for a building material of a multilayered structure comprising at least a thermally expandable resin composition layer and a thermoplastic resin composition layer can be obtained by simultaneous co-extrusion by dissolving said resin composition at 130 to 170oC with an extruder such as a uniaxial extruder and a biaxial extruder according to a conventional method.

The thermally expandable multilayer packing for a building material of the present invention can be obtained by cutting said long thermally expandable multilayer packing for a building material into a proper length according to its use.

Illustrative example of the thermally expandable multilayer packing for a building material of the present invention includes a building material such as a window and a door. Illustrative example of said thermally expandable multilayer packing for a building material includes a glazing channel.

The present invention will be described in detail with reference to the following drawings and Examples. Incidentally, the present invention is not restricted to these Examples.

### Example 1

### Structure of glazing channel 100

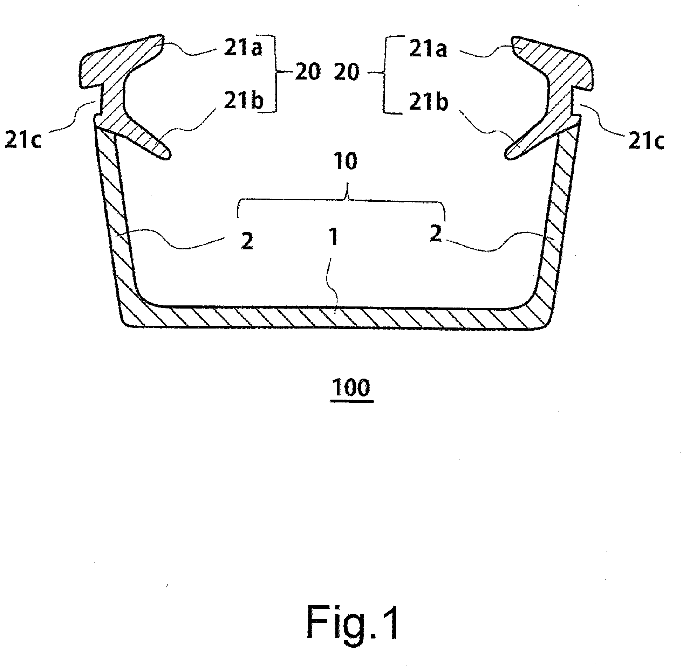

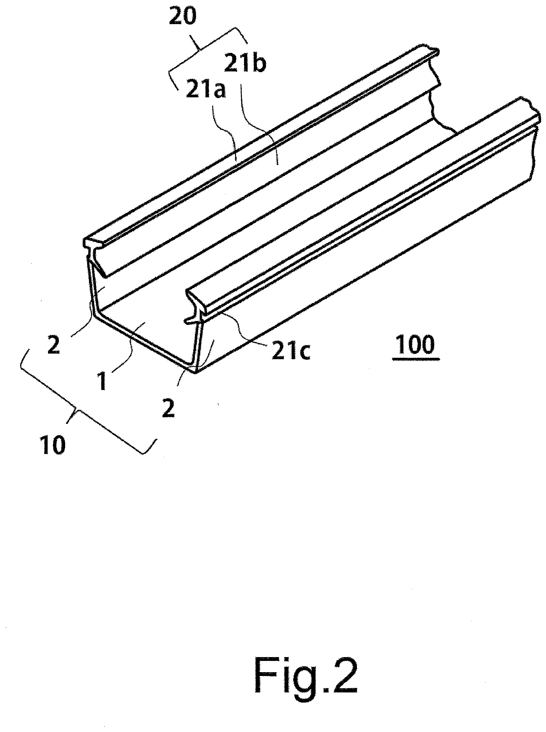

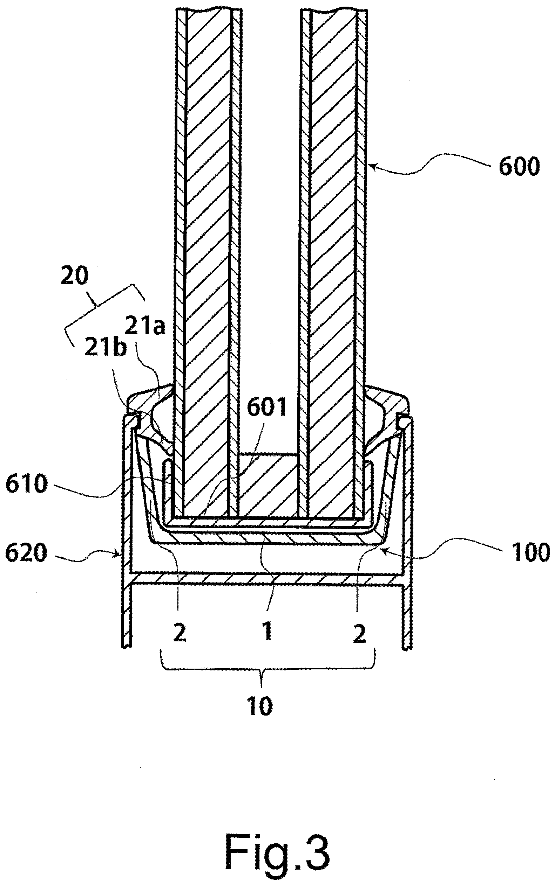

Fig. 1 is a schematic cross-sectional view for illustrating a glazing channel according to Example 1, and shows a cross-sectional shape based on a plane perpendicular to the longitudinal direction of the glazing channel according to Example 1. Fig. 2 is a schematic fragmentary perspective view for illustrating a glazing channel according to Example 1. Also, Fig. 3 is a schematic fragmentary cross-sectional view for illustrating a glazing channel according to Example 1 is held in a glass panel.

The glazing channel 100 according to Example 1 is held in a peripheral portion 610 of a glass panel 600 formed by laminating two or more glass plates. Said glazing channel 100 comprises a lower wall 1 facing an end face 601 of said glass panel 600 and a side wall 2 for covering the peripheral portion 610 of the glass panel in the longitudinal direction of the end face 601 of said glass panel provided on both sides of said lower wall 1. Said lower wall 1 and said side wall 2 form a body portion 10 of said glazing channel 100.

Said lower wall 1 and said side wall 2 contained in said glazing channel 100 are formed of a hard vinyl chloride resin composition.

An upper portion of said side wall 2 is provided with a protruding portion 20. Said protruding portion 20 comprises outer fins 21a,21a and inner fins 21b,21b, both protruding into the inside or the glass panel 600.

Also, said protruding portion 20 comprises groove portions 21c,21c outside or on the opposite side of the glass panel 600. By inserting an end portion of a sash 620 into said groove portions 21c,21c, said glazing channel 100 can be fixed to the sash 620.

Said protruding portion 20 is formed of a chlorinated polyvinyl chloride-comprising thermally expandable resin composition having a compounding ratio shown in Table 1. Said chlorinated polyvinyl chloride-comprising thermally expandable resin composition, which comprises a plasticizer, is flexible.

### Example for producing glazing channel 100

A chlorinated polyvinyl chloride-comprising thermally expandable resin composition consisting of a chlorinate vinyl chloride resin (Product from TOKUYAMA SEKISUI Co., Ltd., known as "HA-53K," degree of polymerization: 1000, chlorine content: 67.3% by weight, "CPVC-1"), a vinyl chloride resin (Product from TOKUYAMA SEKISUI Co., Ltd., known as "TS-1000R", degree of polymerization: 1000, "PVC"), a neutralized thermally expandable graphite (Product from Tosoh Corporation, known as "GREP-EG"), calcium carbonate (Product from SHIRAISHI CALCIUM KAISHA Ltd., known as "WHITEN BF300"), diisodecyl phthalate (Product from J-PLUS Co., Ltd., known as "DID P", "DIDP"), a Ca-Zn composite stabilizer (Product from MIZUSAWA INDUSTRIAL CHEMICALS Ltd., known as "NT-231"), calcium stearate (Product from SAKAI CHEMICAL INDUSTRY Co., Ltd., known as "SC-100"), chlorinated polyethylene (Product from IKAIKINKOH Co., Ltd., known as "135A") and polymethyl methacrylate (Product from MITSUBISHI RAYON Co., Ltd., known as "P-530A") having predetermined amounts shown in Table 1; and
a polyvinyl chloride resin composition consisting of PVC, calcium carbonate (Product from SHIRAISHI CALCIUM KAISHA Ltd., known as "WHITEN BF300"), diisodecyl phthalate ("DIDP"), a Ca-Zn composite stabilizer (Product from MIZUSAWA INDUSTRIAL CHEMICALS Ltd., known as "NT-231"), calcium stearate (Product from SAKAI CHEMICAL INDUSTRY Co., Ltd., known as "SC-100"), chlorinated polyethylene (Product from IKAIKINKOH Co., Ltd., known as "135A") and polymethyl methacrylate (Product from MITSUBISHI RAYON Co., Ltd., known as "P-530A") are fed to a uniaxial extruder (Product from IKEGAI KIHAN Co., Ltd., 65mm extruder) to simultaneously co-extrude a long profile molding of a cross-sectional shape shown in Fig.1 at a rate of 1m/hr by 150t load.

Table 1 shows the results: assessment of said extruder and a mold observed (×: when resin composition adhesion is observed, ○: no resin composition adhesion is observed.

A long profile molding obtained is cut in a direction perpendicular to the longitudinal direction of said long profile molding to obtain a glazing channel 100 according to Example 1. The glazing channel 100 is excellent in surface appearance.

### Action of glazing channel 100

The glazing channel 100 shown in Fig. 1 comprises a protruding portion 20 consisting of a thermally expandable resin composition layer and a body portion 10 consisting of a thermoplastic resin composition layer.

Said thermally expandable resin composition layer has a function of fire resistance because it expands in a thermal environment such as a fire.

Meanwhile, said thermoplastic resin composition layer has a function as a layer for protecting the glass panel 600 from external impact.

In this manner, the glazing channel 100 according to Example 1, having its two or more resin composition layers having different functions, can be provided with a plurality of completely different functions.

When a sash 620 having a glazing channel 100 and a glass panel 600 shown in Fig. 3 is subjected to a thermal environment such as a fire, a protruding portion 20 consisting of said thermally expandable resin composition layer expands. An expansion residue caused by the expansion blocks a gap between the glass panel 600 and the sash 620.

Due to the expansion residue, entry of flame and smoke, etc., caused by a fire passing through the gap between the glass panel 600 and the sash 620 into a non-fire area can be retarded.

As stated above, the sash 620 having the glazing channel 100 according to Example 1 is excellent in fire resistance.

### Example 2

### Structure of glazing channel 110

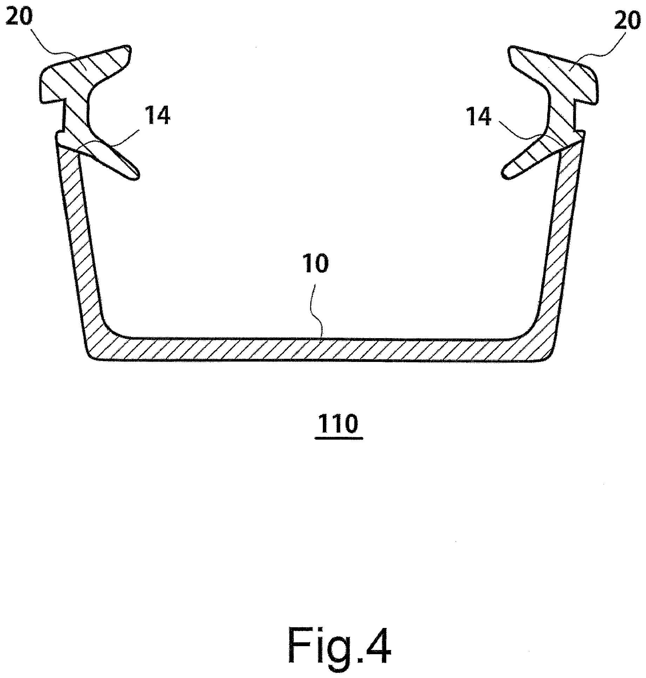

Fig. 4 is a schematic cross-sectional view for illustrating a glazing channel according to Example 2.

The glazing channel 100 according to Example 1 is characterized in that said protruding portion 20 is a thermally expandable resin composition layer and said body portion 10 is a polyvinyl chloride resin composition layer.

Meanwhile, a glazing channel 110 according to Example 2 is different in that said protruding portion 20 is a polyvinyl chloride resin composition layer and said body portion 10 is a thermally expandable resin composition layer.

The polyvinyl chloride resin composition used in the polyvinyl chloride resin composition layer of Example 2 consists of a soft polyvinyl chloride.

Specifically, the polyvinyl chloride resin composition used in the polyvinyl chloride resin composition layer of Example 2 comprises PVC, calcium carbonate (Product from SHIRAISHI CALCIUM KAISHA Ltd., known as "WHITEN BF300"), diisodecyl phthalate ("DIDP"), a Ca-Zn composite stabilizer (Product from MIZUSAWA INDUSTRIAL CHEMICALS Ltd., known as "NT-231"), calcium stearate (Product from SAKAI CHEMICAL INDUSTRY Co., Ltd., known as "SC-100"), chlorinated polyethylene (Product from IKAIKINKOH Co., Ltd., known as "135A") and polymethyl methacrylate (Product from MITSUBISHI RAYON Co., Ltd., known as "P-530A").

### Example for producing glazing channel 110

The glazing channel 110 according to Example 2 can be produced by simultaneous co-extrusion as in Example 1 by using a polyvinyl chloride resin to form said protruding portion 20 and using a chlorinated polyvinyl chloride-comprising thermally expandable resin composition used in forming said body portion 10 in Example 1. Table 1 shows specific compounding examples.

Said glazing channel 110 obtained by said simultaneous co-extrusion is excellent in surface appearance.

### Action of glazing channel 110

The glazing channel 110 shown in Fig. 4 comprises a protruding portion 20 consisting of a thermoplastic resin composition layer and a body portion 10 consisting of a thermally expandable resin composition layer.

Said thermally expandable resin composition layer has a function of fire resistance because it expands in a thermal environment such as a fire.
Meanwhile, said thermoplastic resin composition layer is formed of a soft polyvinyl chloride resin composition, thereby making the protruding portion 20 of said glazing channel 110 flexible to cling to said glass panel 600.

Accordingly, said protruding portion 20 has a function of water tightness because it can prevent entry of water condensed in the glass panel 600 into the inside of the sash.

In this manner, the glazing channel 110 according to Example 2, having its two or more resin composition layers having different functions, can be provided with a plurality of completely different functions.

Also, even if the glazing channel 110 according to Example 2 is used instead of a glazing channel 100 in Fig. 3, the body portion 10 of said glazing channel 110 consisting of a chlorinated polyvinyl chloride-comprising thermally expandable resin composition expands due to a thermal environment such as a fire.

An expansion residue caused by the expansion blocks a gap between the glass panel 600 and the sash 620.

### Example 3

### Structure of glazing channel 120

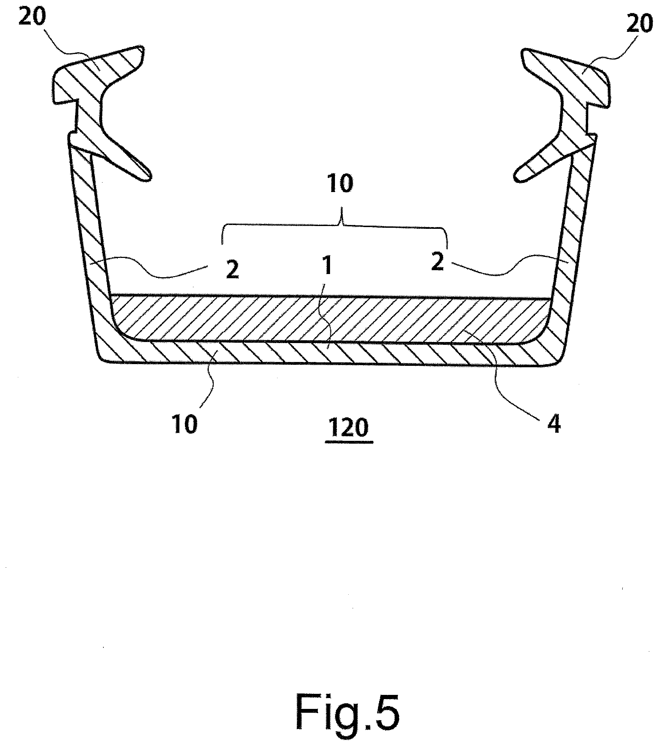

Fig. 5 is a schematic cross-sectional view for illustrating a glazing channel according to Example 3.

The glazing channel 100 according to Example 1 is characterized in that said protruding portion 20 is a thermally expandable resin composition layer and said body portion 10 is a polyvinyl chloride resin composition layer.

Meanwhile, a glazing channel 120 according to Example 3 is different in that said protruding portion 20 and said body portion 10 are a polyvinyl chloride resin composition layer and an inner lower wall 4 contacting said body portion 10 is a thermally expandable resin composition layer.

Said inner lower wall 4 is provided so that it contacts a lower wall 1 and a side wall 2.

The polyvinyl chloride resin composition used in the polyvinyl chloride resin composition layer of Example 3 is a soft polyvinyl chloride resin composition, and is the same as the one used in Example 2.

### Example for producing glazing channel 120

The glazing channel 120 according to Example 3 can be produced by simultaneous co-extrusion as in Example 1 by using a polyvinyl chloride resin to form said protruding portion 20 and said body portion 10 and using a chlorinated polyvinyl chloride-comprising thermally expandable resin composition used in forming said inner lower wall 4 in Example 1. Table 1 shows specific compounding examples.

Incidentally, said glazing channel 120 obtained by said simultaneous co-extrusion is excellent in surface appearance.

### Action of glazing channel 120

A glazing channel 120 shown in Fig. 5 comprises a protruding portion 20 and a body portion 10 consisting of a thermoplastic resin composition layer and an inner lower wall 4 consisting of ermally expandable resin composition layer has a function of fire resistance because it expands in a thermal environment such as a fire.

Meanwhile, since said thermoplastic resin composition layer is formed of a polyvinyl chloride resin composition comprising a soft polyvinyl chloride, a protruding portion 20 and a body portion 10 of said glazing channel 120 are flexible and they can readily cling to said glass panel 600.

Accordingly, said protruding portion 20 has a function of water tightness because it can prevent entry of water condensed in the glass panel 600 into the inside of the sash.

In this manner, the glazing channel 120 according to Example 3, having its two or more resin composition layers having different functions, can be provided with a plurality of completely different functions.

### Example 4

### Structure of glazing channel 130

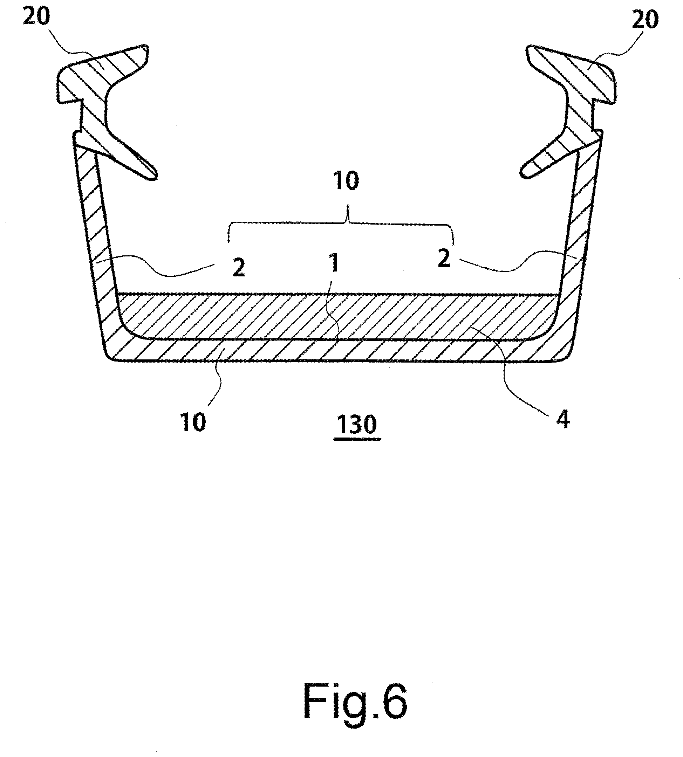

Fig. 6 is a schematic cross-sectional view for illustrating a glazing channel according to Example 4.

The glazing channel 100 according to Example 1 is characterized in that said protruding portion 20 is a thermally expandable resin composition layer and said body portion 10 is a polyvinyl chloride resin composition layer.

Meanwhile, a glazing channel 130 according to Example 4 is different in that said protruding portion 20 consists of a polyvinyl chloride resin composition layer consisting of a soft polyvinyl chloride, said body portion 10 consists of a polyvinyl chloride resin composition layer comprising a hard polyvinyl chloride, and an inner lower wall 4 contacting said body portion 10 comprises a thermally expandable resin composition layer.

Incidentally, said inner lower wall 4 is provided on a lower wall 1 and a side wall 2 so that it contacts the same as in Example 3.

### Example for producing glazing channel 130

A glazing channel 130 according to Example 4 can be produced by simultaneous co-extrusion as in Example 1 by using a polyvinyl chloride resin to form said protruding portion 20 and said body portion 10 and using a chlorinated polyvinyl chloride-comprising thermally expandable resin composition used in Example 1 to form said inner lower wall 4. Table 1 shows specific compounding examples.

Said glazing channel 130 obtained by said simultaneous co-extrusion is excellent in surface appearance.

### Action of glazing channel 130

A glazing channel 130 shown in Fig. 6 comprises a protruding portion 20 and a body portion 10 consisting of a thermoplastic resin composition layer and an inner lower wall 4 consisting of a thermally expandable resin composition layer.

Said thermally expandable resin composition layer has a function of fire resistance because it expands in a thermal environment such as a fire.

Meanwhile, since said thermoplastic resin composition layer of said protruding portion 20 is formed of a vinyl chloride resin composition comprising a soft polyvinyl chloride, the protruding portion 20 of said glazing channel 130 is flexible and it can readily cling to said glass panel 600.

Accordingly, said protruding portion 20 has a function of water tightness because it can prevent entry of water condensed in the glass panel 600 into the inside of the sash.

Also, since said thermoplastic resin composition layer of said body portion 10 is formed of a vinyl chloride resin composition comprising a hard polyvinyl chloride, said glass panel 600 can be held.

In this manner, the glazing channel 130 according to Example 4, having its two or more resin composition layers having different functions, can be provided with a plurality of completely different functions.

### Example 5

### Structure of glazing channel 140

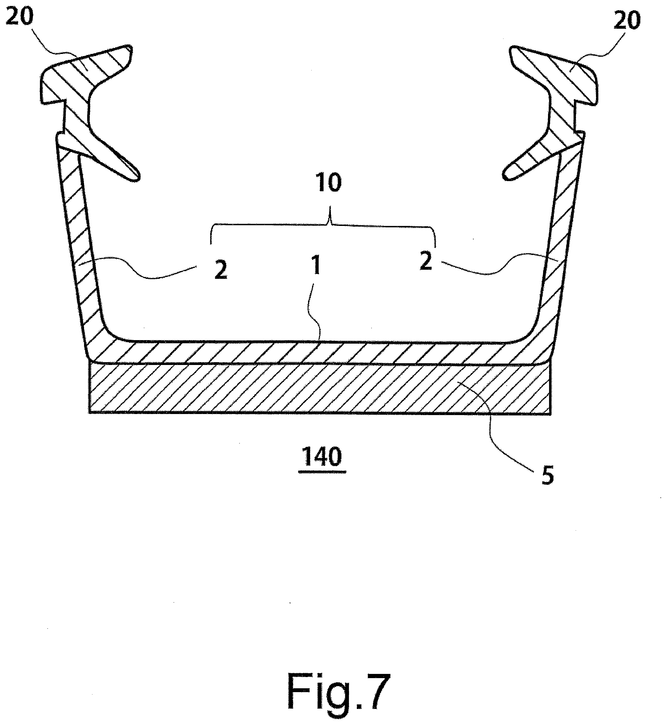

Fig. 7 is a schematic cross-sectional view for illustrating a glazing channel according to Example 5.

A glazing channel 140 according to Example 5 is an alternative embodiment of the above glazing channel 130 according to Example 4.

In the above glazing channel 130 according to Example 4, the inner lower wall 4 consisting of a thermally expandable resin composition layer is provided so that it contacts the inside of said body portion 10.

Meanwhile, the glazing channel 140 according to Example 5 is different in that an outer lower wall 5 consisting of a thermally expandable resin composition layer is provided so that it contacts the outside of said body portion 10.

Other physical characteristics are the same as in Example 4.

As in Example 4, said glazing channel 140 can be obtained by said simultaneous co-extrusion.

Said glazing channel 140 obtained by said simultaneous co-extrusion is excellent in surface appearance.

Also, as in Example 4, a plurality of completely different functions can be provided to one glazing channel 140.

### Example 6

### Structure of glazing channel 150

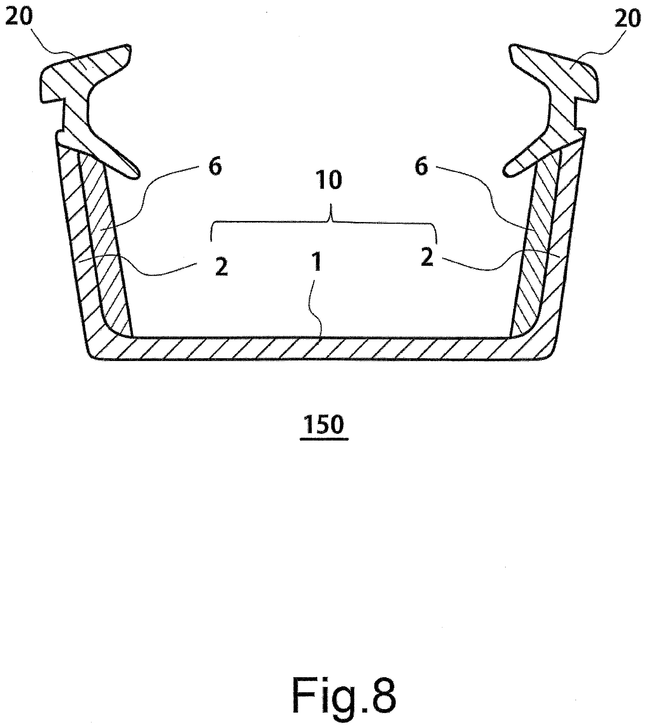

Fig. 8 is a schematic cross-sectional view for illustrating a glazing channel according to Example 6.

A glazing channel 150 according to Example 6 is an alternative embodiment of the above glazing channel 130 according to Example 4.

In the above glazing channel 130 according to Example 4, the inner lower wall 4 consisting of a thermally expandable resin composition layer is provided so that it contacts the inside of said body portion 10.

Meanwhile, the glazing channel 150 according to Example 6 is different in that inner side walls 6,6 consisting of a thermally expandable resin composition layer are provided so that they contact the inside of side walls 2,2 of said body portion 10.

Other physical characteristics are the same as in Example 4.

As in Example 4, said glazing channel 150 can be obtained by said simultaneous co-extrusion.

Said glazing channel 150 obtained by said simultaneous co-extrusion is excellent in surface appearance.

Also, as in Example 4, a plurality of completely different functions can be provided with one glazing channel 150.

### Example 7

### Structure of glazing channel 160

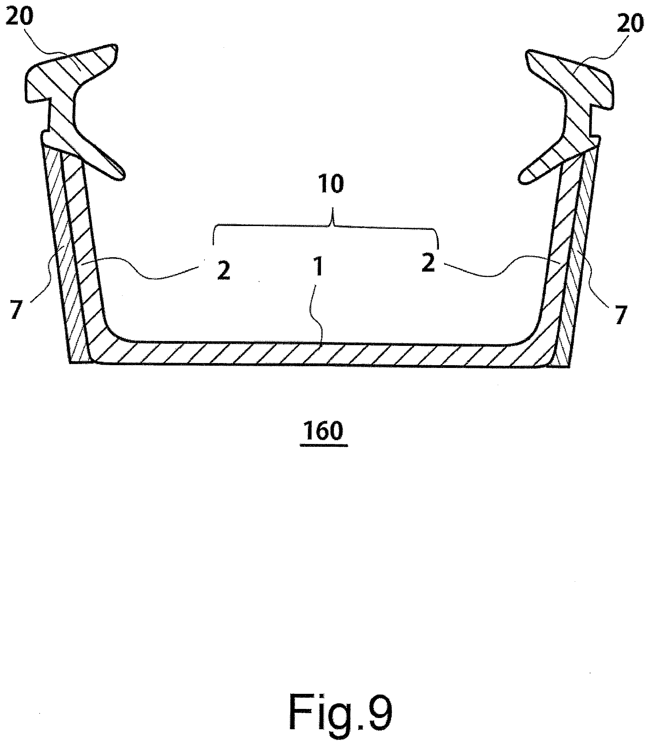

Fig. 9 is a schematic cross-sectional view for illustrating a glazing channel according to Example 7.

A glazing channel 160 according to Example 7 is an alternative embodiment of the above glazing channel 130 according to Example 4.

In the above glazing channel 130 according to Example 4, the inner lower wall 4 consisting of a thermally expandable resin composition layer is provided so that it contacts the inside of said body portion 10.

Meanwhile, a glazing channel 160 according to Example 7 is different in that outer side walls 7,7 consisting of a thermally expandable resin composition layer are provided so that they contact the outside of side walls 2,2 of said body portion 10. Other physical characteristics are the same as in Example 4.

As in Example 4, said glazing channel 160 can be obtained by said simultaneous co-extrusion.

Said glazing channel 160 obtained by said simultaneous co-extrusion is excellent in surface appearance.

Also, as in Example 4, a plurality of completely different functions can be provided with one glazing channel 160.

### Example 8

### Structure of glazing channel 170

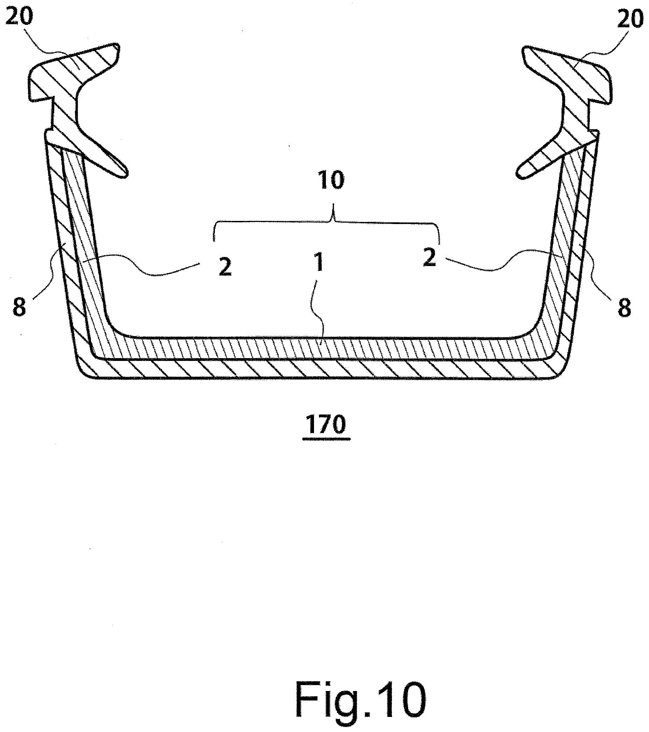

Fig. 10 is a schematic cross-sectional view for illustrating a glazing channel according to Example 8.

A glazing channel 170 according to Example 8 is an alternative embodiment of the above glazing channel 110 according to Example 2.

The above glazing channel 110 according to Example 2 comprises a protruding portion 20 consisting of a polyvinyl chloride resin composition layer and a body portion 10 comprising a thermally expandable resin composition layer.

Meanwhile, the glazing channel 170 according to Example 8 is different in that it contacts said body portion 10 and comprises an outer body portion 8 consisting of a polyvinyl chloride resin composition layer, in addition to a configuration of the glazing channel 130 according to Example 2.

Other physical characteristics are the same as in Example 2.

As in Example 2, said glazing channel 170 can be obtained by said simultaneous co-extrusion.

Said glazing channel 170 obtained by said simultaneous co-extrusion is excellent in surface appearance.

Also, as in Example 2, a plurality of completely different functions can be provided with one glazing channel 170.

### Example 9

### Structure of glazing channel 180

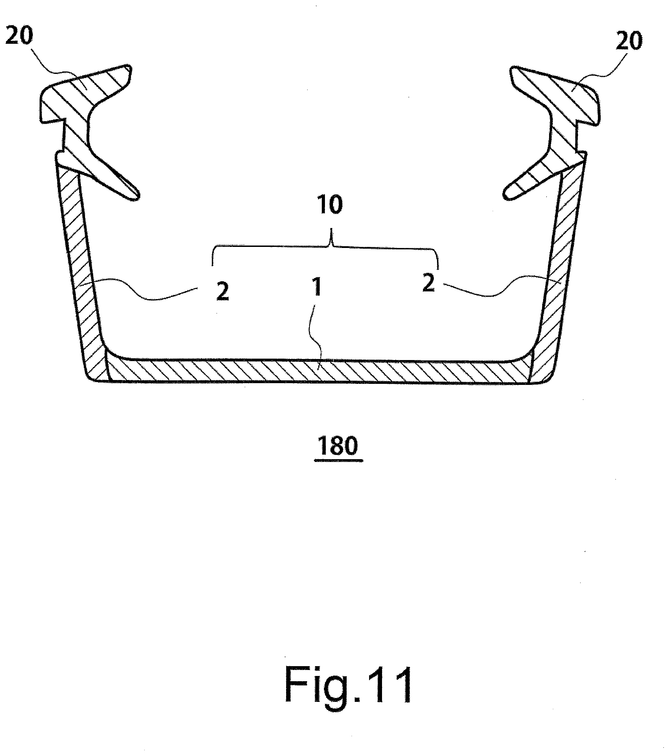

Fig. 11 is a schematic cross-sectional view for illustrating a glazing channel according to Example 9.

A glazing channel 180 according to Example 9 is an alternative embodiment of the above glazing channel 110 according to Example 2.

The above glazing channel 110 according to Example 2 comprises a protruding portion 20 consisting of a polyvinyl chloride resin composition layer by using a polyvinyl chloride resin composition comprising a soft polyvinyl chloride and a body portion 10 consisting of a thermally expandable resin composition layer.

Meanwhile, the glazing channel 180 according to Example 9 is different in that a lower wall 1 consists of a thermally expandable resin composition layer and side walls 2,2 consists of a polyvinyl chloride resin composition layer by using a polyvinyl chloride resin composition comprising a hard polyvinyl chloride.

Other physical characteristics are the same as in Example 2.

As in Example 2, said glazing channel 180 can be obtained by said simultaneous co-extrusion.

Said glazing channel 180 obtained by said simultaneous co-extrusion is excellent in surface appearance.

Also, as in Example 2, a plurality of completely different functions can be provided with one glazing channel 180.

### Example 10

### Structure of glazing channel 190

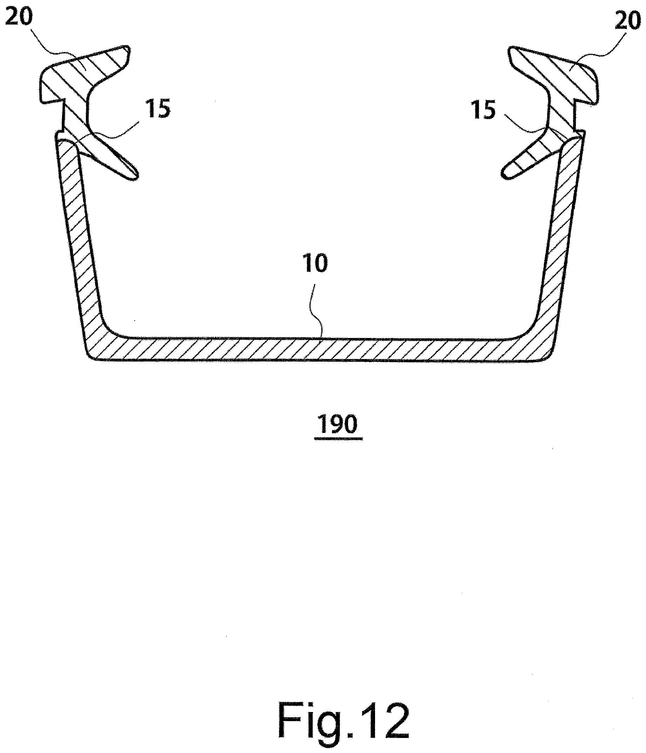

Fig. 12 is a schematic cross-sectional view for illustrating a glazing channel according to Example 10.

A glazing channel 190 according to Example 10 is an alternative embodiment of the above glazing channel 110 according to Example 2.

In the above glazing channel 110 according to Example 2, a boundary 14 between a thermally expandable resin composition layer and a thermoplastic resin composition layer in a cross section of said glazing channel 110 based on a plane perpendicular to a direction of simultaneous co-extrusion in the production is linear (Fig. 4).

Meanwhile, a boundary 15 between a thermally expandable resin composition layer and a thermoplastic resin composition layer in a cross section of a glazing channel 190 according to Example 10 is a curve (Fig. 12).

By defining said boundary 15 as a curve, a contact area between the thermally expandable resin composition layer and the thermoplastic resin composition layer in the cross section of said glazing channel 190 can be made larger than in the case of the above Example 2.

By making larger the contact area between the thermally expandable resin composition layer and the thermoplastic resin composition layer in the cross section of said glazing channel 190, peeling of an interface between the thermally expandable resin composition layer and the thermoplastic resin composition layer can be reduced.

As in Example 2, said glazing channel 190 can be obtained by said simultaneous co-extrusion.

Said glazing channel 190 obtained by said simultaneous co-extrusion is excellent in surface appearance.

Also, as in Example 2, a plurality of completely different functions can be provided with one glazing channel 190.

Particularly, Example 10 is excellent in reliability, because even if impact is provided to said glazing channel 190, peeling of an interface between the thermally expandable resin composition layer and the thermoplastic resin composition layer can be reduced.

### Example 11

### Structure of glazing channel 200

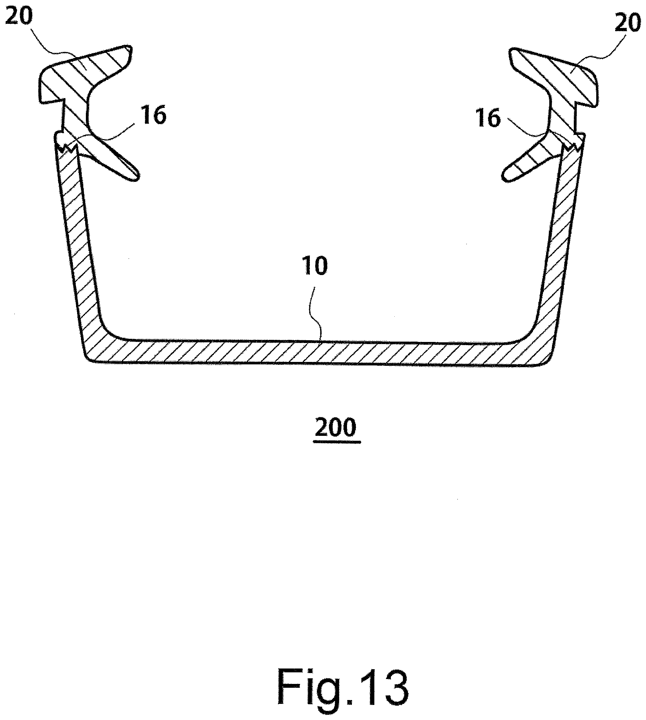

Fig. 13 is a schematic cross-sectional view for illustrating a glazing channel Example 11.

A glazing channel 200 according to Example 11 is an alternative embodiment of the above glazing channel 190 according to Example 10.

In the above glazing channel 190 according to Example 10, the boundary 15 between a thermally expandable resin composition layer and a thermoplastic resin composition layer in a cross section of said glazing channel 190 based on a plane perpendicular to a direction of simultaneous co-extrusion in the production is a curve. Meanwhile, a boundary 16 between a thermally expandable resin composition layer and a thermoplastic resin composition layer in a cross section of said glazing channel 200 is a broken line.

The number of turn points forming said broken line is not restricted, but preferably 1 to 100, more preferably 1 to 20, and much more preferably 1 to 10.

By defining said boundary 16 as a broken line, a contact area between the thermally expandable resin composition layer and the thermoplastic resin composition layer in a cross section of said glazing channel 190 can be made larger than the case of the above Example 2.

By making larger the contact area between the thermally expandable resin composition layer and the thermoplastic resin composition layer in the cross section of said glazing channel 200, peeling of an interface between the thermally expandable resin composition layer and the thermoplastic resin composition layer can be reduced.

As in Example 10, said glazing channel 200 can be obtained by said simultaneous co-extrusion.

Said glazing channel 200 obtained by said simultaneous co-extrusion is excellent in surface appearance.

Also, as in Example 10, a plurality of completely different functions can be provided with one glazing channel 200.

Particularly, Example 11 is excellent in reliability, because even if impact is provided to said glazing channel 200, peeling of an interface between the thermally expandable resin composition layer and the thermoplastic resin composition layer can be reduced.

Incidentally, even in the following Examples, the shape of a boundary between a thermally expandable resin composition layer and a thermoplastic resin composition layer in a cross section can be defined as a curve and/or a broken line.

### Example 12

### Structure of tight member 210

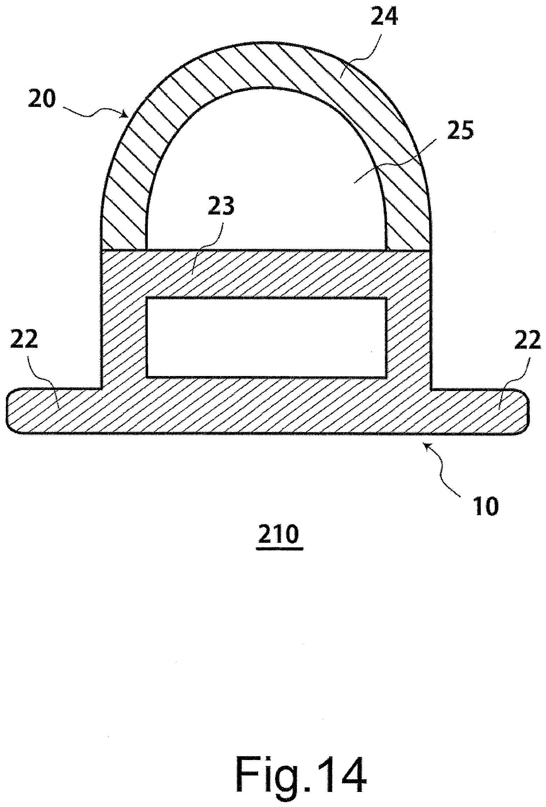

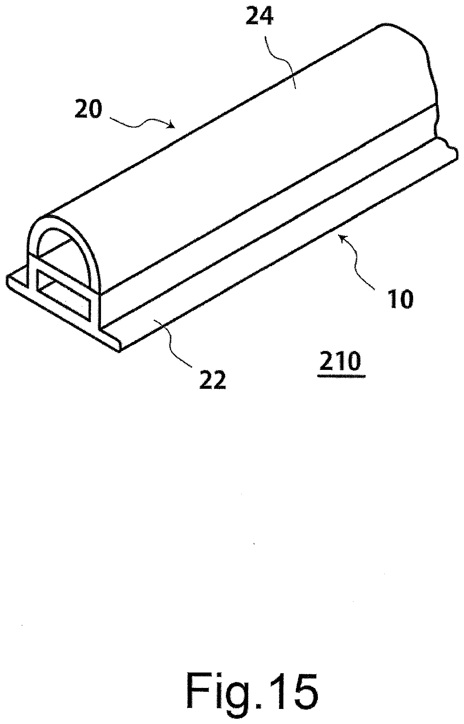

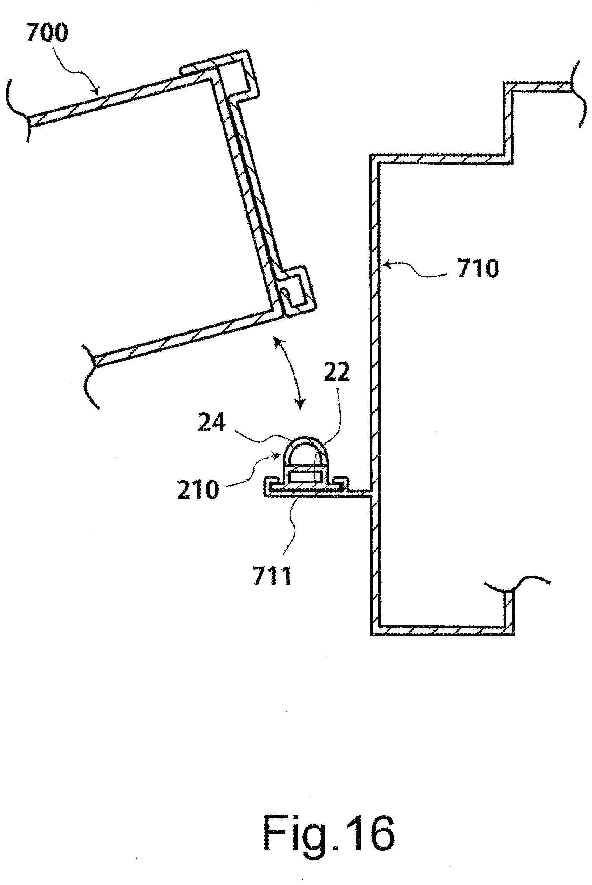

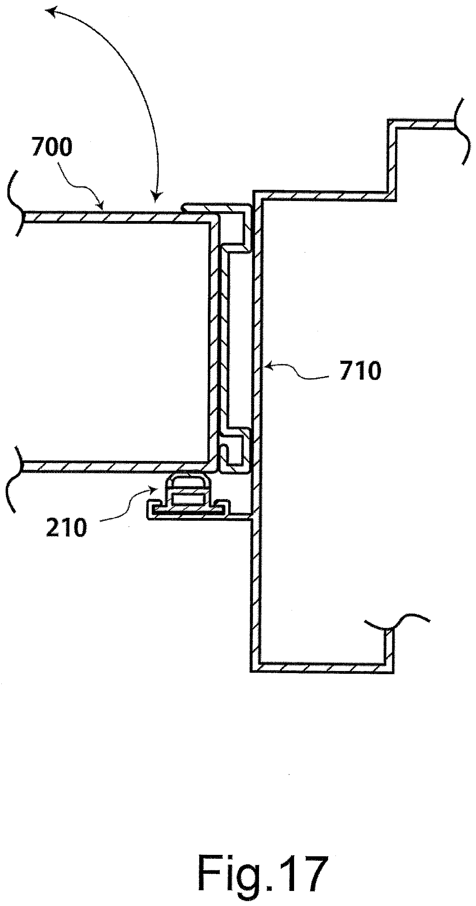

Fig. 14 is a schematic cross-sectional view for illustrating a tight member according to Example 12, and shows a cross-sectional shape based on a plane perpendicular to the longitudinal direction of a tight member according to Example 12. Fig. 15 is a schematic fragmentary perspective view for illustrating a tight member according to Example 12. Also, Figs. 16 and 17 are a schematic fragmentary cross-sectional view for illustrating the physical relationship between a tight member according to Example 12 and a door.

A tight member 210 according to Example 12 comprises a body portion 10 consisting of a thermally expandable resin composition layer and a protruding portion 20 consisting of a soft polyvinyl chloride resin composition layer.

Said body portion 10 comprises a fixing portion 22 and a cylinder portion 23. Also, said protruding portion 20 comprises an arc portion 24.

A space 25 surrounded by said arc portion 24 and said cylinder portion 23 is formed inside said protruding portion 20.

A door 700 shown in Figs. 16 and 17 can open and close relative to a frame 710. When said door 700 contacts the frame 710, said door 700 contacts the arc portion 24 of the protruding portion 20 of said tight member 210.

Also, the fixing portion 22 of the body portion 10 of said tight member 210 is inserted into the inside of groove portions 711 of the frame 710. By inserting said fixing portion 22 into said groove portions 711, said tight member 210 can be fixed to the frame 710.
The protruding portion 20 of said tight member 210 is flexible. Accordingly, when said door 700 contacts the frame 710, the space 25 of said tight member 210 deforms to block a gap between said door 700 and said frame 710.

### Example for producing tight member 210

The method for producing a tight member 210 according to Example 12 is the same as in Example 1. Table 1 shows the compounding ratio of a resin composition used in simultaneous co-extrusion.

Said tight member 210 can be produced by simultaneous co-extrusion as in Example 1 by using a polychlorinated resin composition comprising a soft polyvinyl chloride used in forming said protruding portion 20 and using a chlorinated polyvinyl chloride-comprising thermally expandable resin composition used in forming said body portion 10 in Example 1.

A tight member 210 obtained is excellent in surface appearance.

### Action of tight member 210

A tight member 210 shown in Figs. 16 and 17 comprises a protruding portion 20 consisting of a thermoplastic resin composition layer and a body portion 10 consisting of a thermally expandable resin composition layer.

Said thermally expandable resin composition layer has a function of fire resistance because it expands in a thermal environment such as a fire. Also, said thermoplastic resin composition layer has a function of air tightness to block a gap between a door 700 and a frame 710 because it is flexible.

Meanwhile, said thermally expandable resin composition layer has strength for supporting said protruding portion 20 even if said door 700 is closed.

Therefore, said body portion 10 has a function of bearing the strength of the entire tight member 210.

In this manner, the tight member 210 according to Example 12, having its two or more resin composition layers having different functions, can be provided with a plurality of completely different functions.

Also, when a frame 710 having a tight member 210 shown in Figs. 16 and 17 and a door 700 are subjected to a thermal environment such as a fire, the body portion 10 consisting of said thermally expandable resin composition layer expands. An expansion residue caused by the expansion blocks a gap between the door 700 and the frame 710.

Due to the expansion residue, entry of flame and smoke, etc., caused by a fire passing through the gap between the door 700 and the frame 710 into a non-fire area can be retarded.

As stated above, the frame 710 having a tight member 210 according to Example 12 and the door 700 are excellent in fire resistance.

### Example 13

### Structure of tight member 220

A tight member 220 according to Example 13 is an alternative embodiment of a tight member 210 according to Example 12.

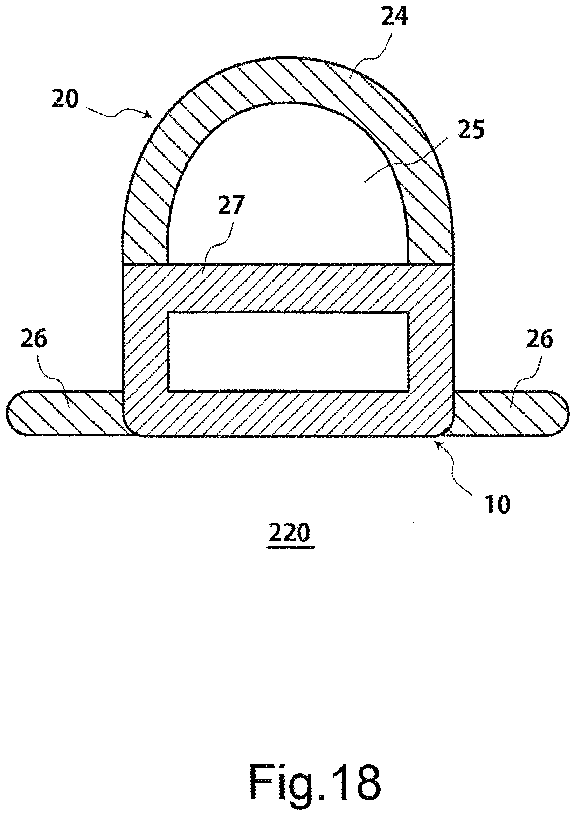

Fig. 18 is a schematic cross-sectional view for illustrating a tight member according to Example 13, and shows a cross-sectional shape based on a plane perpendicular to the longitudinal direction of a tight member according to Example 13.

A tight member 220 according to Example 13 comprises a polyvinyl chloride resin composition layer comprising a soft polyvinyl chloride, a body portion 10 consisting of a thermally expandable resin composition layer and a protruding portion 20 consisting of a polyvinyl chloride resin composition layer comprising a soft polyvinyl chloride. Table 1 shows a compounding ratio of a resin composition used in simultaneous co-extrusion.

Said body portion 10 comprises fixing portions 26,26 consisting of a polyvinyl chloride resin composition layer comprising a soft polyvinyl chloride and a cylinder portion 27. Also, said protruding portion 20 comprises an arc portion 24 consisting of a polyvinyl chloride resin composition layer comprising a soft polyvinyl chloride.

A space 25 surrounded by the arc portion 24 comprising a polyvinyl chloride resin composition layer consisting of said soft polyvinyl chloride and the cylinder portion 27 consisting of a thermally expandable resin composition layer is formed inside said protruding portion 20.

Said tight member 220 can be fixed to said frame by using a frame having groove portions capable of fitting the body portion 10 of said tight member 220 as in Example 12.

A tight member 220 according to Example 13 can also be formed by simultaneous co-extrusion like the tight member 210 according to Example 12.

Said tight member 220 obtained can be applied to a building component having a door and a frame like the tight member 210 according to Example 12. Also, said tight member 220 is excellent in surface appearance and fire resistance.

### Example 14

### Structure of tight member 230

A tight member 230 according to Example 14 is an alternative embodiment of a tight member 220 according to Example 13.

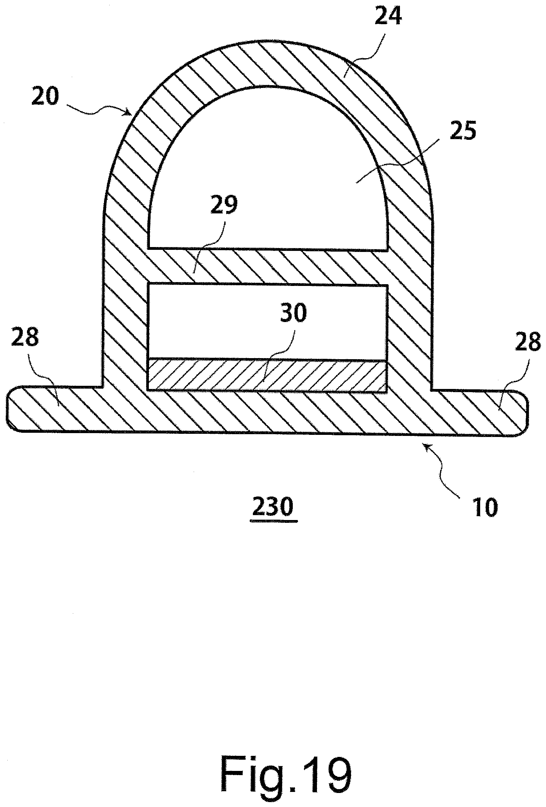

Fig. 19 is a schematic cross-sectional view for illustrating a tight member according to Example 14, and shows a cross-sectional shape based on a plane perpendicular to the longitudinal direction of a tight member according to Example 14.

The above tight member 220 according to Example 13 comprises a polyvinyl chloride resin composition layer comprising a soft polyvinyl chloride, a body portion 10 consisting of a thermally expandable resin composition layer and a protruding portion 20 consisting of a polyvinyl chloride resin composition layer comprising a soft polyvinyl chloride.

Meanwhile, the tight member 230 according to Example 14 is different in that the body portion 10 and the protruding portion 20 consists of a polyvinyl chloride resin composition layer comprising a soft polyvinyl chloride and a cylinder inner portion 30 consisting of a thermally expandable resin composition layer is provided inside a cylinder portion 29 of said body portion 10.

Said tight member 230 can be fixed to said frame by using a frame having groove portions capable of fitting the body portion 10 of said tight member 230 as in Example 12.

The tight member 230 according to Example 14 can also be formed by simultaneous co-extrusion like the tight member 210 according to Example 12.

Said tight member 230 obtained can be applied to a building component having a door and a frame like the tight member 210 according to Example 12. Also, said tight member 230 is excellent in surface appearance and fire resistance.

### Example 15

### Structure of tight member 240

A tight member 240 according to Example 15 is an alternative embodiment of a tight member 210 according to Example 12.

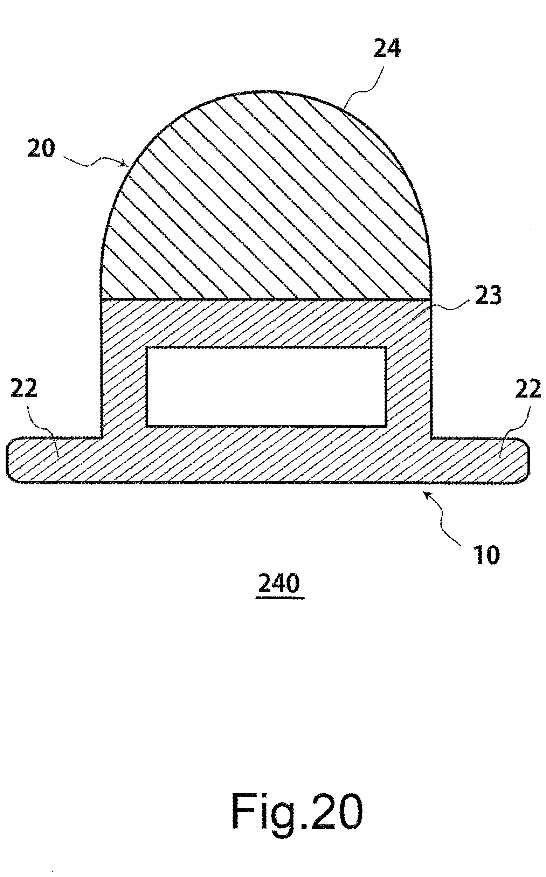

Fig. 20 is a schematic cross-sectional view for illustrating a tight member according to Example 15, and shows a cross-sectional shape based on a plane perpendicular to the longitudinal direction of a tight member according to Example 15.

The above tight member 210 according to Example 12 comprises a body portion 10 consisting of a thermally expandable resin composition layer and a protruding portion 20 consisting of a polyvinyl chloride resin composition layer comprising a soft polyvinyl chloride.

Meanwhile, the tight member 240 according to Example 15 is different in that the protruding portion 20 consists of a polyvinyl chloride resin composition layer comprising a soft polyvinyl chloride having no space 25.

Said tight member 240 can be fixed to said frame by using a frame having groove portions capable of fitting the body portion 10 of said tight member 240 as in Example 12.

The tight member 240 according to Example 15 can also be formed by simultaneous co-extrusion like the tight member 210 according to Example 12.

Said tight member 240 obtained can be applied to a building component having a door and a frame like the tight member 210 according to Example 12. Also, said tight member 240 is excellent in surface appearance and fire resistance.

### Example 16

### Structure of tight member 250

A tight member 250 according to Example 16 is an alternative embodiment of a tight member 220 according to Example 13.

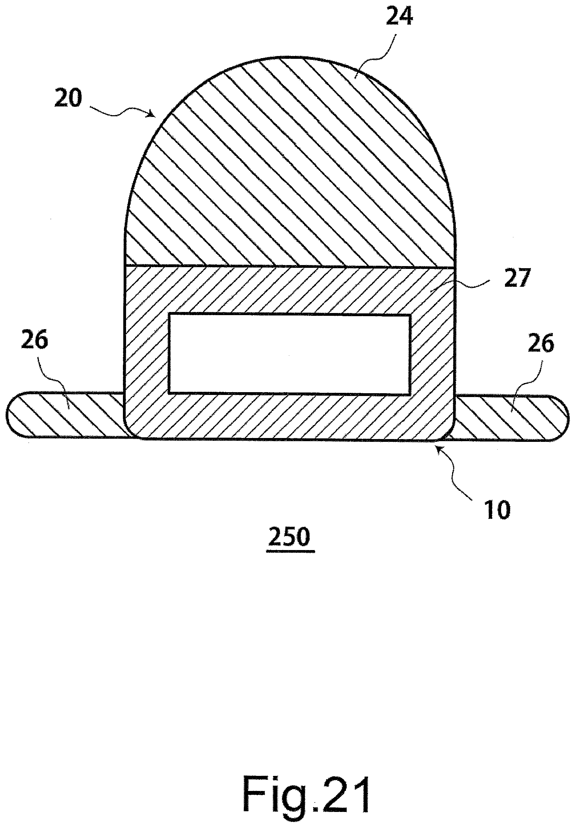

Fig. 21 is a schematic cross-sectional view for illustrating a tight member according to Example 16, and shows cross-sectional shape based on a plane perpendicular to the longitudinal direction of a tight member according to Example 16.

The above tight member 220 according to Example 13 comprises a body portion 10 consisting of a polyvinyl chloride resin composition layer comprising a soft polyvinyl chloride and a thermally expandable resin composition layer and a protruding portion 20 consisting of a polyvinyl chloride resin composition layer comprising a soft polyvinyl chloride.

Meanwhile, the tight member 250 according to Example 16 is different in that the protruding portion 20 consists of s a polyvinyl chloride resin composition layer comprising a soft polyvinyl chloride having no space 25.

Said tight member 250 can be fixed to said frame by using a frame having groove portions capable of fitting the body portion 10 of said tight member 250 as in Example 13.

The tight member 250 according to Example 16 can also be formed by simultaneous co-extrusion like the tight member 220 according to Example 13.

Said tight member 250 obtained can be applied to a building component having a door and a frame like the tight member 220 according to Example 13. Also, said tight member 250 is excellent in surface appearance and fire resistance.

### Example 17

### Structure of tight member 260

A tight member 260 according to Example 17 is an alternative embodiment of a tight member 210 according to Example 12.

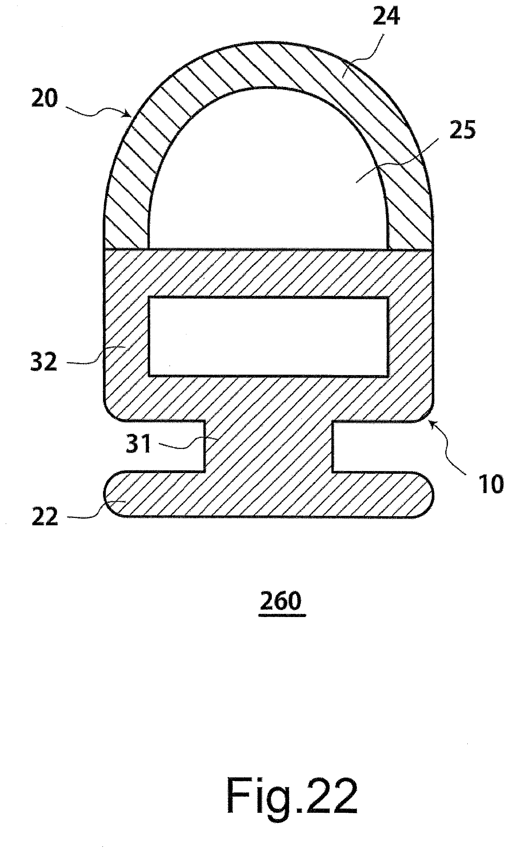

Fig. 22 is a schematic cross-sectional view for illustrating a tight member according to Example 17, and shows a cross-sectional shape based on a plane perpendicular to the longitudinal direction of a tight member according to Example 17.

The above tight member 210 according to Example 12 comprises a body portion 10 consisting of a thermally expandable resin composition layer and a protruding portion 20 consisting of a polyvinyl chloride resin composition layer comprising a soft polyvinyl chloride.

Meanwhile, the tight member 260 according to Example 17 is different in that it comprises a body portion 10 consisting of a thermally expandable resin composition layer and a protruding portion 20 consisting of a polyvinyl chloride resin composition layer comprising a soft polyvinyl chloride, and said body portion 10 comprises a connecting portion 31, and a fixing portion 22 and a cylinder portion 32 are connected by said connecting portion 31.

Said tight member 260 can be fixed to said frame by using a frame having groove portions capable of fitting the body portion 10 of said tight member 260 as in Example 12.

The tight member 260 according to Example 17 can also be formed by simultaneous co-extrusion like the tight member 210 according to Example 12.

Said tight member 260 obtained can be applied to a building component having a door and a frame like the tight member 210 according to Example 12. Also, said tight member 260 is excellent in surface appearance and fire resistance.

### Example 18

### Structure of tight member 270

A tight member 270 according to Example 18 is an alternative embodiment showing a tight member 260 according to Example 17.

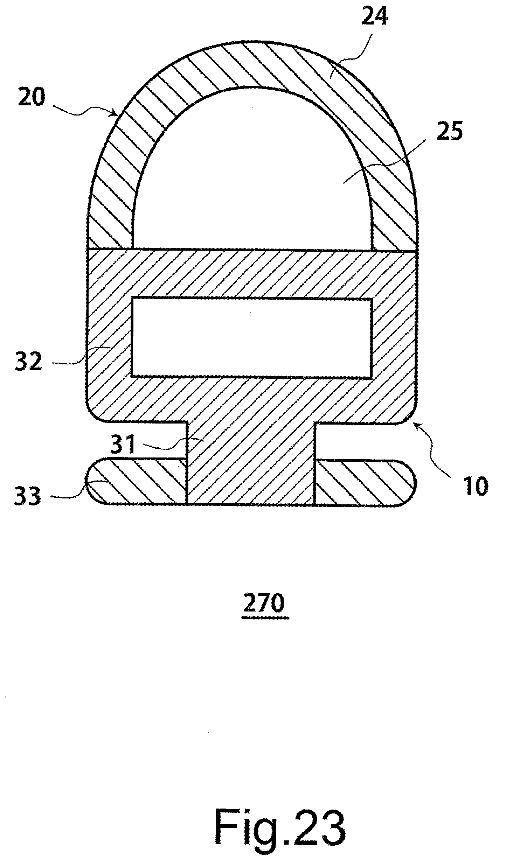

Fig. 23 is a schematic cross-sectional view for illustrating a tight member according to Example 18, and shows a cross-sectional shape based on a plane perpendicular to the longitudinal direction of a tight member according to Example 18. The above tight member 260 according to Example 17 comprises a body portion 10 consisting of a thermally expandable resin composition layer and a protruding portion 20 consisting of a polyvinyl chloride resin composition layer comprising a soft polyvinyl chloride, and said body portion 10 comprises a connecting portion 31. A fixing portion 22 and a cylinder portion 32 are connected by said connecting portion 31.

Meanwhile, the tight member 270 according to Example 18 is different in that fixing portions 33,33 consists of a polyvinyl chloride resin composition layer comprising a soft polyvinyl chloride.

Said tight member 270 can be fixed to said frame by using a frame having groove portions capable of fitting the body portion 10 of said tight member 270 as in Example 17.

The tight member 270 according to Example 18 can also be formed by simultaneous co-extrusion like the tight member 260 according to Example 17.

Said tight member 270 obtained can be applied to a building component having a door and a frame like the tight member 260 according to Example 17. Also, said tight member 270 is excellent in surface appearance and fire resistance.

### Example 19

### Structure of tight member 280

A tight member 280 according to Example 19 is an alternative embodiment of a tight member 270 according to Example 18.

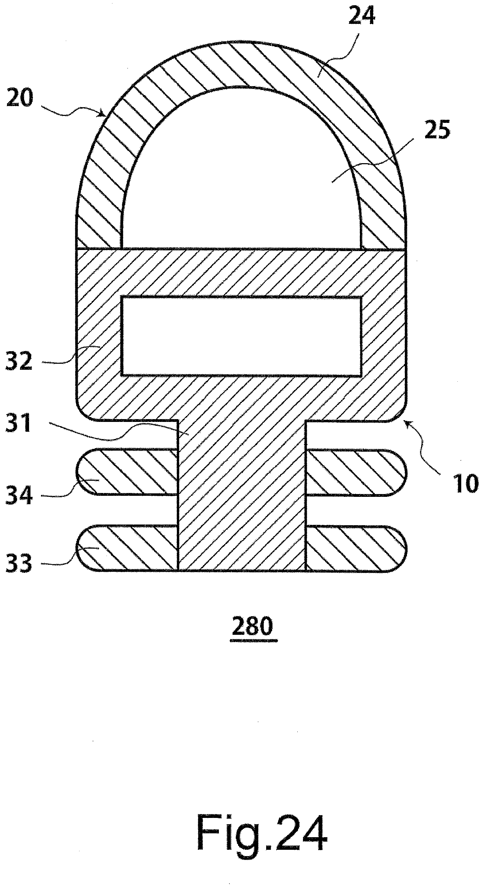

Fig. 24 is a schematic cross-sectional view for illustrating a tight member according to Example 19, and shows a cross-sectional shape based on a plane perpendicular to the longitudinal direction of a tight member according to Example 19.

In the above tight member 270 according to Example 18, the fixing portion 33 consists of a polyvinyl chloride resin composition layer comprising a soft polyvinyl chloride and provided at the connecting portion 31 consisting of a thermally expandable resin composition layer.

Meanwhile, the tight member 280 according to Example 19 is different in that it comprises expanding portions 34,34 consists of a polyvinyl chloride resin composition layer comprising a soft polyvinyl chloride at the connecting portion 31.

Said tight member 280 can be fixed to said frame by using a frame having groove portions capable of fitting the body portion 10 of said tight member 280 as in Example 18.

The tight member 280 according to Example 19 can also be formed by simultaneous co-extrusion like the tight member 270 according to Example 18.

Said tight member 280 obtained can be applied to a building component having a door and a frame like the tight member 270 according to Example 18. Also, said tight member 280 is excellent in surface appearance and fire resistance.

### Example 20

### Structure of tight member 290

A tight member 290 according to Example 20 is an alternative embodiment of a tight member 280 according to Example 19.

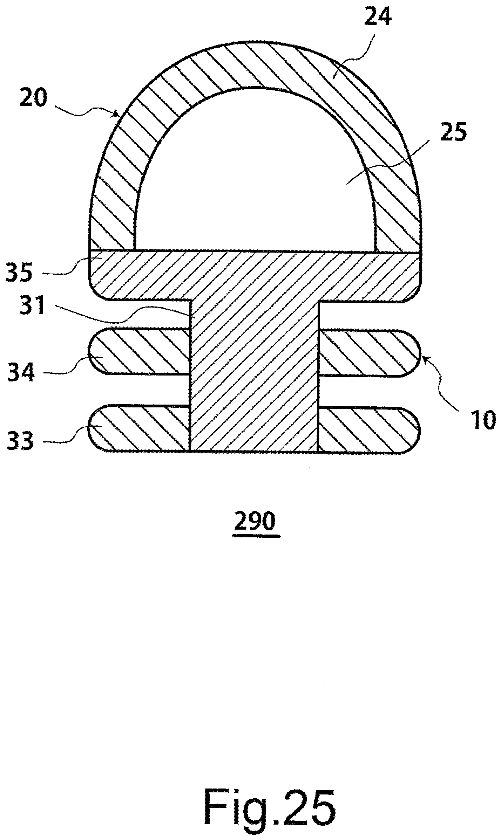

Fig. 25 is a schematic cross-sectional view for illustrating a tight member according to Example 20, and shows a cross-sectional shape based on a plane perpendicular to the longitudinal direction of a tight member according to Example 20.

The above tight member 280 according to Example 19 comprises a cylinder portion 32 consisting of a thermally expandable resin composition layer in the body portion 10.

Meanwhile, the tight member 290 according to Example 20 is different in that a plate-like portion 35 is provided instead of said cylinder portion 32.

Said tight member 290 can be fixed to said frame by using a frame having groove portions capable of fitting the body portion 10 of said tight member 290 as in Example 19.

The tight member 290 according to Example 20 can also be formed by simultaneous co-extrusion like the tight member 280 according to Example 19.

Said tight member 290 obtained can be applied to a building component having a door and a frame like the tight member 280 according to Example 19. Also, said tight member 280 is excellent in surface appearance and fire resistance.

### Example 21

### Structure of tight member 300

A tight member 300 according to Example 21 is an alternative embodiment of a tight member 210 according to Example 12.

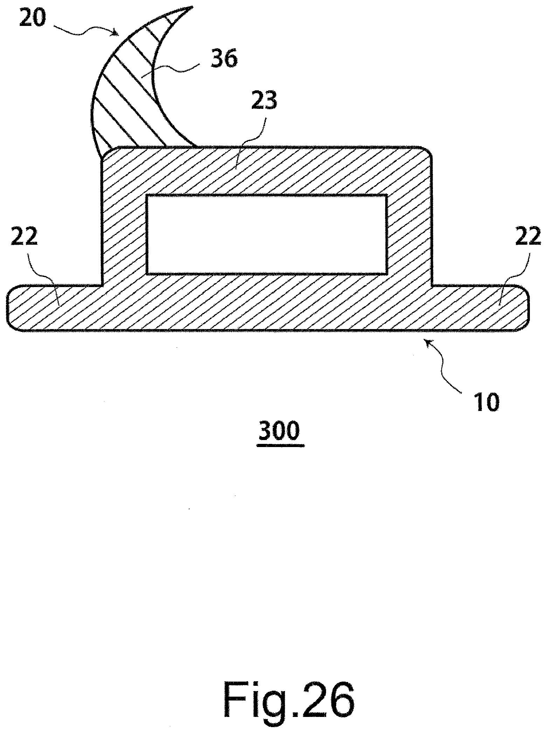

Fig. 26 is a schematic cross-sectional view for illustrating a tight member according to Example 21, and shows a cross-sectional shape based on a plane perpendicular to the longitudinal direction of a tight member according to Example 21.

The above tight member 210 according to Example 12 comprises a body portion 10 consisting of a thermally expandable resin composition layer and a protruding portion 20 consisting of a soft polyvinyl chloride resin composition layer, and said protruding portion 20 is a semicircle.

Meanwhile, the tight member 300 according to Example 21 is different in that the shape of a fin portion 36 forming a protruding portion 20 is approximate crescentic having no space inside and provided at an end portion of said body portion 10.

Herein, "approximate crescentic" means the shape obtained by cutting a curved surface with a different curved surface, comprising an outer circumference comprising a curve smoothly protruding outside and a curve smoothly protruding inside.

Incidentally, the place for providing said protruding portion 20 relative to said body portion 10 is not restricted to an end portion of said body portion 10 and can be determined accordingly.

Said tight member 300 can be fixed to said frame by using a frame having groove portions capable of fitting the body portion 10 of said tight member 300 as in Example 12.

The tight member 300 according to Example 21 can also be formed by simultaneous co-extrusion like the tight member 210 according to Example 12.

Said tight member 300 obtained can be applied to a building component having a door and a frame like the tight member 210 according to Example 12. Also, said tight member 300 is excellent in surface appearance and fire resistance.

### Example 22

### Structure of tight member 310

A tight member 310 according to Example 22 is an alternative embodiment of a tight member 300 according to Example 21.

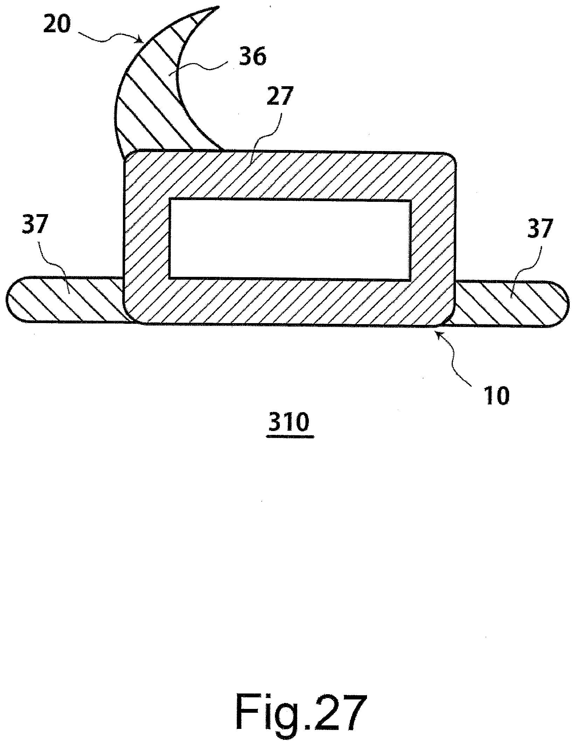

Fig. 27 is a schematic cross-sectional view for illustrating a tight member according to Example 22, and shows a cross-sectional shape based on a plane perpendicular to the longitudinal direction of a tight member according to Example 22. In the above tight member 300 according to Example 21, said body portion 10 is formed of a thermally expandable resin composition layer.

Meanwhile, the tight member 310 according to Example 22 is different in that fixing portions 37,37 of said body portion 10 are formed of a polyvinyl chloride resin composition layer comprising a soft polyvinyl chloride.

Said tight member 310 can be fixed to said frame by using a frame having groove portions capable of fitting the body portion 10 of said tight member 310 as in Example 21.

The tight member 310 according to Example 22 can also be formed by simultaneous co-extrusion like the tight member 300 according to Example 21.

Said tight member 310 obtained can be applied to a building component having a door and a frame like the tight member 130 according to Example 21. Also, said tight member 310 is excellent in surface appearance and fire resistance.

### Example 23

### Structure of tight member 320

A tight member 320 according to Example 23 is an alternative embodiment of a tight member 300 according to Example 21.

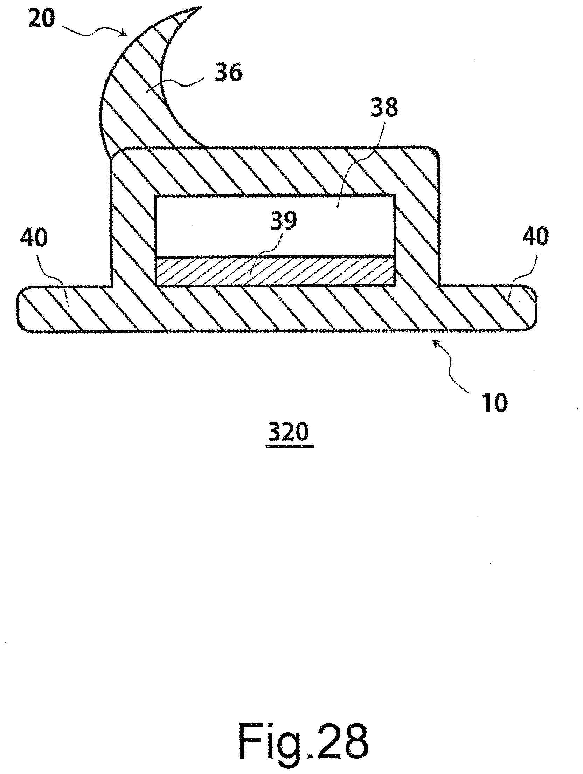

Fig. 28 is a schematic cross-sectional view for illustrating a tight member according to Example 23, and shows a cross-sectional shape based on a plane perpendicular to the longitudinal direction of a tight member according to Example 23. In the above tight member 300 according to Example 21, said body portion 10 is formed of a thermally expandable resin composition layer.

Meanwhile, the tight member 320 according to Example 23 is different in that said body portion 10 is formed of a polyvinyl chloride resin composition layer comprising a soft polyvinyl chloride, and a cylinder inner portion 39 consisting of a thermally expandable resin composition layer is laminated in a space 38 of said body portion 10, and in that a fixing portion 40 consisting of a polyvinyl chloride resin composition layer comprising a soft polyvinyl chloride is provided at said body portion 10.

Said tight member 320 can be fixed to said frame by using a frame having groove portions capable of fitting the body portion 10 of said tight member 320 as in Example 21.

The tight member 320 according to Example 23 can also be formed by simultaneous co-extrusion like the tight member 320 according to Example 21.

Said tight member 320 obtained can be applied to a building component having a door and a frame like the tight member 300 according to Example 21. Also, said tight member 320 is excellent in surface appearance and fire resistance.

### Example 24

### Structure of tight member 330

A tight member 330 according to Example 24 is an alternative embodiment of a tight member 300 according to Example 21.

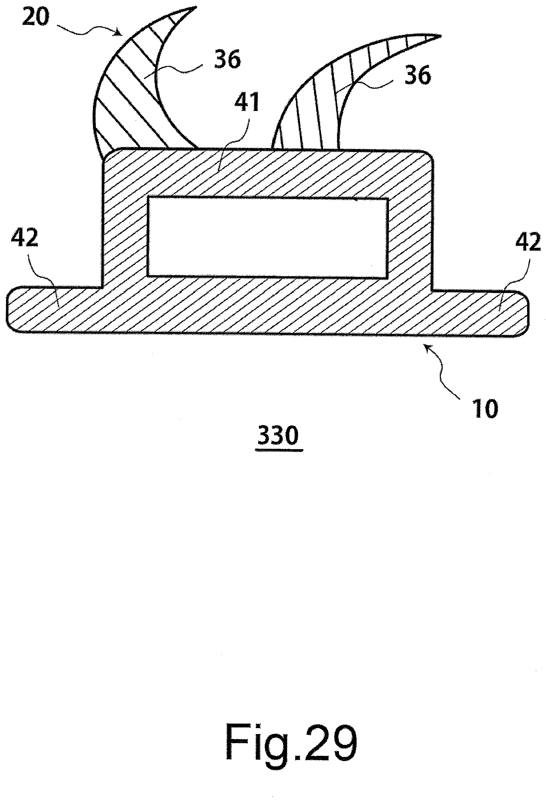

Fig. 29 is a schematic cross-sectional view of a tight member according to Example 24, and shows a cross-sectional shape based on a plane perpendicular to the longitudinal direction of a tight member according to Example 24.

In the above tight member 300 according to Example 21, one of said protruding portions 20 of the fin portion 36 of approximate crescentic is formed of a polyvinyl chloride resin composition layer comprising a soft polyvinyl chloride.

Meanwhile, the tight member 330 according to Example 24 is different in that two of said protruding portions 20 of the fin portion 36 of approximate crescentic consisting of a polyvinyl chloride resin composition layer comprising a soft polyvinyl chloride are formed.

Said tight member 330 can be fixed to said frame by using a frame having groove portions capable of fitting the body portion 10 of said tight member 330 like in Example 21.

The tight member 330 according to Example 24 can also be formed by simultaneous co-extrusion like the tight member 300 according to Example 21.

Said tight member 330 obtained can be applied to a building component having a door and a frame like the tight member 300 according to Example 21. Said tight member 330 is excellent in surface appearance and fire resistance.

### Example 25

### Structure of tight member 340

A tight member 340 according to Example 25 is an alternative embodiment of a tight member 310 according to Example 22.

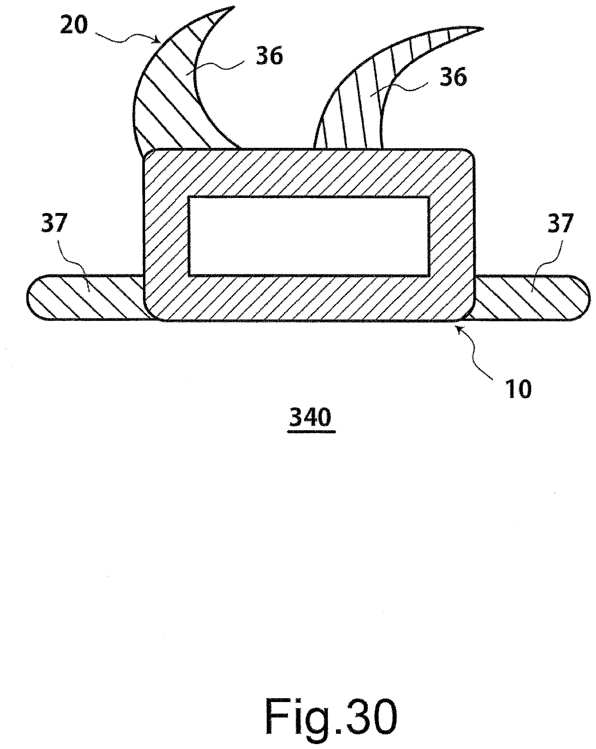

Fig. 30 is a schematic cross-sectional view for illustrating a tight member according to Example 25, and shows a cross-sectional shape based on a plane perpendicular to the longitudinal direction of a tight member according to Example 25. In the above tight member 310 according to Example 22, one of said protruding portions 20 of the fin portion 36 of approximate crescentic is formed of a polyvinyl chloride resin composition layer comprising a soft polyvinyl chloride.

Meanwhile, the tight member 330 according to Example 24 is different in that two of the fin portions 36 of approximate crescentic consisting of a polyvinyl chloride resin composition layer comprising a soft polyvinyl chloride are formed.

Said tight member 340 can be fixed to said frame by using a frame having groove portions capable of fitting the body portion 10 of said tight member 340 as in Example 22.

The tight member 340 according to Example 25 can also be formed by simultaneous co-extrusion like the tight member 310 according to Example 22.

Said tight member 340 obtained can be applied to a building component having a door and a frame like the tight member 310 according to Example 22. Also, said tight member 340 is excellent in surface appearance and fire resistance.

### Example 26

### Structure of tight member 350

A tight member 350 according to Example 26 is an alternative embodiment of a tight member 330 according to Example 24.

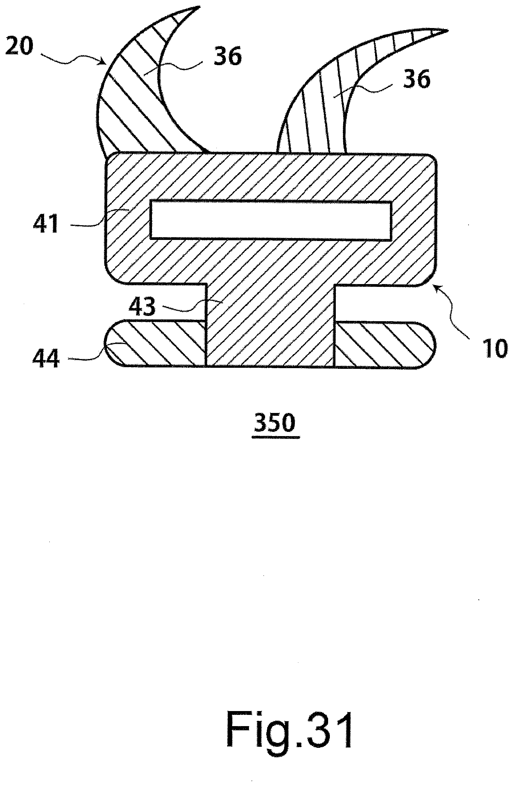

Fig. 31 is a schematic cross-sectional view for illustrating a tight member according to Example 26, and shows a cross-sectional shape based on a plane perpendicular to the longitudinal direction of a tight member according to Example 26. In the above tight member 330 according to Example 24, the body portion 10 is formed of a thermally expandable resin composition layer.

Meanwhile, the tight member 350 according to Example 26 is different in that the body portion 10 comprises a cylinder portion 41 consisting of a thermally expandable resin composition layer, a connecting portion 43 consisting of a thermally expandable resin composition layer and fixing portions 44,44 consisting of a polyvinyl chloride resin composition layer comprising a soft polyvinyl chloride.

Said tight member 350 can be fixed to said frame by using a frame having groove portions capable of fitting the body portion 10 of said tight member 350 as in Example 24.

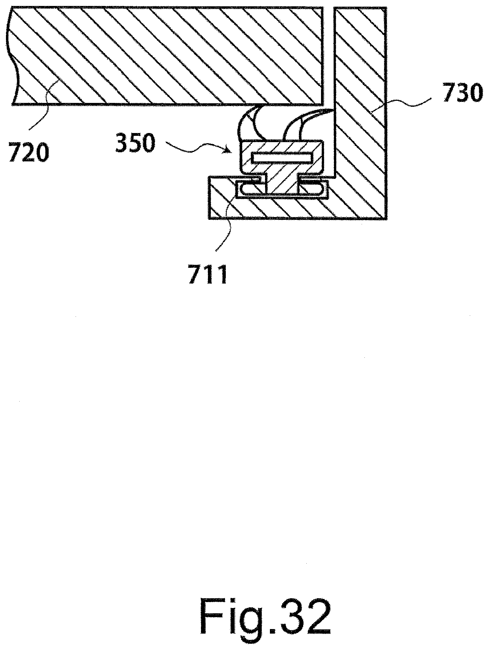

Fig. 32 is a schematic fragmentary cross-sectional view for illustrating the physical relationship between the tight member according to Example 26 and a door.

A door 720 shown in Fig. 32 can open and close relative to a frame 730. Even if said door 720 doesn't completely contact the frame 730, said door 720 contacts a fin portion 36 forming a protruding portion 20 of said tight member 350.

Also, a fixing portion 44 of a body portion 10 of said tight member 350 is inserted into the inside of groove portions 711 of the frame 730. By inserting said fixing portion 44 into said groove portions 711, said tight member 350 can be fixed to the frame 730.

A fin portion 36 for forming the protruding portion 20 of said tight member 350 is flexible. Therefore, when said door 720 is closed in the direction of the frame 730, the fin portion 36 of said tight member 350 deforms to block a gap between said door 720 and said frame 730.

The tight member 350 according to Example 26 can also be formed by simultaneous co-extrusion like the tight member 330 according to Example 24.

Said tight member 350 obtained can be applied to a building component having a door and a frame like the tight member 330 according to Example 24. Also, said tight member 350 is excellent in surface appearance and fire resistance.

### Example 27

### Structure of tight member 360

A tight member 360 according to Example 27 is an alternative embodiment of a tight member 350 according to Example 26.

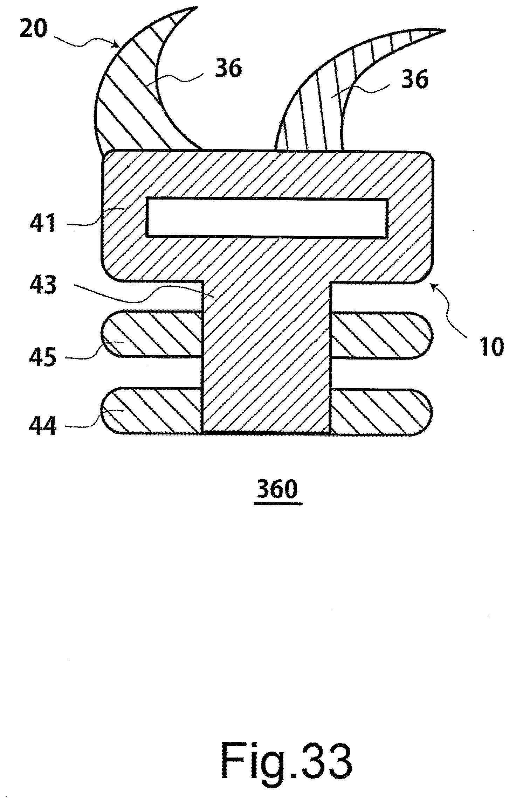

Fig. 33 is a schematic cross-sectional view for illustrating a tight member according to Example 27, and shows a cross-sectional shape based on a plane perpendicular to the longitudinal direction of a tight member according to Example 27.

In the tight member 350 according to Example 26, a body portion 10 comprises a cylinder portion 41 consisting of a thermally expandable resin composition layer, a connecting portion 43 consisting of a thermally expandable resin composition layer and fixing portions 44,44 consisting of a polyvinyl chloride resin composition layer comprising a soft polyvinyl chloride.

Meanwhile, the tight member 360 according to Example 27 is different in that the body portion 10 comprises expanding portions 45,45 consisting of a polyvinyl chloride resin composition layer comprising a soft polyvinyl chloride in said connecting portion 43.

Said tight member 360 can be fixed to said frame by using a frame having groove portions capable of fitting the body portion 10 of said tight member 360 as in Example 26.

The tight member 360 according to Example 27 can also be formed by simultaneous co-extrusion like the tight member 350 according to Example 26.

Said tight member 360 obtained can be applied to a building component having a door and a frame like the tight member 350 according to Example 26. Also, said tight member 360 is excellent in surface appearance and fire resistance.

### Example 28

### Structure of tight member 370

A tight member 370 according to Example 28 is an alternative embodiment of a tight member 300 according to Example 21.

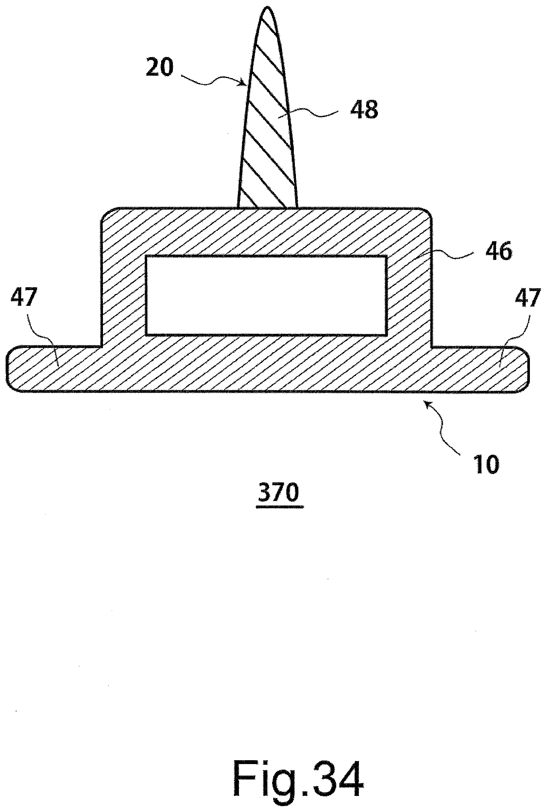

Fig. 34 is a schematic cross-sectional view for illustrating a tight member according to Example 28, and shows a cross-sectional shape based on a plane perpendicular to the longitudinal direction of a tight member according to Example 28.

In the tight member 300 according to Example 21, the shape of a protruding portion 20 corresponds to a fin portion 36 of approximate crescentic having no space inside and is provided at an end portion of said body portion 10.

Meanwhile, the tight member 370 according to Example 28 is different in that the protruding portion 20 consisting of a polyvinyl chloride resin composition layer comprising a soft polyvinyl chloride is provided in the central part of the body portion 10 consisting of a thermally expandable resin composition layer, and said protruding portion 20 is formed of a fin portion 48 having a tapered shape.

Said tight member 370 can be fixed to said frame by using a frame having groove portions capable of fitting the body portion 10 of said tight member 370 as in Example 21.

The tight member 370 according to Example 28 can also be formed by simultaneous co-extrusion like the tight member 300 according to Example 21.

Said tight member 370 obtained can be applied to a building component having a door and a frame like the tight member 130 according to Example 20. Also, said tight member 370 is excellent in surface appearance and fire resistance.

### Example 29

### Structure of tight member 380

A tight member 380 according to Example 29 is an alternative embodiment of a tight member 370 according to Example 28.

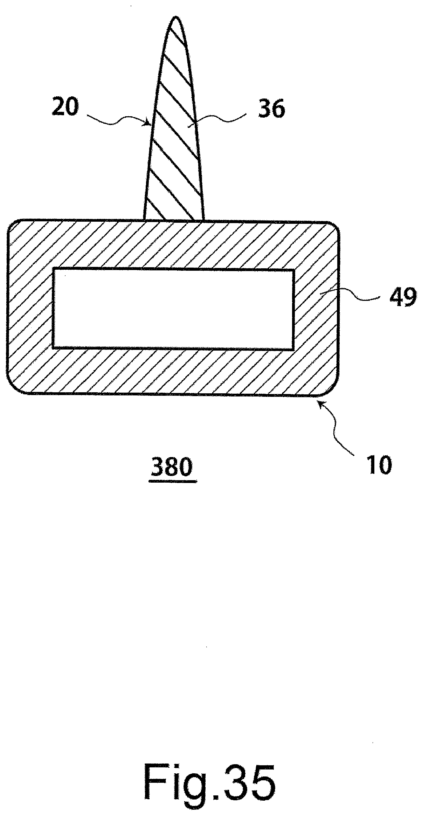

Fig. 35 is a schematic cross-sectional view of a tight member according to Example 29, and shows a cross-sectional shape based on a plane perpendicular to the longitudinal direction of a tight member according to Example 29.

In the tight member 370 according to Example 28, a body portion 10 comprises a cylinder portion 46 and a fixing portion 47 consisting of a thermally expandable resin composition layer.

Meanwhile, the tight member 380 according to Example 29 is different in that the body portion 10 is formed of a cylinder portion 49 consisting of a thermally expandable resin composition layer.

Said tight member 380 can be fixed to said frame by using a frame having groove portions capable of fitting the body portion 10 of said tight member 380 as in Example 28.

The tight member 380 according to Example 29 can also be formed by simultaneous co-extrusion like the tight member 370 according to Example 28.

Said tight member 380 obtained can be applied to a building component having a door and a frame like the tight member 370 according to Example 28. Also, said tight member 380 is excellent in surface appearance and fire resistance.

### Example 30

### Structure of tight member 390

A tight member 390 according to Example 30 is an alternative embodiment of a tight member 370 according to Example 28.

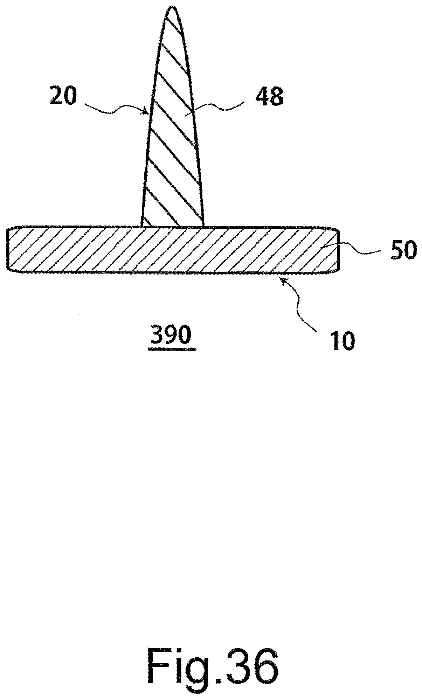

Fig. 36 is a schematic cross-sectional view for illustrating a tight member according to Example 30, and shows a cross-sectional shape based on a plane perpendicular to the longitudinal direction of tight member according to Example 30.

In the above member 370 according to Example 28, the body portion 10 comprises a cylinder portion 46 and a fixing portion 47 consisting of a thermally expandable resin composition layer.

Meanwhile, the tight member 390 according to Example 30 is different in that the body portion 10 is formed of a fixing portion 50 consisting of a thermally expandable resin composition layer.

Since the tight member 390 according to Example 30 is simple in structure and small in volume, it can be used as a small and light tight member, if a small and light tight member are necessary.

Said tight member 390 can be fixed to said frame by using a frame having groove portions capable of fitting the body portion 10 of said tight member 390 as in Example 28.

The tight member 390 according to Example 30 can also be formed by simultaneous co-extrusion like the tight member 370 according to Example 28.

Said tight member 390 obtained can be applied to a building component having a door and a frame like the tight member 370 according to Example 28. Also, said tight member 390 is excellent in surface appearance and fire resistance.

### Example 31

### Structure of tight member 400

A tight member 400 according to Example 31 is an alternative embodiment of a tight member 390 according to Example 30.

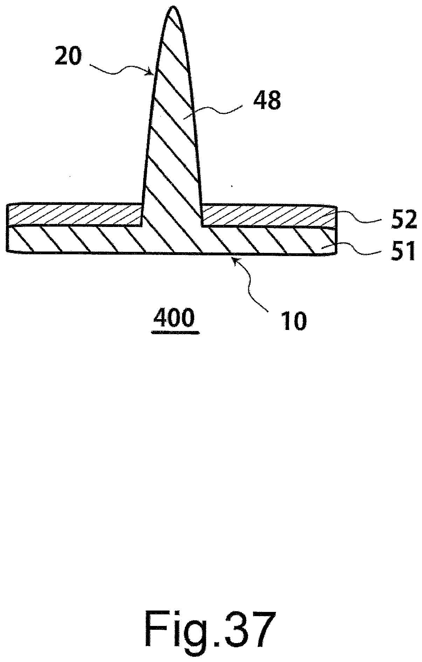

Fig. 37 is a schematic cross-sectional view for illustrating a tight member according to Example 31, and shows a cross-sectional shape based on a plane perpendicular to the longitudinal direction of a tight member according to Example 31.

In the above tight member 390 according to Example 30, the body portion 10 is formed of the fixing portion 50 consisting of a thermally expandable resin composition layer and a protruding portion 20 is formed of a fin portion 48 of a tapered shape consisting of a polyvinyl chloride resin composition layer comprising a soft polyvinyl chloride.

Meanwhile, the tight member 400 according to Example 31 is different in that the body portion 10 is obtained by laminating a fixing portion 51 consisting of a polyvinyl chloride resin composition layer comprising a soft polyvinyl chloride and a fixing portion 52 consisting of a thermally expandable resin composition layer.

Said tight member 400 can be fixed to said frame by using a frame having groove portions capable of fitting the body portion 10 of said tight member 400 as in Example 30.

The tight member 400 according to Example 31 can also be formed by simultaneous co-extrusion like the tight member 390 according to Example 30.

Said tight member 400 obtained can be applied to a building component having a door and a frame like the tight member 390 according to Example 30. Also, said tight member 400 is excellent in surface appearance and fire resistance.

### Example 32

### Structure of tight member 410

A tight member 410 according to Example 32 is an alternative embodiment of a tight member 390 according to Example 30.

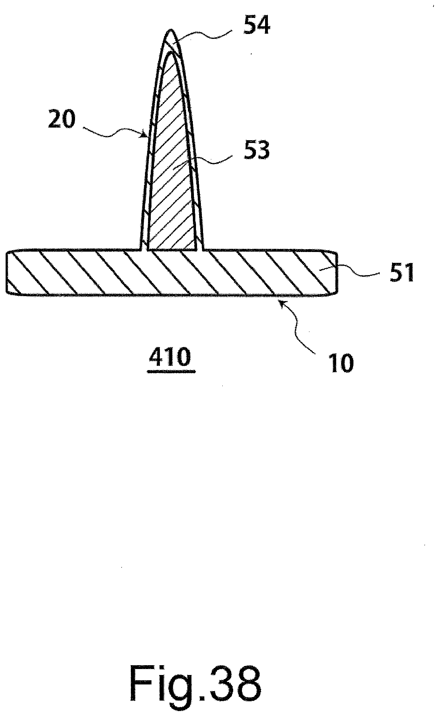

Fig. 38 is a schematic cross-sectional view for illustrating a tight member according to Example 32, and shows a cross-sectional shape based on a plane perpendicular to the longitudinal direction of a tight member according to Example 32.

In the above tight member 390 according to Example 30, the body portion 10 is formed of the fixing portion 50 consisting of a thermally expandable resin composition layer and the protruding portion 20 is formed of a fin portion 48 of a tapered shape consisting of a polyvinyl chloride resin composition layer comprising a soft polyvinyl chloride.

Meanwhile, the tight member 410 according to Example 32 is different in that the body portion 10 comprises a fixing portion 51 consisting of a polyvinyl chloride resin composition layer comprising a soft polyvinyl chloride, and the protruding portion 20 is obtained by laminating a fin portion 53 of a tapered shape consisting of a thermally expandable resin composition layer and a coating portion 54 consisting of a polyvinyl chloride resin composition layer comprising a soft polyvinyl chloride for covering an external surface of the fin portion 53 of the said tapered shape.

Said tight member 410 can be fixed to said frame by using a frame having groove portions capable of fitting the body portion 10 of said tight member 410 as in Example 30.

The tight member 410 according to Example 32 can also be formed by simultaneous co-extrusion like the tight member 390 according to Example 30.

Said tight member 410 obtained can be applied to a building component having a door and a frame like the tight member 390 according to Example 30. Also, said tight member 410 is excellent in surface appearance and fire resistance.

### Example 33

### Structure of gasket 420

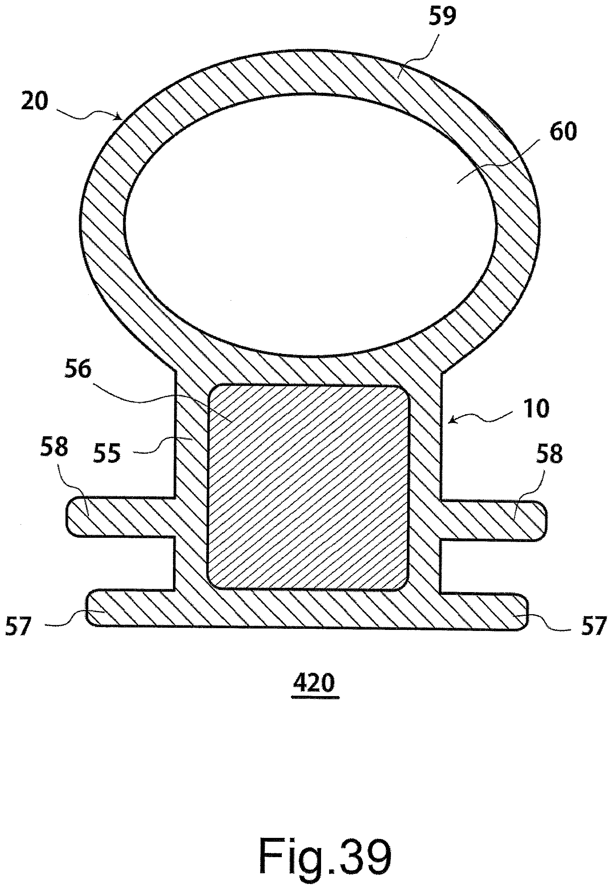

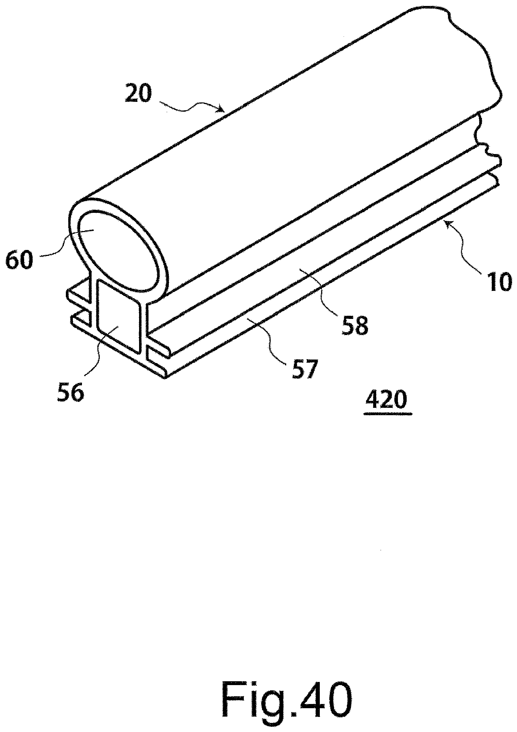

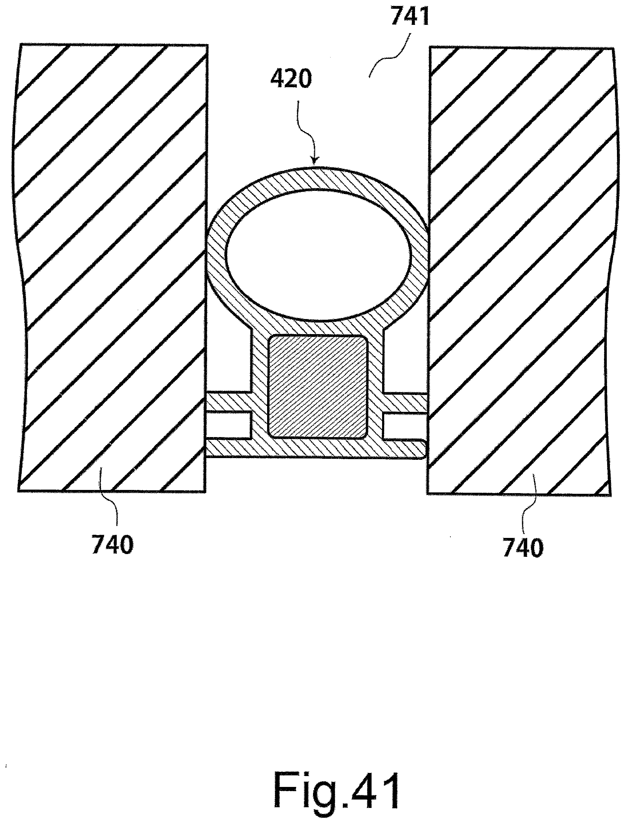

Fig. 39 is a schematic cross-sectional view for illustrating a gasket according to Example 33, and shows a cross-sectional shape based on a plane perpendicular to the longitudinal direction of a gasket according to Example 33. Fig. 40 is a schematic fragmentary perspective view for illustrating a gasket according to Example 33. Also, Fig. 41 is a schematic fragmentary cross-sectional view for illustrating the physical relationship between the gasket according to Example 33 and a wall.

A gasket 420 according to Example 33 comprises a body portion 10 obtained by laminating a thermally expandable resin composition layer and a polyvinyl chloride resin composition layer comprising a soft polyvinyl chloride resin and a protruding portion 20 consisting of a polyvinyl chloride resin composition layer comprising a soft polyvinyl chloride resin.

Said body portion 10 comprises a cylinder portion 55 and expanding portions 57,57 and 58,58, each oppositely protruding from said cylinder portion 55. The cylinder portion 55 and the expanding portions 57,57 and 58,58 consists of a polyvinyl chloride resin composition layer comprising a soft polyvinyl chloride resin. Also, said cylinder inner portion 56 is obtained by laminating thermally expandable resin composition layers.

Also, said protruding portion 20 consists of an arc portion 59. Said arc portion 59 comprises a polyvinyl chloride resin composition layer comprising a soft polyvinyl chloride resin.

A space 60 surrounded by said arc portion 59 and said cylinder portion 55 is formed inside said protruding portion 20.

The gasket 420 according to Example 33 can be inserted into a joint 741 of outer walls 740,740 shown in Fig. 41.

When said gasket 420 is inserted into said joint 741, the expanding portions 57,57,58,58 of said gasket 420 and said protruding portion 20 are interposed in the outer walls 740,740 to fix said gasket 420 to the inside of said joint 741.

Also, the expanding portions 58,58 of said gasket 420 and said protruding portion 20 are flexible. Therefore, when said gasket 420 is inserted into said joint 741, said joint 741 can be blocked by the expanding portions 57,57,58,58 and said protruding portion 20 of said gasket 420.

### Example for producing gasket 420

The method for producing the gasket 420 according to Example 33 is the same as in Example 1. Table 1 shows the compounding ratio of a resin composition used in simultaneous co-extrusion.

Said gasket 420 can be produced by simultaneous co-extrusion as in Example 1 by using a polychlorinated resin composition comprising a soft polyvinyl chloride used in forming said protruding portion 20 in Example 1 and using a polychlorinated resin composition comprising a soft polyvinyl chloride and a chlorinated polyvinyl chloride-comprising thermally expandable resin composition used in Example 1 to form said body portion 10.

A gasket 420 obtained is excellent in surface appearance.

### Action of gasket 420

A gasket 420 shown in Fig. 41 comprises a protruding portion 20 consisting of a thermoplastic resin composition layer and a body portion 10 consisting of a thermoplastic resin composition layer comprising a thermally expandable resin composition layer therein.

Said thermally expandable resin composition layer has a function of fire resistance because it expands in a thermal environment such as a fire. Also, said thermoplastic resin composition layer has a function of air tightness to block a joint 441 between outer walls 740,740 because it is flexible.

In this manner, the gasket 420 according to Example 33, having two or more resin composition layers having different functions, can be provided with a plurality of completely different functions.

Also, when outer walls 740,740 having a gasket 420 shown in Fig. 41 are subjected to a thermal environment such as a fire, the body portion 10 consisting of said thermally expandable resin composition layer expands. An expansion residue caused by the expansion blocks a joint 741 between outer walls 740,740.

Due to the expansion residue, entry of flame and smoke, etc., caused by a fire passing through the joint 741 between the outer walls 740,740 into a non-fire area can be retarded.

As stated above, the joint 741 of the outer walls 740,740 having the gasket 420 according to Example 33 is excellent in fire resistance.

### Example 34

### Structure of gasket 430

A gasket 430 according to Example 34 is an alternative embodiment of a gasket 420 according to Example 33.

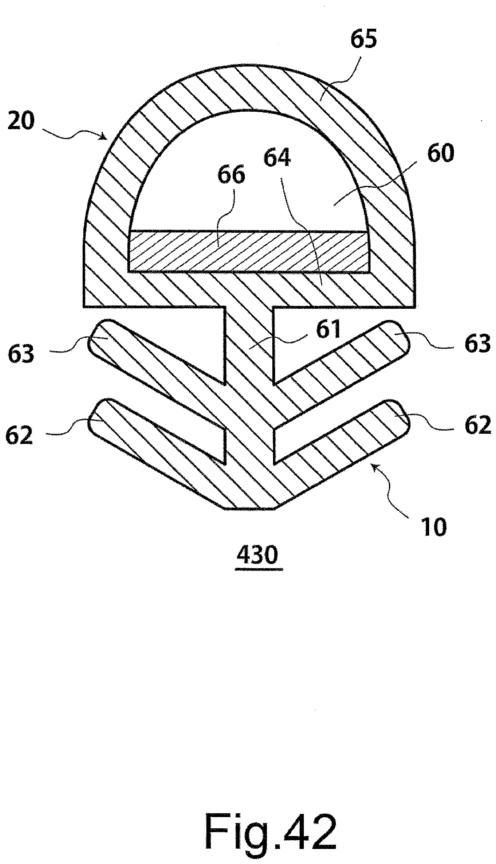

Fig. 42 is schematic cross-sectional view for illustrating a gasket according to Example 34, and shows a cross-sectional shape based on a plane perpendicular to the longitudinal direction of a gasket according to Example 34.

The gasket 420 according to Example 33 comprises a body portion 10 obtained by laminating a thermally expandable resin composition layer and a polyvinyl chloride resin composition layer comprising a soft polyvinyl chloride resin and a protruding portion 20 consisting of a polyvinyl chloride resin composition layer comprising a soft polyvinyl chloride resin.

Meanwhile, the gasket 430 according to Example 34 comprises a body portion 10 consisting of a polyvinyl chloride resin composition layer comprising a soft polyvinyl chloride resin and a protruding portion 20 obtained by laminating a polyvinyl chloride resin composition layer comprising a soft polyvinyl chloride resin and a thermally expandable resin composition layer.

Said body portion 10 comprises a shaft portion 61, a pedestal portion 64 orthogonal to the said shaft portion 61 and expanding portions 62,62 and 63,63, each oppositely and slantwise protruding from said shaft portion 61 toward the protruding portion 20. The shaft portion 61, the pedestal portion 64 and the expanding portions 62,62 and 63,63 each consists of a polyvinyl chloride resin composition layer comprising a soft polyvinyl chloride resin.

Also, said protruding portion 20 consists of an arc portion 65. Said arc portion 65 comprises a polyvinyl chloride resin composition layer comprising a soft polyvinyl chloride resin.

A space 60 surrounded by said arc portion 65 and said pedestal portion 64 is formed inside said protruding portion 20 and a cylinder inner portion 66 consisting of a thermally expandable resin composition layer is formed inside said space 60.

Said gasket 430 can be fixed to said joint by using an outer wall having a joint capable of inserting said gasket 430 as in Example 33.

The gasket 430 according to Example 34 can also be formed by simultaneous co-extrusion as the gasket 420 according to Example 33.

Said gasket 430 obtained can be applied to a building component having a door and a frame like the gasket 420 according to Example 33. Also, said gasket 430 is excellent in surface appearance and fire resistance.

### Example 35

### Structure of gasket 440

A gasket 440 according to Example 35 is an alternative embodiment of a gasket 430 according to Example 34.

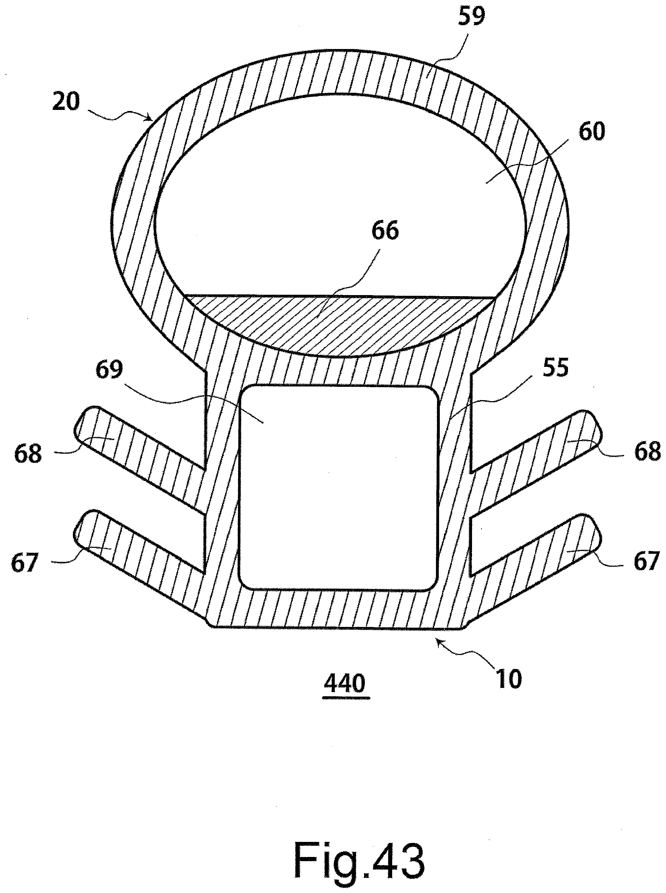

Fig. 43 is a schematic cross-sectional view for illustrating a gasket according to Example 35, and shows a cross-sectional shape based on a plane perpendicular to the longitudinal direction of a gasket according to Example 35.

The above gasket 430 according to Example 34 comprises a body portion 10 consisting of a polyvinyl chloride resin composition layer comprising a soft polyvinyl chloride resin and a protruding portion 20 obtained by laminating a polyvinyl chloride resin composition layer comprising a soft polyvinyl chloride resin and a thermally expandable resin composition layer.

Meanwhile, the gasket 440 according to Example 35 is provided with a cylinder portion 55 instead of a shaft portion 61 having a T-shaped cross section in Example 34 and a pedestal portion 64 orthogonal to said shaft portion 61.

Also, a space 69 is formed inside said cylinder portion 55.

Said gasket 440 can be fixed to said joint by using an outer wall having a joint capable of inserting said gasket 440 as in Example 34.

The gasket 430 according to Example 35 can also be formed by simultaneous co-extrusion like the gasket 430 according to Example 34.

Said gasket 440 obtained can be applied to a building component having a door and a frame like the gasket 430 according to Example 34. Also, said gasket 440 is excellent in surface appearance and fire resistance.

### Example 36

### Structure of glazing bead 450

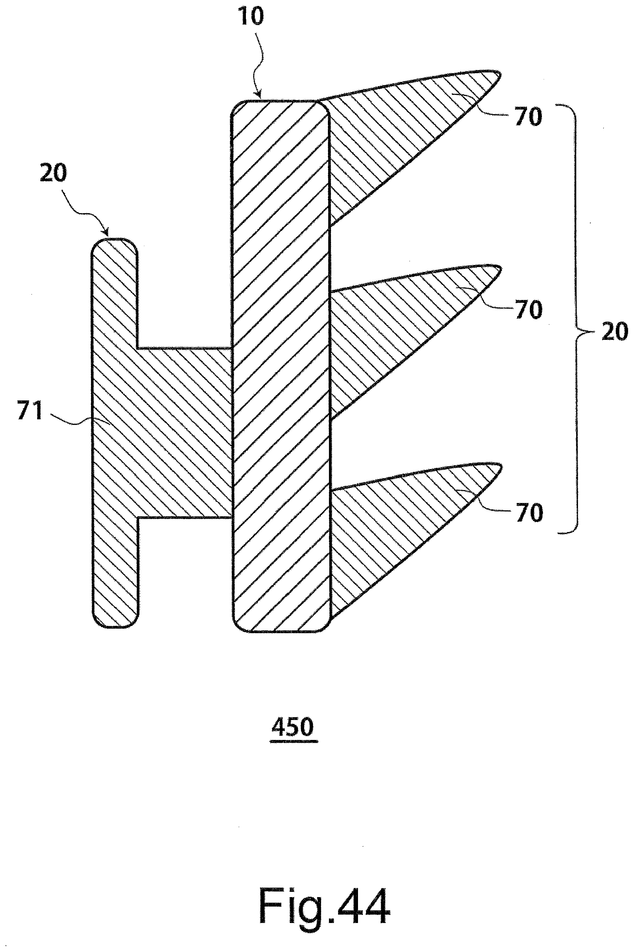

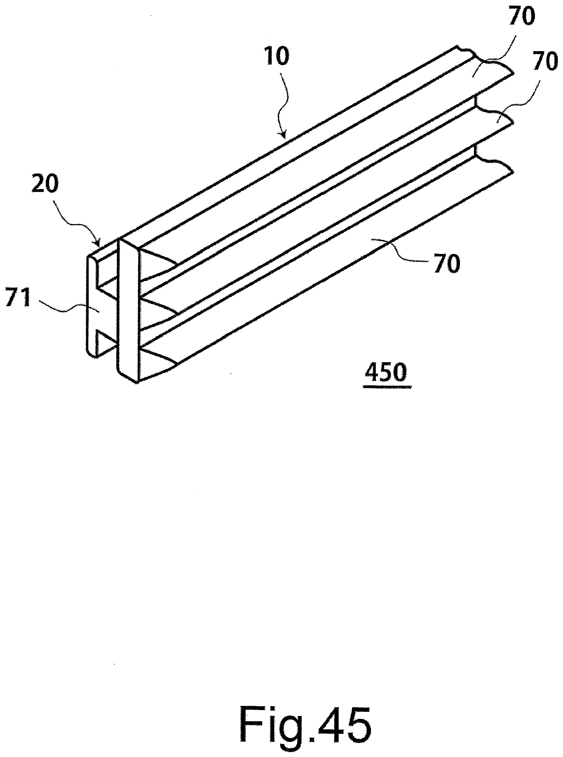

Fig. 44 is a schematic cross-sectional view for illustrating a glazing bead according to Example 36, and shows a cross-sectional shape based on a plane perpendicular to the longitudinal direction of a glazing bead according to Example 36. Fig. 45 is a schematic fragmentary perspective view for illustrating a glazing bead according to Example 36.

A glazing bead 450 according to Example 36 comprises a body portion 10 consisting of a thermally expandable resin composition layer and a protruding portion 20 consisting of a polyvinyl chloride resin composition layer comprising a soft polyvinyl chloride. Table 1 shows a compounding ratio of a resin composition used in simultaneous co-extrusion.

Said protruding portion 20 comprises fin portions 70,70,70 and a fixing portion 71.

### Example for producing glazing bead 450

The method for producing the glazing bead 450 according to Example 36 is the same as in Example 1. Table 1 shows a compounding ratio of a resin composition used in simultaneous co-extrusion.

Said glazing bead 450 can be produced by simultaneous co-extrusion as in Example 1 by using a polychlorinated resin composition comprising a soft polyvinyl chloride used in forming said protruding portion 20 in Example 1 and using a chlorinated polyvinyl chloride-comprising thermally expandable resin composition used in forming said body portion 10 in Example 1.

A glazing bead 450 obtained is excellent in surface appearance.

### Example 37

### Structure of glazing bead 460

A glazing bead 460 according to Example 37 is an alternative embodiment of a gasket 450 according to Example 36.

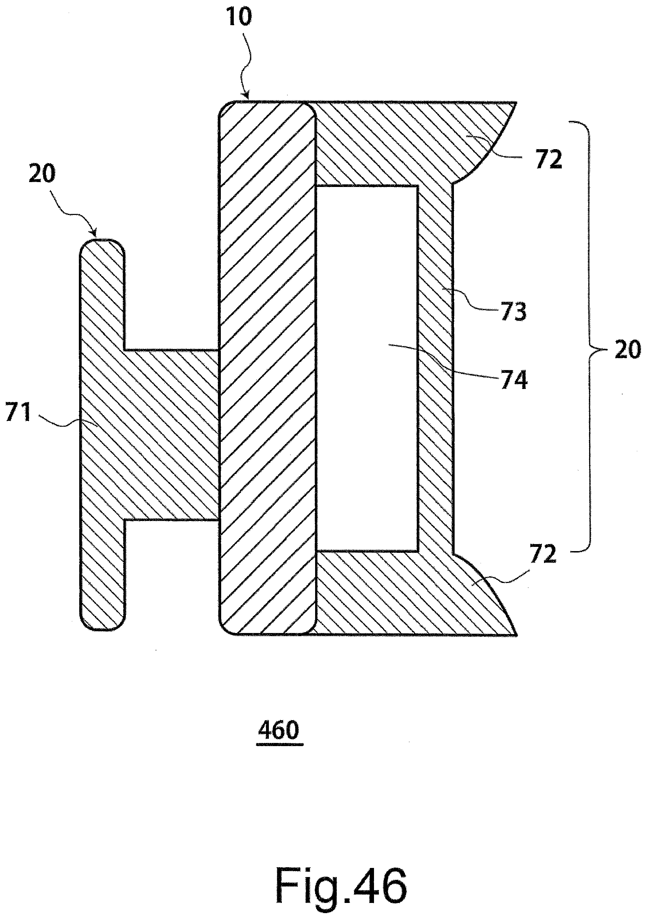

Fig. 46 is a schematic cross-sectional view for illustrating a glazing bead according to Example 37, and shows a cross-sectional shape based on a plane perpendicular to the longitudinal direction of a glazing bead according to Example 37. In the above glazing bead 450 according to Example 36, the fin portions 70,70,70 are provided in said body portion 10 at regular intervals.

Meanwhile, the glazing bead 460 according to Example 37 is different in that fin portions 72,72 are provided at both ends of said body portion 10 and said fin portions 72,72 are connected by a connecting portion 73, and in that a space 74 is formed by said fin portions 72,72, said connecting portion 73 and said body portion 10.

### Example for producing glazing bead 460

The method for producing the gasket 460 according to Example 37 is the same as in Example 1. Table 1 shows a compounding ratio of a resin composition used in simultaneous co-extrusion.

Said glazing bead 460 can be produced by simultaneous co-extrusion as in Example 1 by using a polychlorinated resin composition comprising a soft polyvinyl chloride used in forming said protruding portion 20 in Example 1 and using a chlorinated polyvinyl chloride-comprising thermally expandable resin composition used in forming said body portion 10 in Example 1.

A glazing bead 460 obtained is excellent in surface appearance.

### Action of glazing bead 460

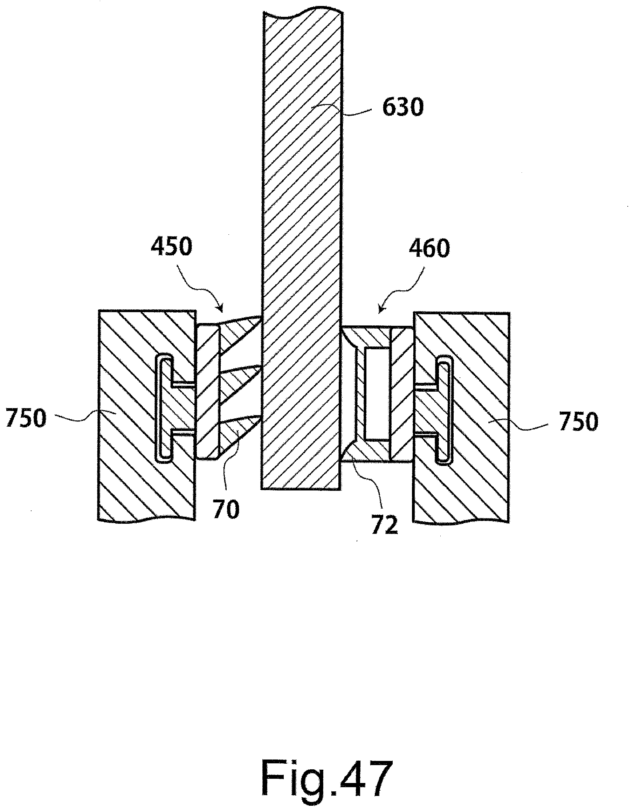

Fig. 47 is a schematic cross-sectional view for illustrating the physical relationship among a glazing bead 450 according to Example 36, a glazing bead 460 according to Example 37 and a glass.

A glass 630 can be held using said glazing beads 450,460 by providing said glazing beads 450,460 to a frame 750.

Fin portions 70,70,70 for forming a protruding portion 20 of the glazing bead 450 according to Example 36 and fin portions 72,72 for forming the protruding portion 20 of the glazing bead 460 according to Example 37 are each connected to the glass 630.

By holding the glass with the protruding portion 20 of said glazing bead 450 and the protruding portion 20 of said glazing bead 460, a function as a layer for protecting the glass 630 from external impact is defined.

Also, a thermally expandable resin composition layer for forming a body portion 10 of said glazing bead 450 and a body portion 10 of said glazing bead 460 has a function of fire resistance because it expands in a thermal environment such as a fire. In this manner, the glazing beads 450,460 according to Example 37, having two or more resin composition layers having different functions, can be provided with a plurality of completely different functions.

Said glazing beads 450,460 are each excellent in surface appearance and fire resistance.

### Example 38

### Structure of glazing bead 470

A glazing bead 470 according to Example 38 is an alternative embodiment of a glazing bead 460 according to Example 37.

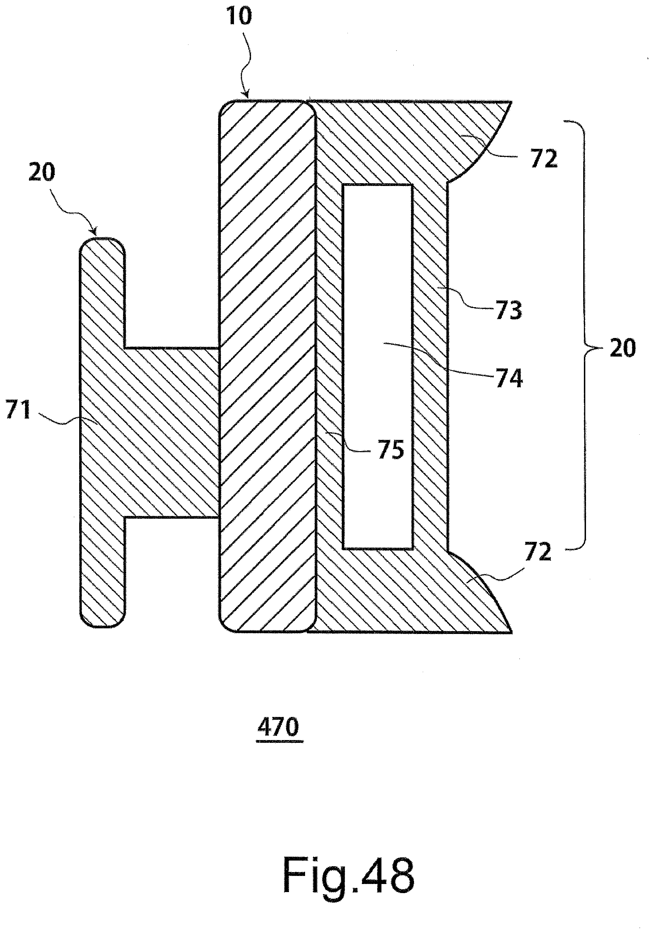

Fig. 48 is a schematic cross-sectional view for illustrating a glazing bead according to Example 38, and shows a cross-sectional shape based on a plane perpendicular to the longitudinal direction of a glazing bead according to Example 38. In the above glazing bead 460 according to Example 37, the fin portions 72,72 are provided at both ends of said body portion 10 and said fin portions 72,72 are connected by the connecting portion 73.

Meanwhile, the glazing bead 470 according to Example 38 is different in that a connecting portion 75 is provided so that it contacts said body portion 10.

A protruding portion 20 consisting of said fin portions 72,72 and connecting portions 73,75 is formed of a polychlorinated resin composition comprising a soft polyvinyl chloride and comprises a space 74 therein.

The glass can be held by said glazing bead 470 by fixing the glazing bead 470 according to Example 38 to a frame as in Example 37.

The glazing bead 470 according to Example 38 can also be formed by simultaneous co-extrusion like the glazing bead 460 according to Example 37.

Said glazing bead 470 obtained can be applied to a building component having a glass and a frame like the glazing bead 460 according to Example 37. Also, said glazing bead 460 is excellent in surface appearance and fire resistance.

### Example 39

### Structure of glazing bead 480

A glazing bead 480 according to Example 39 is an alternative embodiment of a glazing bead 450 according to Example 36.

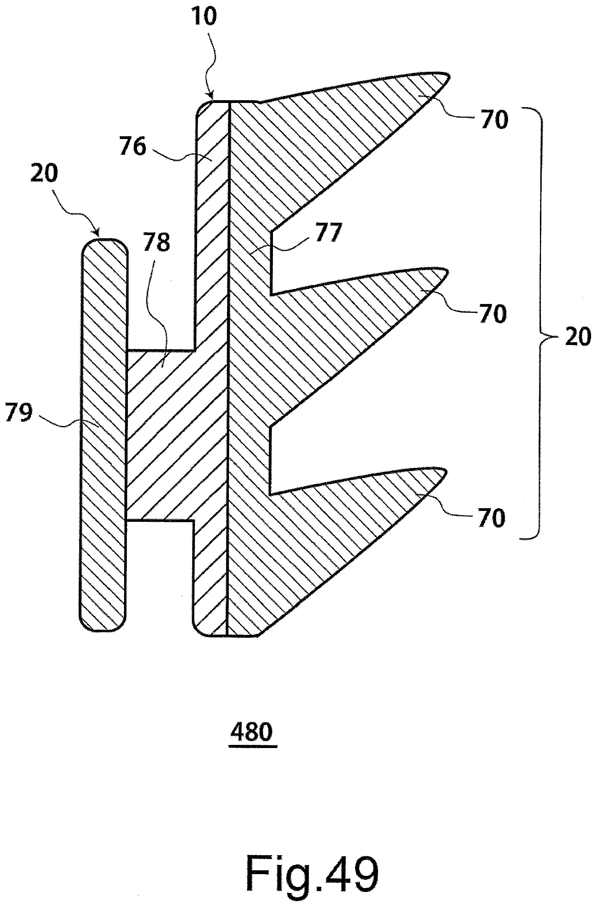

Fig. 49 is a schematic cross-sectional view for illustrating a glazing bead according to Example 39, and shows a cross-sectional shape based on a plane perpendicular to the longitudinal direction of a glazing bead according to Example 39.

In the glazing bead 450 according to Example 36, fin portions 70,70,70 consisting of a polychlorinated resin composition layer comprising a soft polyvinyl chloride are directly formed in a body portion 10 consisting of a thermally expandable resin composition layer.

Meanwhile, in the glazing bead 480 according to Example 39, said body portion 10 is obtained by laminating a plate-like portion 77 consisting of a polychlorinated resin composition layer comprising a soft polyvinyl chloride and a plate-like portion 76 consisting of a thermally expandable resin composition layer. Also, a fixing portion 79 consisting of a polychlorinated resin composition layer comprising a soft polyvinyl chloride is connected to a connecting portion 78 consisting of a thermally expandable resin composition layer.

The glass can be held by said glazing bead 480 by fixing the glazing bead 480 according to Example 39 to a frame as in Example 36.

The glazing bead 480 according to Example 39 can also be formed by simultaneous co-extrusion like the glazing bead 450 according to Example 36.

Said glazing bead 480 obtained can be applied to a building component having a glass and a frame like the glazing bead 450 according to Example 36. Also, said glazing bead 480 is excellent in surface appearance and fire resistance.

### Example 40

### Structure of glazing bead 490

A glazing bead 490 according to Example 40 is an alternative embodiment of a glazing bead 450 according to Example 36.

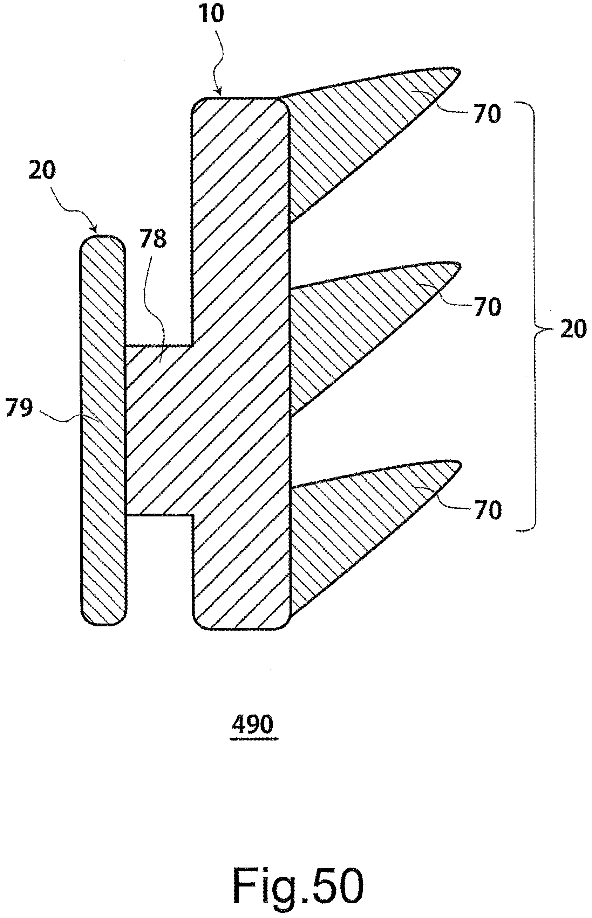

Fig. 50 is a schematic cross-sectional view for illustrating a glazing bead according to Example 40, and shows a cross-sectional shape based on a plane perpendicular to the longitudinal direction of a glazing bead according to Example 40.

In the above glazing bead 450 according to Example 36, the fixing portion 71 consisting of a polychlorinated resin composition layer comprising a soft polyvinyl chloride is formed in the body portion 10 consisting of a thermally expandable resin composition layer.

Meanwhile, in the glazing bead 490 according to Example 40, said body portion 10 consisting of a thermally expandable resin composition layer and a fixing portion 79 consisting of a polychlorinated resin composition layer comprising a soft polyvinyl chloride are connected by a connecting portion 78 consisting of a thermally expandable resin composition layer.

The glass can be held by said glazing bead 490 by fixing a glazing bead 490 according to Example 40 to a frame as in Example 36.

The glazing bead 490 according to Example 40 can also be formed by simultaneous co-extrusion like the glazing bead 450 according to Example 36.

Also, said glazing bead 490 obtained can be applied to a building component having a glass and a frame like the glazing bead 450 according to Example 36. Said glazing bead 490 is excellent in surface appearance and fire resistance.

### Example 41

### Structure of glazing bead. 500

A glazing bead 500 according to Example 41 is an alternative embodiment of a glazing bead 490 according to Example 40.

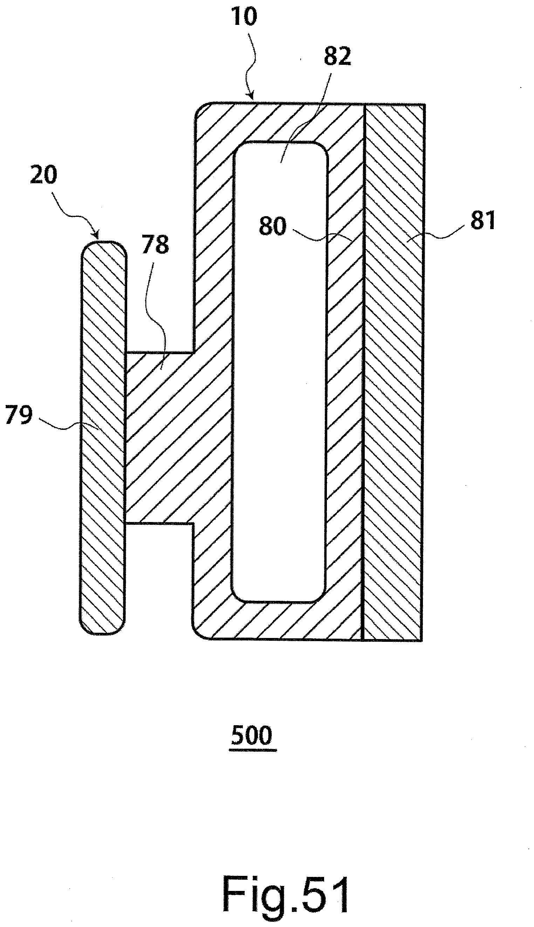

Fig. 51 is a schematic cross-sectional view of a glazing bead according to Example 41, and shows a cross-sectional shape based on a plane perpendicular to the longitudinal direction of a glazing bead according to Example 41.

In the above glazing bead 490 according to Example 40, no space is provided inside the body portion 10 consisting of a thermally expandable resin composition layer. Meanwhile, the glazing bead 500 according to Example 41 is different in that said body portion 10 comprises a cylinder portion 80 consisting of a thermally expandable resin composition layer.

Also, it is also different in that instead of fin portions 70,70,70 in the above glazing bead 490 according to Example 40, a plate-like portion 81 comprising a polychlorinated resin composition layer comprising a soft polyvinyl chloride is provided.

The glass can be held by said glazing bead 500 by fixing a glazing bead 500 according to Example 41 to a frame as in Example 40.

The glazing bead 500 according to Example 41 can also be formed by simultaneous co-extrusion like the glazing bead 490 according to Example 40.
Said glazing bead 500 obtained can be applied to a building component having a glass and a frame like the glazing bead 490 according to Example 40. Also, said glazing bead 500 is excellent in surface appearance and fire resistance.

### Comparative Examples 1 and 2

According to a compounding ratio shown in Table 1, forming was performed as in Example 1. Ammonium polyphosphate used was "AP422" (Product from Clariant (Japan) K.K.).

In both Comparative Examples 1 and 2, adhesion of a resin composition was observed on an extruder screw and a mold.

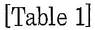

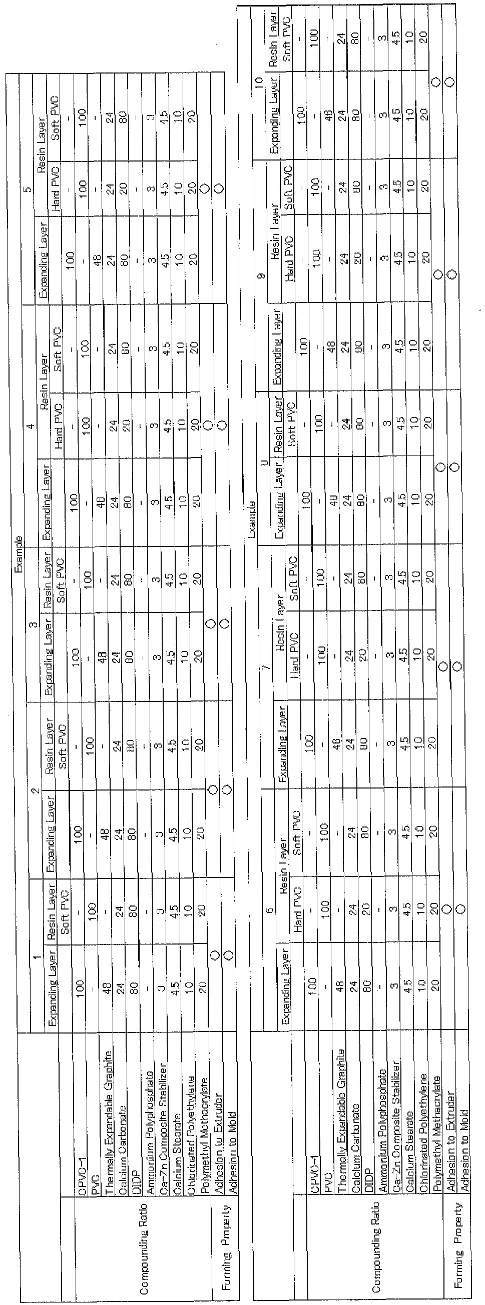

Incidentally, in Tables 1 to 5, an expanding layer is an approximate form of a thermally expandable resin composition layer, and a resin layer is an approximate form of a thermoplastic resin composition layer. A hard PVC is an approximate form of a hard polyvinyl chloride and the amount of a plasticizer is preferably 0 or more and under 40 parts by weight. A soft PVC is an approximate form of a soft polyvinyl chloride and the amount of a plasticizer is preferably 40 parts by weight or more.

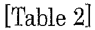

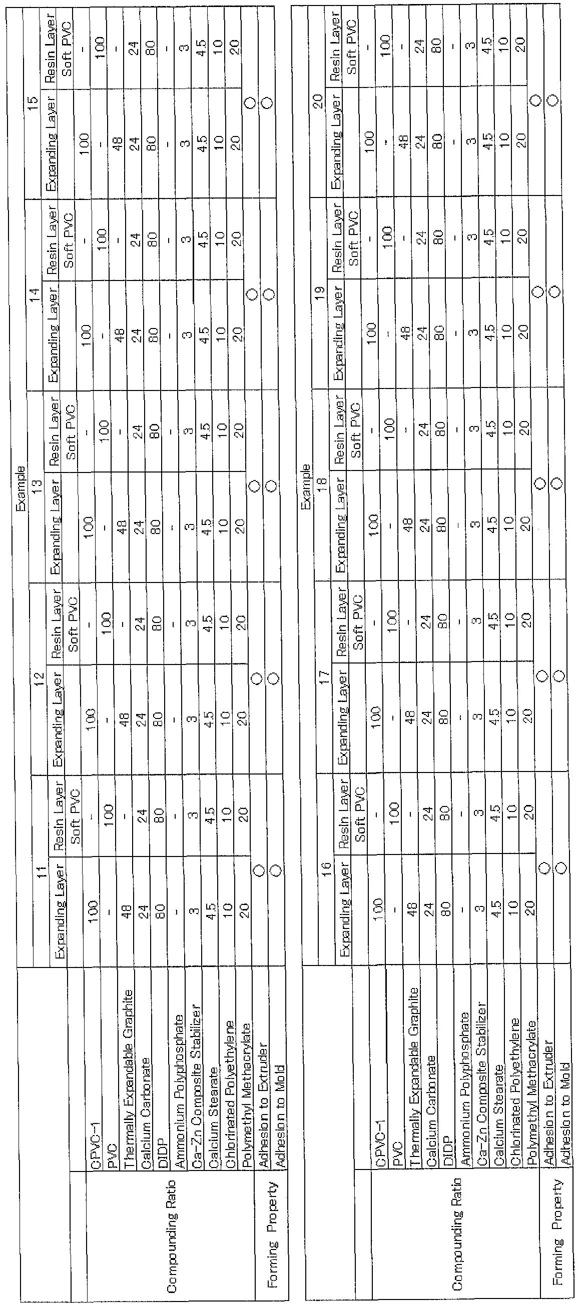

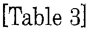

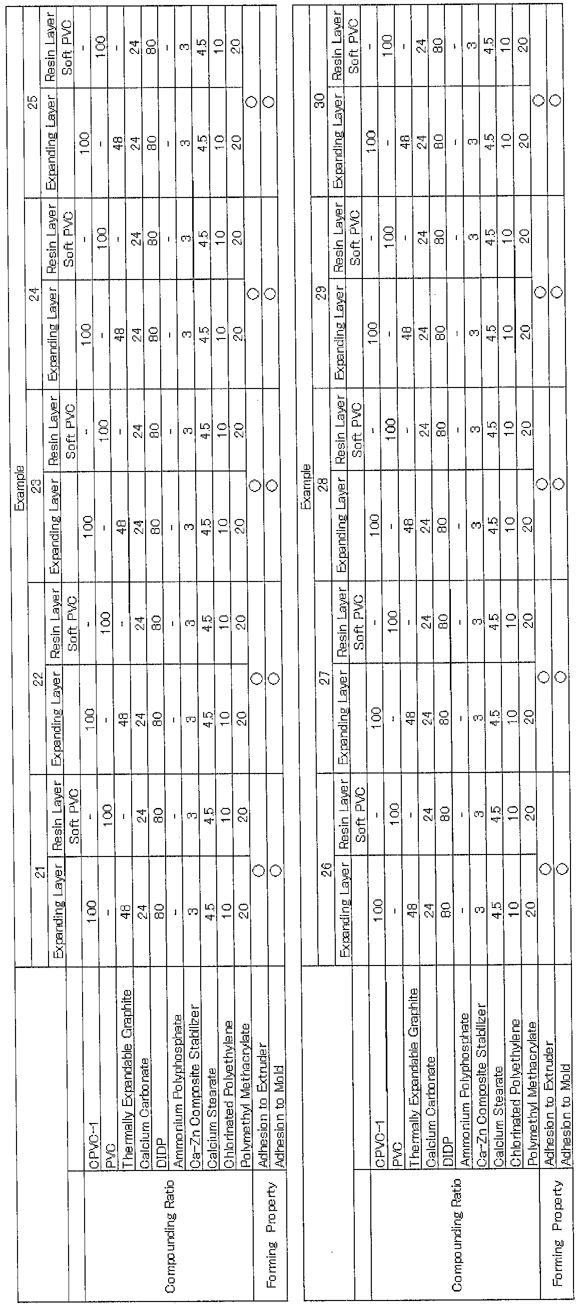

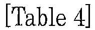

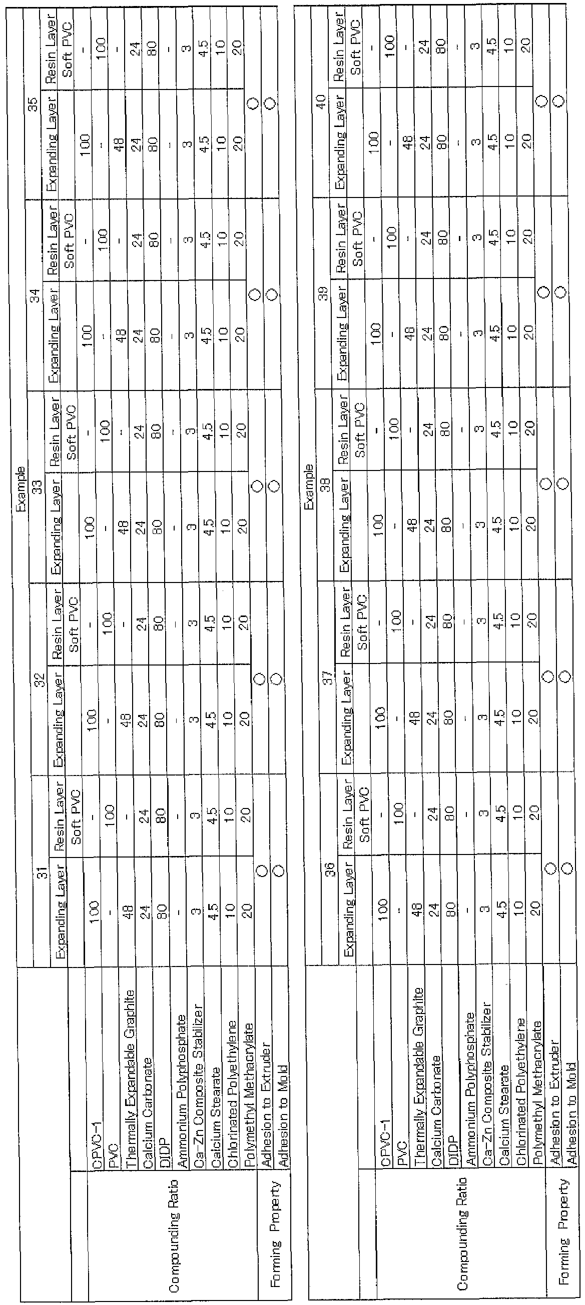

**[Table 5]**

| | | Example | | Comparative Example | |
|---|---|---|---|---|---|
| | | 41 | | 1 | 2 |
| | | Expanding Layer | Resin Layer | Expanding Layer | Expanding Layer |
| | | | Soft PVC | | |
| Compounding Ratio | CPVC-1 | 100 | - | - | 100 |
| | PVC | - | 100 | 100 | - |
| | Thermally Expandable Graphite | 48 | - | 54 | 48 |
| | Calcium Carbonate | 24 | 24 | 27 | 24 |
| | DIDP | 80 | 80 | 80 | 80 |
| | Ammonium Polyphosphate | - | - | 27 | 24 |
| | Ca-Zn Composite Stabilizer | 3 | 3 | 3 | 3 |
| | Calcium Stearate | 4.5 | 4.5 | 4.5 | 4.5 |
| | Chlorinated Polyethylene | 10 | 10 | 10 | 10 |
| | Polymethyl Methacrylate | 20 | 20 | 20 | 20 |
| Forming Property | Adhesion to Extruder | ○ | | × | × |
| | Adhesion to Mold | ○ | | × | × |

### Example 42

### Structure of glazing channel 510

Example 42 is an alternative embodiment of Example 2.

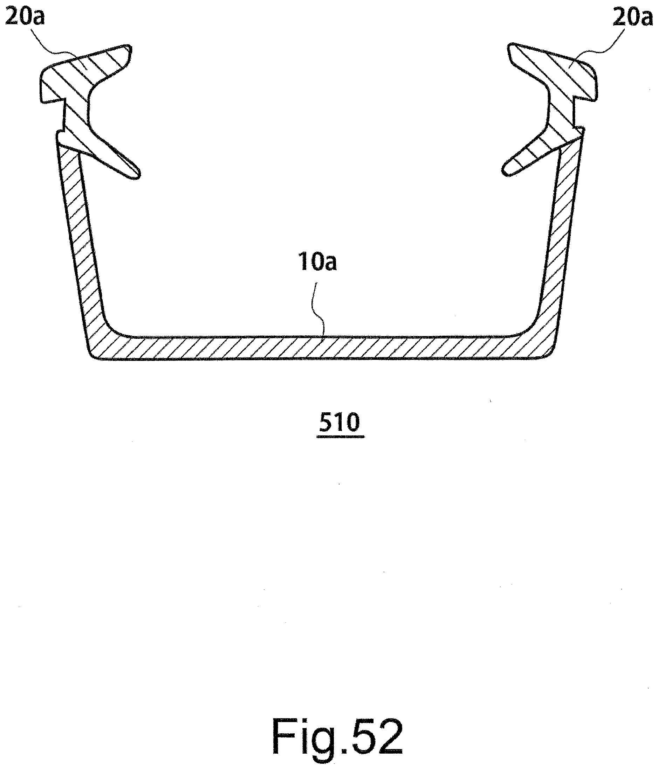

Fig. 52 is a schematic cross-sectional view for illustrating a glazing channel according to Example 42.

In a glazing channel 110 according to Example 2, said protruding portion 20 is a polyvinyl chloride resin composition layer, and said body portion 10 is a thermally expandable resin composition layer.

Meanwhile, a glazing channel 520 according to Example 42 is different in that said protruding portion 20a is an EPDM resin composition layer, and said body portion 10a is an EPDM-comprising a thermally expandable resin composition layer.

Table 6 shows compounding examples to be used in Example 42. A glazing channel 510 according to Example 42 can be obtained according to a compounding ratio shown in Table 2 as in Example 2.

### Example 43

### Structure of glazing channel 520

Example 43 is an alternative embodiment of Example 2.

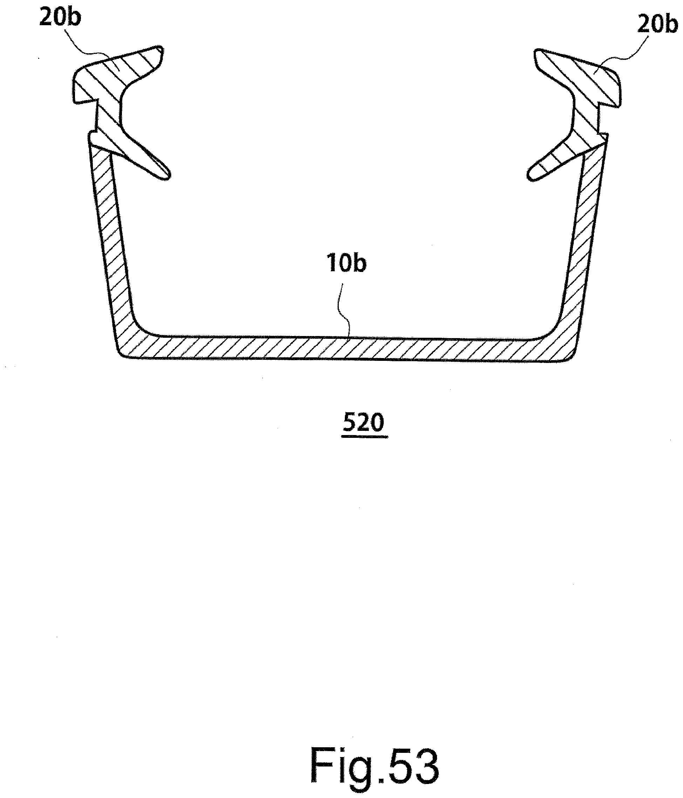

Fig. 53 is a schematic cross-sectional view for illustrating a glazing channel according to Example 43.

In a glazing channel 110 according to Example 2, said protruding portion 20 is a polyvinyl chloride resin composition layer, and said body portion 10 is a thermally expandable resin composition layer.

Meanwhile, a glazing channel 520 according to Example 43 is different in that said protruding portion 20b is an EPDM-comprising a thermally expandable resin composition layer, and said body portion 10b is an EPDM resin composition layer.

Table 6 shows compounding examples to be used in Example 43. A glazing channel 520 according to Example 43 can be obtained according to a compounding ratio shown in Table 2 as in Example 2.

### Example 44

### Structure of tight member 530

A tight member 530 according to Example 44 is an alternative embodiment of a tight member 270 according to Example 18.

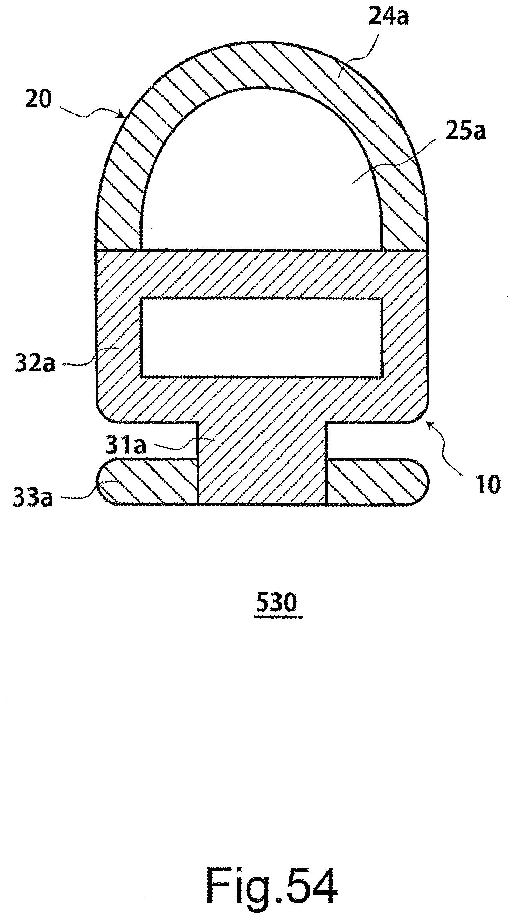

Fig. 54 is a schematic cross-sectional view for illustrating a tight member according to Example 44, and shows a cross-sectional shape based on a plane perpendicular to the longitudinal direction of a tight member according to Example 44.

The above tight member 270 according to Example 18 comprises a body portion 10 consisting of a thermally expandable resin composition layer, a fixing portion 33 consisting of a polyvinyl chloride resin composition layer comprising a soft polyvinyl chloride and a protruding portion 20 consisting of a polyvinyl chloride resin composition layer comprising a soft polyvinyl chloride, and a body portion 10 consisting of a thermally expandable resin composition layer comprises a connecting portion 31 consisting of a thermally expandable resin composition layer. The fixing portion 33 and the cylinder portion 32 are connected by said connecting portion 31.

Meanwhile, the tight member 530 according to Example 44 is different in that an EPDM is used instead of a chlorinated polyvinyl chloride resin used in a thermally expandable resin composition layer.

Also, it is different in that an EPDM is used instead of a soft polyvinyl chloride used in a polyvinyl chloride resin composition layer comprising a soft polyvinyl chloride. Said tight member 530 can be fixed to said frame by using a frame having groove portions capable of fitting the body portion 10 of said tight member 530 as in Example 18.

The tight member 530 according to Example 44 can also be formed by simultaneous co-extrusion like the tight member 270 according to Example 18.

Said tight member 530 obtained can be applied to a building component having a door and a frame like the tight member 270 according to Example 18. Also, said tight member 530 is excellent in surface appearance and fire resistance.

### Example 45

### Structure of gasket 540

A gasket 540 according to Example 45 is an alternative embodiment of a gasket 420 according to Example 33.

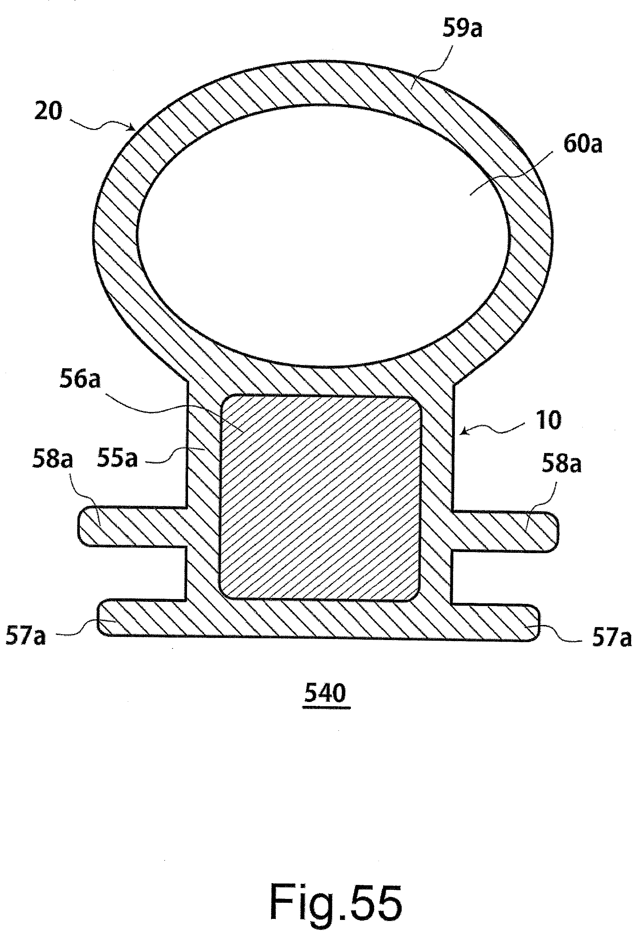

Fig. 55 is a schematic cross-sectional view for illustrating a according to Example 45, and shows a cross-sectional shape based on a plane perpendicular to the longitudinal direction of a tight member according to Example 33.

The above gasket 420 according to Example 33 comprises a body portion 10 obtained by laminating a thermally expandable resin composition layer and a polyvinyl chloride resin composition layer comprising a soft polyvinyl chloride resin and a protruding portion 20 consisting of a polyvinyl chloride resin composition layer comprising a soft polyvinyl chloride resin.

A cylinder portion 55 contained in said body portion 10 and expanding portions 57,57 and 58,58, each oppositely protruding from said cylinder portion 55, are each formed of a polyvinyl chloride resin composition layer comprising a soft polyvinyl chloride resin. Also, said cylinder inner portion 56 is obtained by laminating thermally expandable resin composition layers.

Additionally, said protruding portion 20 comprises an arc portion 59, and said arc portion 59 is formed of a polyvinyl chloride resin composition layer comprising a soft polyvinyl chloride resin.

A space 60 surrounded by said arc portion 59 and said cylinder portion 55 is formed inside said protruding portion 20.

Meanwhile, the gasket 540 according to Example 45 is different in that an EPDM is used instead of a chlorinated polyvinyl chloride resin used in a thermally expandable resin composition layer.

Also, it is different in that an EPDM is used instead of a soft polyvinyl chloride used in a polyvinyl chloride resin composition layer comprising a soft polyvinyl chloride.

Said gasket 540 can be fixed to said joint by using an outer wall having a joint capable of inserting said gasket 540 as in Example 33.

The gasket 540 according to Example 45 can also be formed by simultaneous co-extrusion like the gasket 420 according to Example 33.

Said gasket 540 obtained can be applied to a building component having a door and a frame like the gasket 420 according to Example 33. Also, said gasket 540 is excellent in surface appearance and fire resistance.

### INDUSTRIAL APPLICABILITY

The thermally expandable multilayer packing for a building material according to the present invention can readily improve fire resistance of a building material and add various functions, thereby providing various uses as building and marine materials that require favorable fire resistance.

**[Table 6]**

| | | Example | | | | | | | |
|---|---|---|---|---|---|---|---|---|---|
| | | 42 | | 43 | | 44 | | 45 | |
| | | Expanding Layer | Resin Layer | Expanding Layer | Resin Layer | Expanding Layer | Resin Layer | Expanding Layer | Resin Layer |
| Compounding Ratio | EPDM | 100 | 100 | 100 | 100 | 100 | 100 | 100 | 100 |
| | Carbon Black | 2 | 2 | 2 | 2 | 2 | 2 | 2 | 2 |
| | Process Oil | 40 | 40 | 40 | 40 | 40 | 40 | 40 | 40 |
| | Fatty Acid Ester Plasticizer | 14 | 14 | 14 | 14 | 14 | 14 | 14 | 14 |
| | Calcium Carbonate | 130 | 150 | 100 | 150 | 130 | 150 | 100 | 150 |
| | Thermally Expandable Graphite | 20 | - | 50 | - | 20 | - | 50 | - |
| | Zinc Oxide | 5 | 5 | 5 | 5 | 5 | 5 | 5 | 5 |
| | Stearic Acid | 1 | 1 | 1 | 1 | 1 | 1 | 1 | 1 |
| | Sulfur | 1 5 | 1.5 | 1.5 | 1.5 | 1.5 | 1.5 | 1.5 | 1.5 |
| | Tellurium Diethyldithio carbamate | 4 | 4 | 4 | 4 | 4 | 4 | 4 | 4 |
| Forming Property | Adhesion to Extruder | ○ | | ○ | | ○ | | ○ | |
| | Adhesion to Mold | ○ | | ○ | | ○ | | ○ | |

### EXPLANATION OF REFERENCE NUMERALS

1 Lower Wall
2 Side Wall
4 Inner Lower Wall
5 Outer Lower Wall
6 Inner Side Wall
7 Outer Side Wall
8 Outer Body Portion
10, 10a, 10b Body Portion
14, 15, 16 Boundary
20, 20a, 20b Protruding Portion
21a Outer Fin
21b Inner Fin
21c Groove Portion
23, 27, 29, 32, 32a, 41, 46, 49, 55, 55a, 80 Cylinder Portion
24, 24a, 59, 59a, 65 Arc Portion
25, 25a, 38, 60, 60a, 69, 74, 82 Space
22, 26, 33, 33a, 37, 40, 42, 44, 47, 50, 51, 52, 71, 79 Fixing Portion
30, 39, 56, 56a, 66 Cylinder Inner Portion
31, 31a, 43, 73, 75, 78 Connecting Portion
34, 45, 57, 57a, 58, 58a, 62, 63 Expanding Portion
35, 76, 77, 81 Plate-like Portion
36, 48, 53, 70, 72 Fin Portion
54 Coating Portion
61 Shaft Portion
64 Pedestal Portion
100, 110, 120, 130, 140, 150, 160, 170, 180, 190, 200, 510, 520 Glazing Channel
210, 220, 230, 240, 250, 260, 270, 280, 290, 300, 310, 320, 330, 340, 350, 360, 370, 380, 390, 400, 410, 530 Tight Member
420, 430, 440, 540 Gasket
450, 460, 470, 480, 490, 500 Glazing Bead
600 Glass Panel
601 End Face of Glass Panel
610 Peripheral Portion of Glass Panel
620 Sash
630 Glass
700, 720 Door
710, 730, 750 Frame
711 Groove Portion
740 Outer Wall
741 Joint

## Claims

1. A thermally expandable multilayer packing for a building material consists of a protruding portion and a body portion in a cross-sectional shape based on a plane perpendicular to the longitudinal direction, wherein
said thermally expandable multilayer packing for a building material consists of two or more resin composition layers comprising at least a thermally expandable resin composition layer and a thermoplastic resin composition layer,
a thermally expandable resin composition forming said thermally expandable resin composition layer comprises 100 parts by weight of a resin component, 3 to 300 parts by weight of a thermally expandable graphite, 3 to 200 parts by weight of an inorganic filler and 20 to 200 parts by weight of a plasticizer,
a resin component contained in said thermally expandable resin composition comprises a chlorinated polyvinyl chloride resin whose chlorine content is 60 to 72% by weight and/or an EPDM,
the resin composition does not contain a phosphorus compound other than optionally a phosphate ester plasticizer such as trimethyl phosphate and triethyl phosphate, and
said thermally expandable resin composition layer and said thermoplastic resin composition layer are formed of said thermally expandable resin composition and said thermoplastic resin composition by simultaneous co-extrusion, respectively.

2. The thermally expandable multilayer packing for a building material according to the above Claim 1, wherein the boundary between a thermally expandable resin composition layer and a thermoplastic resin composition layer in a cross section of said thermally expandable multilayer packing for a building material based on a plane perpendicular to a direction of said simultaneous co-extrusion comprises a curve and/or a broken line.

3. The thermally expandable multilayer packing for a building material according to the above Claim 1, wherein part or all of a body portion contained in said thermally expandable multilayer packing for a building material comprises a thermally expandable resin composition layer.

4. The thermally expandable multilayer packing for a building material according to the above Claim 2, wherein part or all of a body portion contained in said thermally expandable multilayer packing for a building material comprises a thermally expandable resin composition layer.

5. The thermally expandable multilayer packing for a building material according to the above Claim 3, wherein said thermoplastic resin composition layer comprises at least one selected from the group consisting of a polyvinyl chloride resin composition, a chlorinated polyvinyl chloride resin composition and an EPDM resin composition.

6. The thermally expandable multilayer packing for a building material according to the above Claim 4, wherein said thermoplastic resin composition layer comprises at least one selected from the group consisting of a polyvinyl chloride resin composition, a chlorinated polyvinyl chloride resin composition and an EPDM resin composition.

7. The thermally expandable multilayer packing for a building material according to the above Claim 5, wherein said thermally expandable resin composition comprises at least one selected from the group consisting of a heat stabilizer, a lubricant, a processing auxiliary, a pyrolytic foaming agent, an antioxidant, an antistatic agent, a pigment, a crosslinking agent and a crosslinking promoter.

8. The thermally expandable multilayer packing for a building material according to the above Claim 6, wherein said thermally expandable resin composition comprises at least one selected from the group consisting of a heat stabilizer, a lubricant, a processing auxiliary, a pyrolytic foaming agent, an antioxidant, an antistatic agent, a pigment, a crosslinking agent and a crosslinking promoter.

9. The thermally expandable multilayer packing for a building material according to the above Claim 7, wherein said thermally expandable multilayer packing for a building material is any of a glazing channel, a tight member, a gasket or a glazing bead.

10. The thermally expandable multilayer packing for a building material according to the above Claim 8, wherein said thermally expandable multilayer packing for a building material is any of a glazing channel, a tight member, a gasket or a glazing bead.

## Patentansprüche

1. Thermisch expandierbare Mehrschichtverpackung für ein Baumaterial, bestehend aus einem hervorstehenden Abschnitt und einem Körperabschnitt in einer Querschnittsform, basierend auf einer Ebene senkrecht zu der Längsrichtung, wobei
die thermisch expandierbare Mehrschichtverpackung für ein Baumaterial aus zwei oder mehreren Harzzusammensetzungsschichten besteht, umfassend mindestens eine thermisch expandierbare Harzzusammensetzungsschicht und eine thermoplastische Harzzusammensetzungsschicht,
eine thermisch expandierbare Harzzusammensetzung, welche die thermisch expandierbare Harzzusammensetzungsschicht bildet, 100 Gewichtsteile einer Harzkomponente, 3 bis 300 Gewichtsteile eines thermisch expandierbaren Graphits, 3 bis 200 Gewichtsteile eines anorganischen Füllstoffs und 20 bis 200 Gewichtsteile eines Weichmachers umfasst,
eine Harzkomponente, welche in der thermisch expandierbaren Harzzusammensetzung enthalten ist, ein chloriertes Polyvinylchloridharz, dessen Chlorgehalt 60 bis 72 Gew.-% beträgt, und/oder ein EPDM umfasst,
die Harzzusammensetzung keine Phosphorverbindung enthält, abgesehen von wahlweise einem Phosphatester-Weichmacher, wie Trimethylphosphat und Triethylphosphat, und
die thermisch expandierbare Harzzusammensetzungsschicht und die thermoplastische Harzzusammensetzungsschicht aus der thermisch expandierbaren Harzzusammensetzung beziehungsweise der thermoplastischen Harzzusammensetzung durch gleichzeitige Koextrusion gebildet sind.

2. Thermisch expandierbare Mehrschichtverpackung für ein Baumaterial nach Anspruch 1, wobei die Grenzlinie zwischen einer thermisch expandierbaren Harzzusammensetzungsschicht und einer thermoplastischen Harzzusammensetzungsschicht in einem Querschnitt der thermisch expandierbaren Mehrschichtverpackung für ein Baumaterial, basierend auf einer Ebene senkrecht zu einer Richtung der gleichzeitigen Koextrusion eine Kurve und/oder eine unterbrochene Linie umfasst.

3. Thermisch expandierbare Mehrschichtverpackung für ein Baumaterial nach Anspruch 1, wobei ein Teil oder der gesamte Körperabschnitt, welcher in der thermisch expandierbaren Mehrschichtverpackung für ein Baumaterial enthalten ist, eine thermisch expandierbare Harzzusammensetzungsschicht umfasst.

4. Thermisch expandierbare Mehrschichtverpackung für ein Baumaterial nach Anspruch 2, wobei ein Teil oder der gesamte Körperabschnitt, der in dem thermisch expandierbaren Mehrschichtverpackung für ein Baumaterial enthalten ist, eine thermisch expandierbare Harzzusammensetzungsschicht umfasst.

5. Thermisch expandierbare Mehrschichtverpackung für ein Baumaterial nach Anspruch 3, wobei die thermoplastische Harzzusammensetzungsschicht mindestens eines umfasst, gewählt aus der Gruppe, bestehend aus einer Polyvinylchloridharzzusammensetzung, einer chlorierten Polyvinylchloridharzzusammensetzung und einer EPDM-Harzzusammensetzung.

6. Thermisch expandierbare Mehrschichtverpackung für ein Baumaterial nach Anspruch 4, wobei die thermoplastische Harzzusammensetzungsschicht mindestens eines umfasst, gewählt aus der Gruppe, bestehend aus einer Polyvinylchloridharzzusammensetzung, einer chlorierten Polyvinylchloridharzzusammensetzung und einer EPDM-Harzzusammensetzung.

7. Thermisch expandierbare Mehrschichtverpackung für ein Baumaterial nach Anspruch 5, wobei die thermisch expandierbare Harzzusammensetzung mindestens eines umfasst, gewählt aus der Gruppe, bestehend aus einem Wärmestabilisator, einem Gleitmittel, einem Verarbeitungshilfsstoff, einem pyrolytischen Schäumungsmittel, einem Antioxidans, einem antistatischen Mittel, einem Pigment, einem Vernetzungsmittel und einem Vernetzungsförderer.

8. Thermisch expandierbare Mehrschichtverpackung für ein Baumaterial nach Anspruch 6, wobei die thermisch expandierbare Harzzusammensetzung mindestens eines umfasst, gewählt aus der Gruppe, bestehend aus einem Wärmestabilisator, einem Gleitmittel, einem Verarbeitungshilfsstoff, einem pyrolytischen Schäumungsmittel, einem Antioxidans, einem antistatischen Mittel, einem Pigment, einem Vernetzungsmittel und einem Vernetzungsförderer.

9. Thermisch expandierbare Mehrschichtverpackung für ein Baumaterial nach Anspruch 7, wobei die thermisch expandierbare Mehrschichtverpackung für ein Baumaterial irgendeines aus einem Verglasungsschacht, einem Dichtelement, einer Dichtung oder einer Glasleiste ist.

10. Thermisch expandierbare Mehrschichtverpackung für ein Baumaterial nach Anspruch 8, wobei die thermisch expandierbare Mehrschichtverpackung für ein Baumaterial irgendeines aus einem Verglasungsschacht, einem Dichtelement, einer Dichtung oder einer Glasleiste ist.

## Revendications

1. Un emballage multicouche thermiquement expansible pour un matériau de construction se compose d'une partie saillante et d'une partie corps en forme de section transversale basée sur un plan perpendiculaire à la direction longitudinale, dans lequel
ledit emballage multicouche thermiquement expansible pour un matériau de construction est constitué de deux ou plusieurs couches de compositions de résine comprenant au moins une couche de composition de résine thermiquement expansible et une couche de composition de résine thermoplastique,
une composition de résine thermiquement expansible formant ladite couche de composition de résine thermiquement expansible est constituée de 100 parties en poids d'un composant de résine, 3 à 300 parties en poids de graphite thermiquement expansible, 3 à 200 parties en poids d'une charge inorganique et 20 à 200 parties en poids d'un plastifiant,
un composant de résine contenu dans ladite composition de résine thermiquement expansible comprend une résine de chlorure de polyvinyle chlorée dont la teneur en chlore est de 60 à 72% en poids et / ou un EPDM,
la composition de résine ne contient pas de composé du phosphore à part éventuellement un plastifiant à ester phosphorique tel que le phosphate de trimethyle et le phosphate de triéthyle, et
la couche de composition de résine thermiquement expansible et la couche de composition de résine thermoplastique sont formées de ladite composition de résine thermiquement expansible et de ladite composition de résine thermoplastique par co-extrusion simultanée, respectivement.

2. L'emballage multicouche thermiquement expansible pour un matériau de construction selon la revendication 1 ci-dessus, dans lequel la limite entre une couche de composition de résine thermiquement expansible et une couche de composition de résine thermoplastique dans une section transversale dudit emballage multicouche thermiquement expansible pour un matériau de construction à base d'un plan perpendiculaire à une direction de la co-extrusion simultanée comprend une courbe et / ou une ligne brisée.

3. L'emballage multicouche thermiquement expansible pour un matériau de construction selon la revendication 1 ci-dessus, dans lequel une partie ou la totalité d'une partie de corps contenue dans ledit emballage multicouche thermiquement expansible pour un matériau de construction comprend une couche de composition de résine thermiquement expansible.

4. L'emballage multicouche thermiquement expansible pour un matériau de construction selon la revendication 2 ci-dessus, dans lequel une partie ou la totalité d'une partie de corps contenue dans ledit emballage multicouche thermiquement expansible pour un matériau de construction comprend une couche de composition de résine thermiquement expansible.

5. L'emballage multicouche thermiquement expansible pour un matériau de construction selon la revendication 3 ci-dessus, dans lequel ladite couche de composition de résine thermoplastique comprend au moins un élément choisi parmi le groupe constitué par une composition de résine de chlorure de polyvinyle, une composition de résine de chlorure de polychlorure de vinyle chloré et une composition de résine EPDM.

6. L'emballage multicouche thermiquement expansible pour un matériau de construction selon la revendication 4 ci-dessus, dans lequel ladite couche de composition de résine thermoplastique est constituée d'au moins un élément choisi parmi le groupe constitué par une composition de résine de chlorure de polyvinyle, une composition de résine de chlorure de polyvinyle chlorée et une composition de résine EPDM.

7. L'emballage multicouche thermiquement expansible pour un matériau de construction selon la revendication 5 ci-dessus, dans lequel ladite composition de résine thermiquement expansible comprend au moins une substance choisie parmi le groupe constitué par un stabilisant thermique, un lubrifiant, un auxiliaire de traitement, un agent moussant pyrolytique, un antioxydant, un agent antistatique, un pigment, un agent de réticulation et un promoteur de réticulation.

8. L'emballage multicouche thermiquement expansible pour un matériau de construction selon la revendication 6 ci-dessus, dans lequel ladite composition de résine thermiquement expansible comprend au moins une substance choisie parmi le groupe constitué par un stabilisant thermique, un lubrifiant, un auxiliaire de traitement, un agent moussant pyrolytique, un antioxydant , un agent antistatique, un pigment, un agent de réticulation et un promoteur de réticulation.

9. L'emballage multicouche thermiquement expansible pour un matériau de construction selon la revendication 7 ci-dessus, dans lequel l'emballage multicouche thermiquement expansible pour un matériau de construction est l'un quelconque parmi un canal de vitrage, un élément étanche, un joint d'étanchéité ou un cordon pour vitrage.

10. L'emballage multicouche thermiquement expansible pour un matériau de construction selon la revendication 8 ci-dessus, dans laquelle l'emballage multicouche thermiquement expansible pour un matériau de construction est l'un quelconque parmi un canal de vitrage, un élément étanche, un joint d'étanchéité ou un cordon pour vitrage.
